(19) Europäisches Patentamt
European Patent Office
Office européen des brevets

(11) **EP 4 648 331 A1**

(12) **EUROPEAN PATENT APPLICATION**
published in accordance with Art. 153(4) EPC

(43) Date of publication:
**12.11.2025 Bulletin 2025/46**

(21) Application number: **23917257.0**

(22) Date of filing: **08.12.2023**

(51) International Patent Classification (IPC):
***H04L 5/00*** (2006.01)   ***H04W 72/40*** (2023.01)
***H04W 52/00*** (2009.01)

(52) Cooperative Patent Classification (CPC):
**H04L 5/00; H04W 52/00; H04W 64/00;
H04W 72/0446; H04W 72/25; H04W 72/40**

(86) International application number:
**PCT/CN2023/137446**

(87) International publication number:
**WO 2024/152789 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.01.2023   CN 202310202894
17.02.2023   CN 202310172248
07.04.2023   CN 202310405637**

(71) Applicant: **Huawei Technologies Co., Ltd.
Shenzhen, Guangdong 518129 (CN)**

(72) Inventors:
• **LI, Chao
Shenzhen, Guangdong 518129 (CN)**
• **LIU, Ye
Shenzhen, Guangdong 518129 (CN)**
• **XUE, Lixia
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **COMMUNICATION METHOD AND APPARATUS**

(57)   This application provides a communication method and apparatus, which can be used in a side link communication scenario. The method includes: A first terminal device determines a first transmit power, where the first transmit power is related to a first bandwidth and/or a second bandwidth, the first bandwidth is a bandwidth for sending a first message, the second bandwidth is a bandwidth for sending a second message, and a time domain resource for the first message and a time domain resource for the second message are consecutive. The first terminal device sends the first message and the second message to a second terminal device by using the first transmit power. According to the method, the first terminal device may send two messages by using a same power, so that a TP is not needed for power switching between the two messages, thereby improving time domain resource utilization.

200

First terminal device

Second terminal device

S210: Determine a first transmit power, where the first transmit power is related to a first bandwidth and/or a second bandwidth, the first bandwidth is a bandwidth for sending a first message, and the second bandwidth is a bandwidth for sending a second message

S220: Send the first message and the second message by using the first transmit power

FIG. 3

**Description**

This application claims priority to Chinese Patent Application No. 202310202894.1, filed on January 20, 2023 and entitled "POWER CONTROL METHOD", which is incorporated herein by reference in its entirety.

This application claims priority to Chinese Patent Application No. 202310172248.5, filed on February 17, 2023 and entitled "COMMUNICATION METHOD AND APPARATUS", which is incorporated herein by reference in its entirety.

This application claims priority to Chinese Patent Application No. 202310405637.8, filed on April 7, 2023 and entitled "COMMUNICATION METHOD AND APPARATUS", which is incorporated herein by reference in its entirety.

**TECHNICAL FIELD**

This application relates to the communication field, and more specifically, to a communication method and apparatus for a terminal device.

**BACKGROUND**

Standardization work is being carried out on sidelink (sidelink, SL) positioning by using a 5th generation (5th generation, 5G) mobile communication technology, to improve positioning accuracy between devices through SL positioning.

In the SL positioning technology, a terminal device may continuously send a plurality of messages in time domain. In some cases, the terminal device may need a transient period (transient period, TP) to switch between transmit powers for the plurality of messages. Consequently, resource utilization is low.

**SUMMARY**

This application provides a communication method and apparatus. A plurality of messages are sent by using a same power, so that a TP is not needed for power switching, and therefore resource utilization can be improved.

According to a first aspect, a communication method is provided. The method may be performed by a first terminal device (for example, a UE 1), or may be performed by a chip or a circuit used for the first terminal device. This is not limited in this application. For ease of description, the following uses an example in which the first terminal device performs the method for description. The method includes: The first terminal device determines a first transmit power, where the first transmit power is related to a first bandwidth and/or a second bandwidth, the first bandwidth is a bandwidth for sending a first message, the second bandwidth is a bandwidth for sending a second message, and a time domain resource for the first message and a time domain resource for the second message are consecutive. The first terminal device sends the first message and the second message to a second terminal device by using the first transmit power.

According to the solution provided in this application, the first terminal device may send two messages by using a same power, so that a TP is not needed for power switching between the two messages, and therefore time domain resource utilization can be improved.

Optionally, that a time domain resource for the first message and a time domain resource for the second message are consecutive includes any one of the following: A time domain resource for another message does not exist between the time domain resource for the first message and the time domain resource for the second message; and in a time domain unit, there is no empty symbol between the time domain resource for the first message and the time domain resource for the second message.

Optionally, the first bandwidth is different from the second bandwidth.

Optionally, the time domain resource for the first message and the time domain resource for the second message are located in a same time domain unit, and the time domain resource for the first message is located before the time domain resource for the second message.

Optionally, the first message is carried on a physical sidelink control channel (physical sidelink control channel, PSCCH), and the second message is a sidelink positioning reference signal (sidelink positioning reference signal, SL-PRS).

With reference to the first aspect, in some implementations of the first aspect, that a first terminal device determines a first transmit power includes: The first terminal device determines a first parameter, where the first parameter is related to the first bandwidth and/or the second bandwidth; and the first terminal device determines the first transmit power based on the first parameter, where the first parameter is determined based on any one of the following: a larger value of the first bandwidth and the second bandwidth; a smaller value of the first bandwidth and the second bandwidth; the first bandwidth, the second bandwidth, and a frequency domain interval for sending the first message and/or a frequency domain interval for sending the second message; the first bandwidth, the second bandwidth, and a subcarrier spacing for sending the first message and/or a subcarrier spacing for sending the second message; the first bandwidth, the second bandwidth, a subcarrier spacing for sending the first message and/or a subcarrier spacing for sending the second message, and a frequency domain interval for sending the first message and/or a frequency domain interval for sending the second message; the first bandwidth; the second bandwidth; or a bandwidth for a message with a higher priority in the first message and the second message.

With reference to the first aspect, in some implementations of the first aspect, the first parameter is determined based on any one of the following:

$$max\left(M^{msg1}(i), M^{msg2}(i)\right);$$

$$max\left(M^{msg1}(i), M^{msg2}(i)/N\right);$$

$$min\left(M^{msg1}(i), M^{msg2}(i)\right);$$

$$min\left(M^{msg1}(i), M^{msg2}(i)/N\right);$$

$$max\left(2^{\mu} \cdot M^{msg1}(i), 2^{\mu} \cdot M^{msg2}(i)\right);$$

$$max\left(2^{\mu} \cdot M^{msg1}(i), 2^{\mu} \cdot M^{msg2}(i)/N\right);$$

$$min\left(2^{\mu} \cdot M^{msg1}(i), 2^{\mu} \cdot M^{msg2}(i)\right);$$

$$min\left(2^{\mu} \cdot M^{msg1}(i), 2^{\mu} \cdot M^{msg2}(i)/N\right);$$

$$M^{msg1}(i);$$

$$M^{msg2}(i);$$

$$M^{msgx}(i);$$

$$2^{\mu} \cdot M^{msg1}(i);$$

$$2^{\mu} \cdot M^{msg2}(i);$$

and

$$2^{\mu} \cdot M^{msgx}(i),$$

where

max() represents taking a maximum value from a plurality of numerals, *min*() represents taking a minimum value from a plurality of numerals, $M^{msg1}(i)$ represents the first bandwidth at a transmission moment *i*, $M^{msg2}(i)$ represents the second bandwidth at the transmission moment *i*, $M^{msgx}(i)$ represents the bandwidth for the message with the higher priority in the first message and the second message at the transmission moment *i*, $\mu$ is the subcarrier spacing for sending the first message and/or the subcarrier spacing for sending the second message by the first terminal device, and *N* is the frequency domain interval for sending the second message. For example, the first parameter may be any one of the foregoing.

With reference to the first aspect, in some implementations of the first aspect, the first message is carried on a PSCCH, the second message is an SL-PRS, and that a first terminal device determines a first transmit power includes: The first terminal device determines the first parameter, where the first transmit power is related to the first parameter, and the first parameter A satisfies any one of the following conditions:

$$A = max\left( M_{RB}^{PSCCH}(i), M_{RB}^{SL-PRS}(i) \right);$$

$$A = max\left( M_{RB}^{PSCCH}(i), M_{RB}^{SL-PRS}(i) / N_{comb} \right);$$

$$A = min\left( M_{RB}^{PSCCH}(i), M_{RB}^{SL-PRS}(i) \right);$$

$$A = min\left( M_{RB}^{PSCCH}(i), M_{RB}^{SL-PRS}(i) / N_{comb} \right);$$

$$A = max\left( 2^{\mu} \cdot M_{RB}^{PSCCH}(i), 2^{\mu} \cdot M_{RB}^{SL-PRS}(i) \right);$$

$$A = max\left( 2^{\mu} \cdot M_{RB}^{PSCCH}(i), 2^{\mu} \cdot M_{RB}^{SL-PRS}(i) / N_{comb} \right);$$

$$A = min\left( 2^{\mu} \cdot M_{RB}^{PSCCH}(i), 2^{\mu} \cdot M_{RB}^{SL-PRS}(i) \right);$$

$$A = min\left( 2^{\mu} \cdot M_{RB}^{PSCCH}(i), 2^{\mu} \cdot M_{RB}^{SL-PRS}(i) / N_{comb} \right);$$

$$A = M_{RB}^{PSCCH}(i);$$

$$A = 2^{\mu} \cdot M_{RB}^{PSCCH}(i);$$

$$A = M_{RB}^{SL-PRS}(i);$$

$$A = 2^{\mu} \cdot M_{RB}^{SL-PRS}(i);$$

$$A = M_{RB}^{x}(i);$$

and

$$A = 2^{\mu} \cdot M_{RB}^{x}(i),$$

where

$max()$ represents taking a maximum value from a plurality of numerals, $min()$ represents taking a minimum value from a plurality of numerals, $M_{RB}^{PSCCH}(i)$ represents the first bandwidth at the transmission moment $i$, $M_{RB}^{SL-PRS}(i)$ represents the second bandwidth at the transmission moment $i$, $M_{RB}^{x}(i)$ represents the bandwidth for the message with the higher priority in the message carried on the PSCCH and the SL-PRS at the transmission moment $i$, $\mu$ is the subcarrier spacing for sending the PSCCH and/or the subcarrier spacing for sending the SL-PRS by the first terminal device, and $N_{comb}$ is the frequency domain interval for sending the SL-PRS. With reference to the first aspect, in some implementations of the first aspect, that a first terminal device determines a first transmit power includes: The first terminal device determines a transmit power for the PSCCH, where the transmit power for the PSCCH is related to the first parameter, and the transmit power for the PSCCH is the first transmit power.

With reference to the first aspect, in some implementations of the first aspect, the transmit power for the PSCCH satisfies any one of the following conditions:

$$P_{PSCCH}(i) = min\left(\begin{array}{l} P_{CMAX}, \\ min\left(P_{PSCCH,D}(i), P_{PSCCH,SL}(i)\right) + 10log_{10}(A) - 10log_{10}\left(M_{RB}^{PSCCH}(i)\right) \end{array}\right);$$

or

$$P_{PSCCH}(i) = min\left(\begin{array}{l} P_{CMAX}, \\ min\left(P_{PSCCH,D}(i), P_{PSCCH,SL}(i)\right) + 10log_{10}(A) - 10log_{10}\left(2^\mu \cdot M_{RB}^{PSCCH}(i)\right) \end{array}\right);$$

or

$$P_{PSCCH}(i) = min\left(\begin{array}{l} P_{CMAX}, \\ min\left(P_{PSCCH,D}(i), P_{PSCCH,SL}(i) + 10log_{10}(A) - 10log_{10}\left(M_{RB}^{PSCCH}(i)\right)\right) \end{array}\right);$$

or

$$P_{PSCCH}(i) = min\left(\begin{array}{l} P_{CMAX}, \\ min\left(P_{PSCCH,D}(i), P_{PSCCH,SL}(i) + 10log_{10}(A) - 10log_{10}\left(2^\mu \cdot M_{RB}^{PSCCH}(i)\right)\right) \end{array}\right);$$

or

$$P_{PSCCH}(i) = min\left(\begin{array}{l} P_{CMAX}, \\ P_{MAX,CBR}, \\ min\left(P_{PSCCH,D}(i), P_{PSCCH,SL}(i)\right) + 10log_{10}(A) - 10log_{10}\left(M_{RB}^{PSCCH}(i)\right) \end{array}\right);$$

or

$$P_{PSCCH}(i) = min\left(\begin{array}{l} P_{CMAX}, \\ P_{MAX,CBR}, \\ min\left(P_{PSCCH,D}(i), P_{PSCCH,SL}(i)\right) + 10log_{10}(A) - 10log_{10}\left(2^\mu \cdot M_{RB}^{PSCCH}(i)\right) \end{array}\right);$$

or

$$P_{PSCCH}(i) = min\left(\begin{array}{l} P_{CMAX}, \\ P_{MAX,CBR}, \\ min\left(P_{PSCCH,D}(i), P_{PSCCH,SL}(i) + 10log_{10}(A) - 10log_{10}\left(2^\mu \cdot M_{RB}^{PSCCH}(i)\right)\right) \end{array}\right);$$

or

$$P_{PSCCH}(i) = min \begin{pmatrix} P_{CMAX}, \\ P_{MAX,CBR}, \\ min\left(P_{PSCCH,D}(i), P_{PSCCH,SL}(i) + 10log_{10}(A) - 10log_{10}\left(M_{RB}^{PSCCH}(i)\right)\right) \end{pmatrix};$$

or

$$P_{PSCCH}(i) = min \begin{pmatrix} P_{MAX,CBR}, \\ min\left(P_{PSCCH,D}(i), P_{PSCCH,SL}(i)\right) + 10log_{10}(A) - 10log_{10}\left(M_{RB}^{PSCCH}(i)\right) \end{pmatrix};$$

or

$$P_{PSCCH}(i) = min \begin{pmatrix} P_{MAX,CBR}, \\ min\left(P_{PSCCH,D}(i), P_{PSCCH,SL}(i)\right) + 10log_{10}(A) - 10log_{10}\left(2^{\mu} \cdot M_{RB}^{PSCCH}(i)\right) \end{pmatrix};$$

or

$$P_{PSCCH}(i) = min \begin{pmatrix} P_{MAX,CBR}, \\ min\left(P_{PSCCH,D}(i), P_{PSCCH,SL}(i) + 10log_{10}(A) - 10log_{10}\left(M_{RB}^{PSCCH}(i)\right)\right) \end{pmatrix};$$

or

$$P_{PSCCH}(i) = min \begin{pmatrix} P_{MAX,CBR}, \\ min\left(P_{PSCCH,D}(i), P_{PSCCH,SL}(i) + 10log_{10}(A) - 10log_{10}\left(2^{\mu} \cdot M_{RB}^{PSCCH}(i)\right)\right) \end{pmatrix},$$

where

$P_{PSCCH,D}(i)$ satisfies:

$$P_{PSCCH,D}(i) = P_{O,D} + 10log_{10}\left(2^{\mu} \cdot M_{RB}^{PSCCH}(i)\right) + \alpha_D \cdot PL_D;$$

or

$$P_{PSCCH,D}(i) = min\left(P_{CMAX}, P_{MAX,CBR}\right);$$

and
$P_{PSCCH,SL}(i)$ satisfies:

$$P_{PSCCH,SL}(i) = P_{O,SL} + 10log_{10}\left(2^{\mu} \cdot M_{RB}^{PSCCH}(i)\right) + \alpha_{SL} \cdot PL_{SL};$$

or

$$P_{PSCCH,SL}(i) = min\left(P_{CMAX}, P_{PSSCH,D}(i)\right);$$

or

$$P_{PSCCH,SL}(i) = min\left(P_{MAX,CBR}, P_{PSSCH,D}(i)\right).$$

With reference to the first aspect, in some implementations of the first aspect, the transmit power for the PSCCH satisfies any one of the following conditions:

$$P_{PSCCH}(i) = min\left(P_{CMAX}, P_{MAX,CBR}, min\left(P_{PSCCH,D}(i), P_{PSCCH,SL}(i)\right)\right);$$

or

$$P_{PSCCH}(i) = min\left(P_{CMAX}, min\left(P_{PSCCH,D}(i), P_{PSCCH,SL}(i)\right)\right);$$

or

$$P_{PSCCH}(i) = min\left(P_{MAX,CBR}, min\left(P_{PSCCH,D}(i), P_{PSCCH,SL}(i)\right)\right),$$

where

$P_{PSCCH,D}(i)$ satisfies:

$$P_{PSCCH,D}(i) = P_{O,D} + 10log_{10}(A) + \alpha_D \cdot PL_D;$$

or

$$P_{PSCCH,D}(i) = P_{O,D} + 10log_{10}\left(2^{\mu} \cdot M_{RB}^{PSCCH}(i)\right) + \alpha_D \cdot PL_D;$$

or

$$P_{PSCCH,D}(i) = P_{O,D} + 10log_{10}\left(M_{RB}^{PSCCH}(i)\right) + \alpha_D \cdot PL_D;$$

or

$$P_{PSCCH,D}(i) = min\left(P_{CMAX}, P_{MAX,CBR}\right);$$

and
$P_{PSCCH,SL}(i)$ satisfies:

$$P_{PSCCH,SL}(i) = P_{O,SL} + 10log_{10}(A) + \alpha_{SL} \cdot PL_{SL};$$

or

$$P_{PSCCH,SL}(i) = P_{O,SL} + 10log_{10}\left(2^{\mu} \cdot M_{RB}^{PSCCH}(i)\right) + \alpha_{SL} \cdot PL_{SL};$$

or

$$P_{PSCCH,SL}(i) = P_{O,SL} + 10log_{10}\left(M_{RB}^{PSCCH}(i)\right) + \alpha_{SL} \cdot PL_{SL};$$

or

$$P_{PSCCH,SL}(i) = min\left(P_{CMAX}, P_{PSSCH,D}\right).$$

In the foregoing two implementations, $P_{PSCCH}(i)$ represents the transmit power for the PSCCH at the transmission moment $i$, $P_{CMAX}$ represents a maximum transmit power of the first terminal device, $P_{MAX,CBR}$ is a power value associated with a CBR of a resource pool, $P_{PSCCH,D}(i)$ represents a first power parameter of the PSCCH at the transmission moment $i$, $P_{PSCCH,SL}(i)$ represents a second power parameter of the PSCCH at the transmission moment $i$, $P_{O,D}$ and $\alpha_D$ are power parameters of the PSCCH, $PL_D$ is a path loss between the first terminal device and a serving cell, $P_{O,SL}$ and $\alpha_{SL}$ are power parameters of the PSCCH, $PL_{SL}$ is a sidelink path loss between the first terminal device and the second terminal device, and $\mu$ is the subcarrier spacing for sending the PSCCH by the first terminal device.

With reference to the first aspect, in some implementations of the first aspect, the method further includes: The first terminal device obtains first configuration information, where the first configuration information indicates the first terminal device to determine the first transmit power based on the first message or to determine the first transmit power based on the message with the higher priority in the first message and the second message.

According to the foregoing solution, the first terminal device can determine the first transmit power based on the first message, and send the first message and the second message by using the same power, so that a TP is not needed for power switching between the two messages, and therefore time domain resource utilization can be improved.

With reference to the first aspect, in some implementations of the first aspect, that a first terminal device determines a first transmit power includes: The first terminal device determines a transmit power for the SL-PRS, where the transmit power for the SL-PRS is related to the first parameter, and the transmit power for the SL-PRS is the first transmit power.

With reference to the first aspect, in some implementations of the first aspect, the transmit power for the SL-PRS satisfies any one of the following conditions:

$$P_{SL-PRS}(i) = min \left( \begin{array}{l} P_{CMAX}, \\ P_{MAX,CBR}, \\ min\left(P_{SL-PRS,D}(i), P_{SL-PRS,SL}(i)\right) + 10log_{10}(A) - 10log_{10}\left(M_{RB}^{SL-PRS}(i)\right) \end{array} \right);$$

or

$$P_{SL-PRS}(i) = min \left( \begin{array}{l} P_{CMAX}, \\ P_{MAX,CBR}, \\ min\left(P_{SL-PRS,D}(i), P_{SL-PRS,SL}(i)\right) + 10log_{10}(A) - 10log_{10}\left(2^{\mu} \cdot M_{RB}^{SL-PRS}(i)\right) \end{array} \right);$$

or

$$P_{SL-PRS}(i) = min \left( \begin{array}{l} P_{CMAX}, \\ P_{MAX,CBR}, \\ min\left(P_{SL-PRS,D}(i), P_{SL-PRS,SL}(i) + 10log_{10}(A) - 10log_{10}\left(M_{RB}^{SL-PRS}(i)\right)\right) \end{array} \right);$$

or

$$P_{SL-PRS}(i) = min \left( \begin{array}{l} P_{CMAX}, \\ P_{MAX,CBR}, \\ min\left(P_{SL-PRS,D}(i), P_{SL-PRS,SL}(i) + 10log_{10}(A) - 10log_{10}\left(2^{\mu} \cdot M_{RB}^{SL-PRS}(i)\right)\right) \end{array} \right);$$

or

$$P_{SL-PRS}(i) = min \left( \begin{array}{l} P_{CMAX}, \\ min\left(P_{SL-PRS,D}(i), P_{SL-PRS,SL}(i)\right) + 10log_{10}(A) - 10log_{10}\left(M_{RB}^{SL-PRS}(i)\right) \end{array} \right);$$

or

$$P_{SL-PRS}(i) = min\left(\begin{array}{l} P_{CMAX}, \\ min\left(P_{SL-PRS,D}(i), P_{SL-PRS,SL}(i)\right) + 10log_{10}(A) - 10log_{10}\left(2^{\mu} \cdot M_{RB}^{SL-PRS}(i)\right) \end{array}\right);$$

or

$$P_{SL-PRS}(i) = min\left(\begin{array}{l} P_{CMAX}, \\ min\left(P_{SL-PRS,D}(i), P_{SL-PRS,SL}(i) + 10log_{10}(A) - 10log_{10}\left(2^{\mu} \cdot M_{RB}^{SL-PRS}(i)\right)\right) \end{array}\right);$$

or

$$P_{SL-PRS}(i) = min\left(\begin{array}{l} P_{CMAX}, \\ min\left(P_{SL-PRS,D}(i), P_{SL-PRS,SL}(i) + 10log_{10}(A) - 10log_{10}\left(M_{RB}^{SL-PRS}(i)\right)\right) \end{array}\right);$$

or

$$P_{SL-PRS}(i) = min\left(\begin{array}{l} P_{MAX,CBR}, \\ min\left(P_{SL-PRS,D}(i), P_{SL-PRS,SL}(i)\right) + 10log_{10}(A) - 10log_{10}\left(M_{RB}^{SL-PRS}(i)\right) \end{array}\right);$$

or

$$P_{SL-PRS}(i) = min\left(\begin{array}{l} P_{MAX,CBR}, \\ min\left(P_{SL-PRS,D}(i), P_{SL-PRS,SL}(i)\right) + 10log_{10}(A) - 10log_{10}\left(2^{\mu} \cdot M_{RB}^{SL-PRS}(i)\right) \end{array}\right);$$

or

$$P_{SL-PRS}(i) = min\left(\begin{array}{l} P_{MAX,CBR}, \\ min\left(P_{SL-PRS,D}(i), P_{SL-PRS,SL}(i) + 10log_{10}(A) - 10log_{10}\left(M_{RB}^{SL-PRS}(i)\right)\right) \end{array}\right);$$

or

$$P_{SL-PRS}(i) = min\left(\begin{array}{l} P_{MAX,CBR}, \\ min\left(P_{SL-PRS,D}(i), P_{SL-PRS,SL}(i) + 10log_{10}(A) - 10log_{10}\left(2^{\mu} \cdot M_{RB}^{SL-PRS}(i)\right)\right) \end{array}\right),$$

where

$P_{SL-PRS,D}(i)$ satisfies:

$$P_{SL-PRS,D}(i) = P_{O,D} + 10log_{10}\left(2^{\mu} \cdot M_{RB}^{SL-PRS}(i)\right) + \alpha_D \cdot PL_D;$$

or

$$P_{SL-PRS,D}(i) = min\left(P_{CMAX}, P_{MAX,CBR}\right);$$

and

$P_{SL-PRS,SL}(i)$ satisfies:

$$P_{SL-PRS,SL}(i) = P_{O,SL} + 10log_{10}\left(2^{\mu} \cdot M_{RB}^{SL-PRS}(i)\right) + \alpha_{SL} \cdot PL_{SL};$$

or

$$P_{SL-PRS,SL}(i) = \min\left(P_{CMAX}, P_{SL-PRS,D}(i)\right);$$

or

$$P_{SL-PRS,SL}(i) = \min\left(P_{MAX,CBR}, P_{SL-PRS,D}(i)\right).$$

With reference to the first aspect, in some implementations of the first aspect, the transmit power for the SL-PRS satisfies any one of the following conditions:

$$P_{SL-PRS}(i) = min\left(P_{CMAX}, P_{MAX,CBR}, min\left(P_{SL-PRS,D}(i), P_{SL-PRS,SL}(i)\right)\right);$$

or

$$P_{SL-PRS}(i) = min\left(P_{CMAX}, min\left(P_{SL-PRS,D}(i), P_{SL-PRS,SL}(i)\right)\right);$$

or

$$P_{SL-PRS}(i) = min\left(P_{MAX,CBR}, min\left(P_{SL-PRS,D}(i), P_{SL-PRS,SL}(i)\right)\right),$$

where

$P_{SL-PRS,D}(i)$ satisfies:

$$P_{SL-PRS,D}(i) = P_{O,D} + 10log_{10}(A) + \alpha_D \cdot PL_D;$$

or

$$P_{SL-PRS,D}(i) = P_{O,D} + 10log_{10}\left(2^{\mu} \cdot M_{RB}^{SL-PRS}(i)\right) + \alpha_D \cdot PL_D;$$

or

$$P_{SL-PRS,D}(i) = P_{O,D} + 10log_{10}\left(M_{RB}^{SL-PRS}(i)\right) + \alpha_D \cdot PL_D;$$

or

$$P_{SL-PRS,D}(i) = \min\left(P_{CMAX}, P_{MAX,CBR}\right);$$

and
$P_{SL-PRS,SL}(i)$ satisfies:

$$P_{SL-PRS,SL}(i) = P_{O,SL} + 10log_{10}(A) + \alpha_{SL} \cdot PL_{SL};$$

or

$$P_{SL-PRS,SL}(i) = P_{O,SL} + 10log_{10}\left(2^{\mu} \cdot M_{RB}^{SL-PRS}(i)\right) + \alpha_{SL} \cdot PL_{SL};$$

or

$$P_{SL-PRS,SL}(i) = P_{O,SL} + 10log_{10}\left(M_{RB}^{SL-PRS}(i)\right) + \alpha_{SL} \cdot PL_{SL};$$

or

$$P_{SL-PRS,SL}(i) = \min\left(P_{CMAX}, P_{SL\text{-}PRS,D}\right).$$

In the foregoing two implementations, $P_{SL\text{-}PRS}(i)$ represents the transmit power for the SL-PRS at the transmission moment $i$, $P_{CMAX}$ represents a maximum transmit power of the first terminal device, $P_{MAX,CBR}$ is a power value associated with a CBR of a resource pool, $P_{SL\text{-}PRS,D}(i)$ represents a first power parameter of the SL-PRS at the transmission moment $i$, $P_{SL\text{-}PRS,SL}(i)$ represents the first power parameter of the SL-PRS at the transmission moment $i$, $P_{O,D}$ and $\alpha_D$ are power parameters of the SL-PRS, $PL_D$ is a path loss between the first terminal device and a serving cell, $P_{O,SL}$ and $\alpha_{SL}$ are power parameters of the SL-PRS, $PL_{SL}$ is a sidelink path loss between the first terminal device and the second terminal device, and $\mu$ is the subcarrier spacing for sending the SL-PRS by the first terminal device.

With reference to the first aspect, in some implementations of the first aspect, the method further includes: The first terminal device obtains second configuration information, where the second configuration information indicates the first terminal device to determine the first transmit power based on the second message or to determine the first transmit power based on the message with the higher priority in the first message and the second message.

According to the foregoing solution, the first terminal device can determine the first transmit power based on the second message, and send the first message and the second message by using the same power, so that a TP is not needed for power switching between the two messages, and therefore time domain resource utilization can be improved.

With reference to the first aspect, in some implementations of the first aspect, the maximum transmit power $P_{CMAX}$ of the first terminal device is a smaller value of a first maximum transmit power and a second maximum transmit power, the first maximum transmit power is a maximum transmit power determined based on the first message, and the second maximum transmit power is a maximum transmit power determined based on the second message.

According to a second aspect, a communication method is provided. The method may be performed by a second terminal device (for example, a UE 2), or may be performed by a chip or a circuit used for the second terminal device. This is not limited in this application. For ease of description, the following uses an example in which the second terminal device performs the method for description.

The method includes: The second terminal device receives a first message and a second message, where the first message and the second message are sent by using a first transmit power, the first transmit power is related to a first bandwidth and/or a second bandwidth, the first bandwidth is a bandwidth for sending the first message, the second bandwidth is a bandwidth for sending the second message, and a time domain resource for the first message and a time domain resource for the second message are consecutive. The second terminal device determines a receive power for the first message and/or a receive power for the second message.

Optionally, the first bandwidth is different from the second bandwidth.

Optionally, the time domain resource for the first message and the time domain resource for the second message are located in a same time domain unit, and the time domain resource for the first message is located before the time domain resource for the second message.

Optionally, the first message is carried on a physical sidelink control channel (physical sidelink control channel, PSCCH), and the second message is a sidelink positioning reference signal (sidelink positioning reference signal, SL-PRS).

With reference to the second aspect, in some implementations of the second aspect, the receive power is determined based on at least one of the following parameters: a reference signal received power (reference signal received power, RSRP), a received signal strength indicator (received signal strength indicator, RSSI), and a reference signal received quality (reference signal received quality, RSRQ).

With reference to the second aspect, in some implementations of the second aspect, the method further includes: The second terminal device receives third configuration information, where the third configuration information indicates the second terminal device to determine the receive power for the second message based on the first message.

With reference to the second aspect, in some implementations of the second aspect, the receive power $PR_2$ for the second message satisfies the following condition:

$$PR_2 = PR_1 \cdot \left( M^{msg1}(i) \middle/ M^{msg2}(i) \right);$$

or

$$PR_2 = PR_1 + 10log_{10} \left( M^{msg1}(i) \middle/ M^{msg2}(i) \right),$$

where

$PR_1$ represents the receive power for the first message, $PR_2$ represents the receive power for the second message, $M^{msg1}$(i) represents the first bandwidth at a transmission moment *i,* and $M^{msg2}$(i) represents the second bandwidth at the transmission moment *i.*

With reference to the second aspect, in some implementations of the second aspect, the method further includes: The second terminal device receives fourth configuration information, where the fourth configuration information indicates the second terminal device to determine the receive power for the first message based on the second message.

With reference to the second aspect, in some implementations of the second aspect, the receive power $PR_1$ for the first message satisfies the following condition:

$$PR_1 = PR_2 \cdot \left( M^{msg2}(i) \middle/ M^{msg1}(i) \right);$$

or

$$PR_1 = PR_2 + 10log_{10} \left( M^{msg2}(i) \middle/ M^{msg1}(i) \right),$$

where

$PR_1$ represents the receive power for the first message, $PR_2$ represents the receive power for the second message, $M^{msg1}$(i) represents the first bandwidth at a transmission moment *i,* and $M^{msg2}$(i) represents the second bandwidth at the transmission moment *i.*

With reference to the second aspect, in some implementations of the second aspect, the method further includes: The second terminal device determines, based on the receive power for the first message and/or the receive power for the second message, a transmission resource for sending a third message.

According to a third aspect, a communication method is provided. The method may be performed by a first terminal device (for example, a UE 1), or may be performed by a chip or a circuit used for the first terminal device. This is not limited in this application. For ease of description, the following uses an example in which the first terminal device performs the method for description. The method includes: The first terminal device determines a first transmit power and a second transmit power, where the first transmit power is a power for sending a first message by the first terminal device, and the second transmit power is a power for sending a second message by the first terminal device. The first terminal device sends first information when the first transmit power is different from the second transmit power, where the first information indicates a transient period, the transient period is a time interval between a time domain resource for sending the first message and a time domain resource for sending the second message, and the time domain resource for sending the first message is located before the time domain resource for sending the second message.

In an SL positioning technology, when a transmit end sends a plurality of messages by using different powers, a receive end may not be able to accurately determine a time domain start location for receiving a message. According to the foregoing method provided in this application, when the terminal device sends a plurality of messages by using different powers, the transmit end device may indicate a transient period of the transmit end device, so that the receiving device can accurately determine a time domain start location for receiving a message. This improves communication efficiency.

With reference to the third aspect, in some implementations of the third aspect, the method further includes: The first terminal device sends the first message by using the first transmit power, and the first terminal device sends the second message by using the second transmit power.

Optionally, the time domain resource for the first message and the time domain resource for the second message are located in a same time domain unit, and the time domain resource for the first message is located before the time domain resource for the second message.

Optionally, the first message is carried on a PSCCH, and the second message is an SL-PRS.

With reference to the third aspect, in some implementations of the third aspect, the first information indicates at least one of the following: duration of the transient period; or whether duration of the transient period occupies one symbol.

With reference to the third aspect, in some implementations of the third aspect, the method further includes: The first terminal device sends second information, where the second information indicates a power difference between the first transmit power and the second transmit power.

For example, the second information is carried in sidelink control information (sidelink control information, SCI) or uplink control information (uplink control information, UCI).

For example, the first information is carried in SCI or UCI.

According to a fourth aspect, a communication method is provided. The method may be performed by a second terminal device (for example, a UE 2), or may be performed by a chip or a circuit used for the second terminal device. This is not limited in this application. For ease of description, the following uses an example in which the second terminal device performs the method for description.

The method includes: The second terminal device receives first information from a first terminal device, where the first information indicates a transient period, the transient period is a time interval between a time domain resource for sending a first message by the first terminal device and a time domain resource for sending a second message by the first terminal device, the time domain resource for the first message is located before the time domain resource for the second message, the first terminal device sends the first message to the second terminal device by using a first transmit power, the first terminal device sends the second message to the second terminal device by using a second transmit power, and the first transmit power is different from the second transmit power. The second terminal device determines, based on the transient period, a time domain start location for receiving the second message.

In an SL positioning technology, when a transmit end sends a plurality of messages by using different powers, a receive end may not be able to accurately determine a time domain start location for receiving a message. According to the foregoing method provided in this application, when the terminal device sends a plurality of messages by using different powers, the receiving device can accurately determine, based on a transient period of the transmit end, a time domain start location for receiving a message. This improves communication efficiency.

Optionally, the time domain resource for the first message and the time domain resource for the second message are located in a same time domain unit, and the time domain resource for the first message is located before the time domain resource for the second message.

Optionally, the first message is carried on a PSCCH, and the second message is an SL-PRS.

With reference to the fourth aspect, in some implementations of the fourth aspect, that the second terminal device determines, based on the transient period, a time domain start location for receiving the second message includes: The second device determines the time domain start location based on the transient period and duration that is for performing automatic gain control (automatic gain control, AGC) processing by the second device.

According to a fifth aspect, a communication method is provided. The method may be performed by a second terminal device (for example, a UE 2), or may be performed by a chip or a circuit used for the second terminal device. This is not limited in this application. For ease of description, the following uses an example in which the second terminal device performs the method for description.

The method includes: The second terminal device (a UE-2) determines third information, where the third information indicates duration for performing automatic gain control AGC processing by the second terminal device; and the second terminal device sends the third information.

In an SL positioning technology, when a transmit end sends a plurality of messages by using different powers, the transmit end may not be able to accurately determine a transmission resource for sending a message. According to the foregoing method provided in this application, the receive end device may send, to the transmit end device, duration needed to perform AGC processing by the receive end device, so that when the transmit end sends a plurality of messages by using different powers, the transmit end can accurately determine, based on the duration for performing the AGC processing by the receive end, a transmission resource for sending a message. This improves communication efficiency.

For example, the third information is carried in SCI or UCI.

According to a sixth aspect, a communication method is provided. The method may be performed by a first device, or may be performed by a chip or a circuit used for the first device. This is not limited in this application. For ease of description, the following uses an example in which the first device performs the method for description.

For example, the first device may be a first terminal device, or may be a network side device. The network side device may be an access side network device, for example, a base station, or may be a core network element, for example, a location management function (location management function, LMF) or a positioning server.

The method includes: The first device obtains first information, where the first information indicates a transient period of a first terminal device, the transient period is a time interval between a time domain resource for sending a first message by the first terminal device and a time domain resource for sending a second message by the first terminal device, the time domain resource for the first message is located before the time domain resource for the second message, the first terminal device sends the first message to a second terminal device by using a first transmit power, the first terminal device sends the second message to the second terminal device by using a second transmit power, and the first transmit power is different from the second transmit power. The first device determines, based on the first information, a transmission resource used by the first terminal device to send the second message to the second terminal device.

In an SL positioning technology, when a transmit end sends a plurality of messages by using different powers, the transmit end may not be able to accurately determine a transmission resource for sending a message. According to the foregoing method provided in this application, when the terminal device sends a plurality of messages by using different powers, the terminal device can accurately determine, based on a transient period of the transmit end device, a transmission resource for sending a message. This improves communication efficiency.

Optionally, the time domain resource for the first message and the time domain resource for the second message are located in a same time domain unit, and the time domain resource for the first message is located before the time domain resource for the second message.

Optionally, the first message is carried on a PSCCH, and the second message is an SL-PRS.

With reference to the sixth aspect, in some implementations of the sixth aspect, that the first device determines, based on the first information, a transmission resource used by the first terminal device to send the second message to the second terminal device includes: The first device determines, based on the transient period, whether the transmission resource includes one adjacent symbol after the time domain resource for the first message.

In an example, the transient period is less than or equal to a first threshold, and the transmission resource includes one adjacent symbol after the time domain resource for the first message.

In another example, the transient period is greater than a first threshold, and the transmission resource does not include one adjacent symbol after the time domain resource for the first message. With reference to the sixth aspect, in some implementations of the sixth aspect, the method further includes: The first device receives third information from the second device, where the third information indicates duration for performing AGC processing by the second device. That the first device determines, based on the first information, a transmission resource used by the first terminal device to send the second message to the second terminal device includes: The first device determines the transmission resource based on the first information and/or the third information.

With reference to the sixth aspect, in some implementations of the sixth aspect, that the first device determines the transmission resource based on the first information and/or the third information includes: The first device determines, based on the transient period and/or the duration that is for performing the AGC processing, a quantity of symbols occupied by the transmission resource; and/or the first device determines a frequency domain interval of the transmission resource based on the transient period and/or the duration that is for performing the AGC processing.

For example, the third information is carried in SCI or UCI.

For example, the first information is carried in SCI or UCI.

According to a seventh aspect, a communication method is provided. The method may be performed by a first terminal device (for example, a UE 1), or may be performed by a chip or a circuit used for the first terminal device. This is not limited in this application. For ease of description, the following uses an example in which the first terminal device performs the method for description.

The method includes: The first terminal device determines second information, where the second information indicates a power difference between a first transmit power and a second transmit power, the first transmit power is a power for sending a first message by the first terminal device, and the second transmit power is a power for sending a second message by the first terminal device. The first terminal device sends the second information.

In an SL positioning technology, when the transmit power for the first message is different from the transmit power for the second message, the first terminal device may indicate the power difference between the transmit power for the first message and the transmit power for the second message to a second terminal device, so that the second terminal device can determine a receive power for the second message based on a receive power for the first message, and the second terminal device can further perform effective selection and exclusion on a resource for a third message. In this way, resource selection accuracy can be improved, and transmission performance can be improved.

Optionally, a time domain resource for the first message and a time domain resource for the second message are located in a same time domain unit, and the time domain resource for the first message is located before the time domain resource for the second message.

Optionally, a bandwidth for sending the first message is different from a bandwidth for sending the second message.

Optionally, the transmit power for the first message is different from the transmit power for the second message.

Optionally, the first message is carried on a PSCCH, and the second message is an SL-PRS.

For example, the second information is carried in sidelink control information (sidelink control information, SCI) or uplink control information (uplink control information, UCI).

With reference to the seventh aspect, in some implementations of the seventh aspect, the power difference between the first transmit power and the second transmit power is a difference between a transmit power for a symbol occupied by the first message and a transmit power for a symbol occupied by the second message; or the power difference between the first transmit power and the second transmit power is a difference between an RSRP for the first message on each subcarrier and an RSRP for the second message on each subcarrier.

According to an eighth aspect, a communication method is provided. The method may be performed by a second terminal device (for example, a UE 2), or may be performed by a chip or a circuit used for the second terminal device. This is not limited in this application. For ease of description, the following uses an example in which the second terminal device performs the method for description.

The method includes: The second terminal device receives second information, where the second information indicates a power difference between a first transmit power and a second transmit power, the first transmit power is a power for sending a first message by a first terminal device, and the second transmit power is a power for sending a second message by the first terminal device. The second terminal device determines a receive power for the second message based on the second information. The second terminal device determines a candidate resource for a third message based on the receive power for the second message, where the third message is a message to be sent by the second terminal device.

In an SL positioning technology, when the transmit power for the first message is different from the transmit power for the second message, the first terminal device may indicate the power difference between the transmit power for the first message and the transmit power for the second message to the second terminal device, so that the second terminal device can determine the receive power for the second message based on a receive power for the first message, and the second device can further perform effective selection and exclusion on the resource for the third message. In this way, resource selection accuracy can be improved, and transmission performance can be improved.

Optionally, a time domain resource for the first message and a time domain resource for the second message are located in a same time domain unit, and the time domain resource for the first message is located before the time domain resource for the second message.

Optionally, a bandwidth for sending the first message is different from a bandwidth for sending the second message.

Optionally, the transmit power for the first message is different from the transmit power for the second message.

Optionally, the first message is carried on a PSCCH, and the second message is an SL-PRS.

For example, the second information is carried in sidelink control information (sidelink control information, SCI) or uplink control information (uplink control information, UCI).

With reference to the eighth aspect, in some implementations of the eighth aspect, that the second terminal device determines a receive power for the second message based on the second information includes: The second device determines a receive power for the first message. The second terminal device determines the receive power for the second message based on the receive power for the first message and the power difference between the first transmit power and the second transmit power.

With reference to the eighth aspect, in some implementations of the eighth aspect, the power difference between the first transmit power and the second transmit power is a difference between a transmit power for a symbol occupied by the first message and a transmit power for a symbol occupied by the second message; or the power difference between the first transmit power and the second transmit power is a difference between an RSRP for the first message on each subcarrier and an RSRP for the second message on each subcarrier.

With reference to the eighth aspect, in some implementations of the eighth aspect, that the second terminal device determines a candidate resource for a third message based on the receive power for the second message includes: If the receive power for the second message is greater than a configured threshold, the second terminal device excludes, from a candidate resource set, the time domain resource occupied by the second message, to obtain the candidate resource for the third message.

According to the foregoing solution, if the receive power for the second message is greater than the configured threshold, it indicates that interference by the time domain resource occupied by the second message is excessively high. In this case, the second terminal device may exclude, from the candidate resource set, the time domain resource occupied by the second message, to avoid impact of a selected transmission resource with excessively high interference on transmission of the third message.

According to a ninth aspect, a communication method is provided. The method may be performed by a first terminal device (for example, a UE 1), or may be performed by a chip or a circuit used for the first terminal device. This is not limited in this application. For ease of description, the following uses an example in which the first terminal device performs the method for description. The method includes: The first terminal device determines a first transmit power, where the first transmit power is related to a first path loss and/or a second path loss, the first path loss is a path loss of a first sidelink between the first terminal device and a second terminal device, and the second path loss is a path loss of a second sidelink between the first terminal device and a third terminal device. The first terminal device sends a first message to the second terminal device by using the first transmit power, and sends a second message to the third terminal device by using the first transmit power.

According to the foregoing solution, the first terminal device may determine a same transmit power based on the first path loss and/or the second path loss, and send the first message and the second message on different links by using the same transmit power. In this way, power switching during transmission of different messages is avoided, and transmission efficiency and performance are improved.

Optionally, a time domain resource for the first message and a time domain resource for the second message are located in a same time domain unit.

In this way, the first terminal device can send the first message and the second message in the same time domain unit, to avoid a problem that an additional AGC symbol and an additional TP symbol are needed because of using different transmit powers, and reduce a waste of resources in the time domain unit.

Optionally, a time domain resource for a fourth message is located before the time domain resources for the first message and the second message, and the fourth message carries scheduling information indicating the first message and/or the second message.

Optionally, the first message is carried on a physical sidelink shared channel PSSCH, the second message is a sidelink positioning reference signal SL-PRS, and the fourth message is carried on a physical sidelink control channel PSCCH.

With reference to the ninth aspect, in some implementations of the ninth aspect, that the first terminal device determines a first transmit power includes: The first terminal device determines a second parameter *B,* where the second parameter *B* is related to the first path loss and/or the second path loss; and the first terminal device determines the first transmit power based on the second parameter *B,* where the second parameter *B* is determined based on any one of the following:

a larger value of the first path loss and the second path loss;
a smaller value of the first path loss and the second path loss;
a path loss of a sidelink on which a message with a higher priority in the first message and the second message is located;
a larger value of a second power parameter of the first message and a second power parameter of the second message;
a smaller value of a second power parameter of the first message and a second power parameter of the second message;
a second power parameter of a message with a higher priority in the first message and the second message; or
at least three of a first power parameter of the first message, a second power parameter of the first message, a first power parameter of the second message, and a second power parameter of the second message, where
the second power parameter of the first message is determined based on the first path loss, and the second power parameter of the second message is determined based on the second path loss.

With reference to the ninth aspect, in some implementations of the ninth aspect, the second parameter *B* is determined based on any one of the following:

$$min\left(PL_{SL,1},PL_{SL,2}\right);$$

$$max\left(PL_{SL,1},PL_{SL,2}\right);$$

$$PL_{SL,x};$$

$$min\left(P_{1,SL}(i),P_{2,SL}(i)\right);$$

$$max\left(P_{1,SL}(i),P_{2,SL}(i)\right);$$

$$P_{x,SL}(i);$$

$$min\left(P_{1,D}(i),P_{1,SL}(i),P_{2,D}(i),P_{2,SL}(i)\right);$$

$$max\left(min\left(P_{1,D}(i),P_{1,SL}(i)\right),min\left(P_{2,D}(i),P_{2,SL}(i)\right)\right);$$

$$max\left(min\left(P_{1,D}(i),P_{2,D}(i)\right),min\left(P_{1,SL}(i),P_{2,SL}(i)\right)\right);$$

$$min\left(P_{1,D}(i),min\left(P_{1,SL}(i),P_{2,SL}(i)\right)\right);$$

$$min\left(P_{1,D}(i),max\left(P_{1,SL}(i),P_{2,SL}(i)\right)\right);$$

and

$$max\left(min\left(P_{1,D}(i),P_{2,D}(i)\right),P_{1,SL}(i)\right),$$

where

$max()$ represents taking a maximum value from a plurality of numerals, $min()$ represents taking a minimum value from a plurality of numerals, $PL_{SL,1}$ represents the first path loss, $PL_{SL,2}$ represents the second path loss, and $PL_{SL,x}$ represents the path loss of the sidelink on which the message with the higher priority in the first message and the second message is located, or $PL_{SL,x}$ represents a path loss, indicated by signaling, of a sidelink on which a message used to determine the second parameter in the first message and the second message is located; $P_{1,SL}(i)$ represents the second power parameter of the first message at a transmission moment $i$, $P_{2,SL}(i)$ represents the second power parameter of the second message at the transmission moment $i$, and $P_{x,SL}(i)$ represents the second power parameter of the message with the higher priority in the first message and the second message at the transmission moment $i$, or $P_{x,SL}(i)$ represents a second power parameter, indicated by signaling, of a message used to determine the second parameter at the transmission moment $i$ in the first message and the second message; and $P_{1,D}(i)$ represents the first power parameter of the first message at the transmission moment $i$, and $P_{2,D}(i)$ represents the first power parameter of the second message at the transmission moment $i$.

With reference to the ninth aspect, in some implementations of the ninth aspect, that a first terminal device determines a first transmit power includes: The first terminal device determines a transmit power for the first message, where the transmit power for the first message is related to the second parameter B, and the transmit power for the first message is the first transmit power.

According to the foregoing solution, the terminal device may use the transmit power for the first message as the power for sending the first message and the second message. In this way, a manner of determining the first transmit power is simple.

With reference to the ninth aspect, in some implementations of the ninth aspect, the first message is carried on a physical sidelink shared channel PSSCH, the second message is a sidelink positioning reference signal SL-PRS, and that the first terminal device determines a transmit power for the first message includes: The first terminal device determines the second parameter $B$. The first terminal device determines the transmit power for the first message based on the second parameter, where the second parameter $B$ satisfies any one of the following conditions:

$$B = min\left(PL_{SL,PSSCH},PL_{SL,SL-PRS}\right);$$

$$B = max\left(PL_{SL,PSSCH},PL_{SL,SL-PRS}\right);$$

and

$$B = PL_{SL,x},$$

where

$max()$ represents taking a maximum value from a plurality of numerals, $min()$ represents taking a minimum value from a plurality of numerals, $PL_{SL,PSSCH}$ represents the first path loss, $PL_{SL,SL-PRS}$ represents the second path loss, and $PL_{SL,x}$ represents the path loss of the sidelink on which the message with the higher priority in the first message and the second message is located, or $PL_{SL,x}$ represents the path loss, indicated by the signaling, of the sidelink on which the message used to determine the second parameter in the first message and the second message is located.

According to the foregoing solution, the first transmit power may be determined based on the smaller value or the larger value of the first path loss and the second path loss, or priorities of the first message and the second message. In other words, in this application, a proper path loss can be selected to determine the transmit power. This can avoid a case in which use of an excessively large path loss causes an excessively large transmit power, resulting in a waste of power and impact on transmission performance of another device. In addition, this can also avoid a case in which use of an excessively small path loss causes a failure to normally receive corresponding messages by some receive ends, resulting in deterioration in transmission performance.

With reference to the ninth aspect, in some implementations of the ninth aspect, a transmit power for the PSSCH satisfies:

$$P_{PSSCH}(i) = min \begin{pmatrix} P_{CMAX}, \\ P_{MAX,CBR}, \\ min\left(P_{PSSCH,D}(i), P_{PSSCH,SL}(i)\right) \end{pmatrix};$$

or

$$P_{PSSCH}(i) = min \begin{pmatrix} P_{CMAX}, \\ min\left(P_{PSSCH,D}(i), P_{PSSCH,SL}(i)\right) \end{pmatrix};$$

or

$$P_{PSSCH}(i) = min \begin{pmatrix} P_{MAX,CBR}, \\ min\left(P_{PSSCH,D}(i), P_{PSSCH,SL}(i)\right) \end{pmatrix};$$

or

$$P_{PSSCH}(i) = min\left(P_{PSSCH,D}(i), P_{PSSCH,SL}(i)\right),$$

where

$$P_{PSSCH,D}(i) \text{ satisfies: } P_{PSSCH,D}(i) = P_{O,D} + 10log_{10}\left(2^\mu \cdot M_{RB}^{PSSCH}(i)\right) + \alpha_D \cdot PL_D;$$

and

$$P_{PSCCH,SL}(i) \text{ satisfies: } P_{PSSCH,SL}(i) = P_{O,SL} + 10log_{10}\left(2^\mu \cdot M_{RB}^{PSSCH}(i)\right) + \alpha_{SL} \cdot B,$$

where

$P_{PSSCH}(i)$ represents the transmit power for the PSSCH at the transmission moment $i$, $P_{CMAX}$ represents a maximum transmit power of the first terminal device, $P_{MAX,CBR}$ is a power value associated with a channel busy ratio CBR of a resource pool, $P_{PSSCH,D}(i)$ represents the first power parameter of the PSSCH at the transmission moment $i$, $P_{PSSCH,SL}(i)$ represents the second power parameter of the PSSCH at the transmission moment $i$, $P_{O,D}$ is a power parameter of the first terminal device and a serving cell, $\alpha_D$ is a power parameter of the first terminal device and the serving cell, $PL_D$ is a downlink path loss between the first terminal device and the serving cell, $P_{O,SL}$ is a power parameter of the first terminal device on a sidelink, $\alpha_{SL}$ is a power parameter of the first terminal device on the sidelink, $\mu$ is a subcarrier spacing for sending the PSCCH by the first terminal device, and $M_{RB}^{PSSCH}(i)$ represents a bandwidth for the PSSCH at the transmission moment $i$.

With reference to the ninth aspect, in some implementations of the ninth aspect, the first message is carried on a physical sidelink shared channel PSSCH, the second message is a sidelink positioning reference signal SL-PRS, and that the first terminal device determines a transmit power for the first message includes:

the first terminal device determines the second parameter; and
the first terminal device determines the transmit power for the first message based on the second parameter, where the second parameter $B$ satisfies any one of the following conditions:

$$B = min\left(P_{PSSCH,D}(i), min\left(P_{PSSCH,SL}(i), P_{SL-PRS,SL}(i)\right)\right);$$

$$B = min\left(P_{PSSCH,D}(i), max\left(P_{PSSCH,SL}(i), P_{SL-PRS,SL}(i)\right)\right);$$

$$B = min\left(P_{PSSCH,D}(i), P_{x,SL}(i)\right);$$

$$B = min\left(P_{PSSCH,D}(i), P_{PSSCH,SL}(i), P_{SL-PRS,D}(i), P_{SL-PRS,SL}(i)\right);$$

$$B = max\left(min\left(P_{PSSCH,D}(i), P_{PSSCH,SL}(i)\right), min\left(P_{SL-PRS,D}(i), P_{SL-PRS,SL}(i)\right)\right);$$

$$B = max\left(min\left(P_{PSSCH,D}(i), P_{SL-PRS,D}(i)\right), min\left(P_{PSSCH,SL}(i), P_{SL-PRS,SL}(i)\right)\right);$$

and

$$B = max\left(min\left(P_{PSSCH,D}(i), P_{SL-PRS,D}(i)\right), P_{PSSCH,SL}(i)\right),$$

where

max() represents taking a maximum value from a plurality of numerals, $min()$ represents taking a minimum value from a plurality of numerals, $P_{PSSCH,D}(i)$ represents the first power parameter of the PSSCH at the transmission moment $i$, $P_{PSSCH,SL}(i)$ represents the second power parameter of the PSSCH at the transmission moment $i$, $P_{SL-PRS,D}(i)$ represents the first power parameter of the SL-PRS at the transmission moment $i$, $P_{SL-PRS,SL}(i)$ represents the second power parameter of the SL-PRS at the transmission moment $i$, and $P_{x,SL}(i)$ represents the second power parameter of the message with the higher priority in the first message and the second message at the transmission moment $i$, or $P_{x,SL}(i)$ represents the second power parameter, indicated by the signaling, of the message used to determine the second parameter at the transmission moment $i$ in the first message and the second message; and $P_{PSSCH,D}(i)$ is determined based on first downlink power parameters, $P_{PSSCH,SL}(i)$ is determined based on first sidelink power parameters, $P_{SL-PRS,D}(i)$ is determined based on second downlink power parameters, $P_{SL-PRS,SL}(i)$ is determined based on second sidelink power parameters, the first sidelink power parameters include the first path loss, and the second sidelink power parameters include the second path loss.

According to the foregoing solution, in this application, a proper transmit power can be determined based on the first path loss and the second path loss to send the first message and the second message. In this way, a waste of power and impact on transmission performance of another device resulting from an excessively large transmit power can be avoided, and deterioration in transmission performance resulting from a small transmit power can also be avoided.

Optionally, the first sidelink power parameters include a first sidelink power parameter $P_{O,SL,PSSCH}$, a first sidelink power parameter $\alpha_{SL,PSSCH}$, and the first path loss $PL_{SL,PSSCH}$.

Optionally, the second sidelink power parameters include a second sidelink power parameter $P_{O,SL,SL-PRS}$, a second sidelink power parameter $\alpha_{SL,SL-PRS}$, and the second path loss $PL_{SL,SL-PRS}$.

Optionally, the first downlink power parameters include a power parameter $P_{O,D,PSSCH}$ of the first terminal device and a serving cell, a power parameter $\alpha_{D,PSSCH}$ of the first terminal device and the serving cell, and a downlink path loss $PL_D$ between the first terminal device and the serving cell.

Optionally, the second downlink power parameters include a power parameter $P_{O,D,SL-PRS}$ of the first terminal device and the serving cell, a power parameter $\alpha_{D,SL-PRS}$ of the first terminal device and the serving cell, and a downlink path loss $PL_D$ between the first terminal device and the serving cell.

With reference to the ninth aspect, in some implementations of the ninth aspect, values of $P_{O,SL,PSSCH}$ and $P_{O,SL,SL-PRS}$ are the same, values of $\alpha_{SL,PSSCH}$ and $\alpha_{SL,SL-PRS}$ are the same, values of $P_{O,D,PSSCH}$ and $P_{O,D,SL-PRS}$ are the same, and values of $\alpha_{D,PSSCH}$ and $\alpha_{D,SL-PRS}$ are the same.

With reference to the ninth aspect, in some implementations of the ninth aspect, values of $P_{O,SL,PSSCH}$ and $P_{O,SL,SL-PRS}$ are different, values of $\alpha_{SL,PSSCH}$ and $\alpha_{SL,SL-PRS}$ are different, values of $P_{O,D,PSSCH}$ and $P_{O,D,SL-PRS}$ are different, and values of $\alpha_{D,\,PSSH}$ and $\alpha_{D,\,SL\text{-}PRS}$ are different.

With reference to the ninth aspect, in some implementations of the ninth aspect, values of $P_{O,\,SL,\,PSSCH}$ and $P_{O,\,SL,\,SL\text{-}PRS}$ are different, values of $\alpha_{SL,\,PSSCH}$ and $\alpha_{SL,\,SL\text{-}PRS}$ are different, values of $P_{O,\,D,\,PSSCH}$ and $P_{O,\,D,\,SL\text{-}PRS}$ are the same, and values of $\alpha_{D,\,PSSH}$ and $\alpha_{D,\,SL\text{-}PRS}$ are the same.

With reference to the ninth aspect, in some implementations of the ninth aspect, values of $P_{O,\,SL,\,PSSCH}$ and $P_{O,\,SL,\,SL\text{-}PRS}$ are the same, values of $\alpha_{SL,\,PSSH}$ and $\alpha_{SL,\,SL\text{-}PRS}$ are the same, values of $P_{O,\,D,\,PSSCH}$ and $P_{O,\,D,\,SL\text{-}PRS}$ are different, and values of $\alpha_{D,\,PSSH}$ and $\alpha_{D,\,SL\text{-}PRS}$ are different.

With reference to the ninth aspect, in some implementations of the ninth aspect, $P_{PSSCH,D}(i)$, $P_{PSSCH,SL}(i)$, $P_{SL\text{-}PRS,D}(i)$, and $P_{SL\text{-}PRS,SL}(i)$ satisfy the following conditions:

$$P_{PSSCH,D}(i) = P_{O,D,\,PSSCH} + 10log_{10}\left(2^{\mu} \cdot M_{RB}^{PSSCH}(i)\right) + \alpha_{D,\,PSSCH} \cdot PL_D \;;$$

$$P_{PSSCH,SL}(i) = P_{O,SL,\,PSSCH} + 10log_{10}\left(2^{\mu} \cdot M_{RB}^{PSSCH}(i)\right) + \alpha_{SL,\,PSSCH} \cdot PL_{SL,\,PSSCH} \;;$$

$$P_{SL\text{-}PRS,D}(i) = P_{O,D,\,SL\text{-}PRS} + 10log_{10}\left(2^{\mu} \cdot M_{RB}^{SL\text{-}PRS}(i)\right) + \alpha_{D,\,SL\text{-}PRS} \cdot PL_D \;;$$

and

$$P_{PSL\text{-}PRS,SL}(i) = P_{O,SL,\,SL\text{-}PRS} + 10log_{10}\left(2^{\mu} \cdot M_{RB}^{SL\text{-}PRS}(i)\right) + \alpha_{SL,\,SL\text{-}PRS} \cdot PL_{SL,\,SL\text{-}PRS} \;,$$

where

$\mu$ is the subcarrier spacing for sending the PSSCH by the first terminal device, $M_{RB}^{PSSCH}(i)$ represents the bandwidth for the PSSCH at the transmission moment $i$, and $M_{RB}^{SL\text{-}PRS}(i)$ represents a bandwidth for the SL-PRS at the transmission moment $i$.

With reference to the ninth aspect, in some implementations of the ninth aspect, a transmit power for the PSSCH satisfies:

$$P_{PSSCH}(i) = min\begin{pmatrix} P_{CMAX}, \\ P_{MAX,CBR}, \\ B \end{pmatrix};$$

or

$$P_{PSSCH}(i) = min\begin{pmatrix} P_{CMAX}, \\ B \end{pmatrix};$$

or

$$P_{PSSCH}(i) = min\begin{pmatrix} P_{MAX,CBR}, \\ B \end{pmatrix};$$

or

$$P_{PSSCH}(i) = min\begin{pmatrix} P_{CMAX}, \\ min\left(P_{MAX,CBR,\,PSSCH},\; P_{MAX,CBR,\,SL\text{-}PRS}\right) \\ B \end{pmatrix};$$

or

$$P_{PSSCH}(i) = min\left(\begin{array}{l} min\left(P_{MAX,CBR,PSSCH}, P_{MAX,CBR,SL-PRS}\right) \\ B \end{array}\right),$$

where

$P_{PSSCH}(i)$ represents the transmit power for the PSSCH at the transmission moment $i$, $P_{CMAX}$ represents a maximum transmit power of the first terminal device, $P_{MAX,CBR}$ is a power value associated with a channel busy ratio CBR of a resource pool, $P_{MAX,CBR,\ PSSCH}$ represents a power value that is associated with the channel busy ratio CBR of the resource pool and that is obtained based on the PSSCH, and $P_{MAX,CBR,SL-PRS}$ represents a power value that is associated with the channel busy ratio CBR of the resource pool and that is obtained based on the SL-PRS.

With reference to the ninth aspect, in some implementations of the ninth aspect, values of $PL_{SL,\ PSSCH}$ and $PL_{SL,\ SL-PRS}$ are different.

According to the foregoing solution, when the path loss of the first sidelink is different from the path loss of the second sidelink, the same transmit power for sending the first message and the second message on different links can be determined in this application. In this way, power switching during transmission of different messages is avoided, and transmission efficiency and performance are improved.

According to a tenth aspect, a communication apparatus is provided. The apparatus may be a first terminal device (for example, a UE 1), or may be a chip or a circuit used for the first terminal device. This is not limited in this application.

The apparatus includes: a processing unit, configured to determine a first transmit power, where the first transmit power is related to a first bandwidth and/or a second bandwidth, the first bandwidth is a bandwidth for sending a first message, the second bandwidth is a bandwidth for sending a second message, and a time domain resource for the first message and a time domain resource for the second message are consecutive; and a transceiver unit, configured to send the first message and the second message to a second terminal device by using the first transmit power. Optionally, the first bandwidth is different from the second bandwidth.

Optionally, the time domain resource for the first message and the time domain resource for the second message are located in a same time domain unit, and the time domain resource for the first message is located before the time domain resource for the second message.

Optionally, the first message is carried on a PSCCH, and the second message is an SL-PRS.

With reference to the tenth aspect, in some implementations of the tenth aspect, the processing unit is specifically configured to: determine a first parameter, where the first parameter is related to the first bandwidth and/or the second bandwidth; and determine the first transmit power based on the first parameter, where the first parameter is determined based on any one of the following: a larger value of the first bandwidth and the second bandwidth; a smaller value of the first bandwidth and the second bandwidth; the first bandwidth, the second bandwidth, and a frequency domain interval for sending the first message and/or a frequency domain interval for sending the second message; the first bandwidth, the second bandwidth, and a subcarrier spacing for sending the first message and/or a subcarrier spacing for sending the second message; the first bandwidth, the second bandwidth, a subcarrier spacing for sending the first message and/or a subcarrier spacing for sending the second message, and a frequency domain interval for sending the first message and/or a frequency domain interval for sending the second message; the first bandwidth; the second bandwidth; or a bandwidth for a message with a higher priority in the first message and the second message.

With reference to the tenth aspect, in some implementations of the tenth aspect, the first parameter is determined based on any one of the following:

$$max\left(M^{msg1}(i), M^{msg2}(i)\right);$$

$$max\left(M^{msg1}(i), M^{msg2}(i)/N\right);$$

$$min\left(M^{msg1}(i), M^{msg2}(i)\right);$$

$$min\left(M^{msg1}(i), M^{msg2}(i)/N\right);$$

$$max\left(2^{\mu} \cdot M^{msg1}(i), 2^{\mu} \cdot M^{msg2}(i)\right);$$

$$max\left(2^{\mu} \cdot M^{msg1}(i), 2^{\mu} \cdot M^{msg2}(i) / N\right);$$

$$min\left(2^{\mu} \cdot M^{msg1}(i), 2^{\mu} \cdot M^{msg2}(i)\right);$$

$$min\left(2^{\mu} \cdot M^{msg1}(i), 2^{\mu} \cdot M^{msg2}(i) / N\right);$$

$$M^{msg1}(i);$$

$$M^{msg2}(i);$$

$$M^{msgx}(i);$$

$$2^{\mu} \cdot M^{msg1}(i);$$

$$2^{\mu} \cdot M^{msg2}(i);$$

and

$$2^{\mu} \cdot M^{msgx}(i),$$

where
max() represents taking a maximum value from a plurality of numerals, $min()$ represents taking a minimum value from a plurality of numerals, $M^{msg1}(i)$ represents the first bandwidth at a transmission moment $i$, $M^{msg2}(i)$ represents the second bandwidth at the transmission moment $i$, $M^{msgx}(i)$ represents the bandwidth for the message with the higher priority in the first message and the second message at the transmission moment $i$, $\mu$ is the subcarrier spacing for sending the first message and/or the subcarrier spacing for sending the second message by the first terminal device, and N is the frequency domain interval for sending the second message. For example, the first parameter may be any one of the foregoing.

With reference to the tenth aspect, in some implementations of the tenth aspect, the first message is carried on a PSCCH, the second message is an SL-PRS, and the processing unit is specifically configured to determine the first parameter, where the first transmit power is related to the first parameter, and the first parameter A satisfies any one of the following conditions:

$$A = max\left(M_{RB}^{PSCCH}(i), M_{RB}^{SL-PRS}(i)\right);$$

$$A = max\left(M_{RB}^{PSCCH}(i), M_{RB}^{SL-PRS}(i) / N_{comb}\right);$$

$$A = min\left(M_{RB}^{PSCCH}(i), M_{RB}^{SL-PRS}(i)\right);$$

$$A = min\left(M_{RB}^{PSCCH}(i), M_{RB}^{SL-PRS}(i) / N_{comb}\right);$$

$$A = max\left(2^{\mu} \cdot M_{RB}^{PSCCH}(i), 2^{\mu} \cdot M_{RB}^{SL-PRS}(i)\right);$$

$$A = max\left(2^{\mu} \cdot M_{RB}^{PSCCH}(i), 2^{\mu} \cdot M_{RB}^{SL-PRS}(i) / N_{comb}\right);$$

$$A = min\left(2^{\mu} \cdot M_{RB}^{PSCCH}(i), 2^{\mu} \cdot M_{RB}^{SL-PRS}(i)\right);$$

$$A = min\left(2^{\mu} \cdot M_{RB}^{PSCCH}(i), 2^{\mu} \cdot M_{RB}^{SL-PRS}(i) / N_{comb}\right);$$

$$A = M_{RB}^{PSCCH}(i);$$

$$A = 2^{\mu} \cdot M_{RB}^{PSCCH}(i);$$

$$A = M_{RB}^{SL-PRS}(i);$$

$$A = 2^{\mu} \cdot M_{RB}^{SL-PRS}(i);$$

$$A = M_{RB}^{x}(i);$$

and

$$A = 2^{\mu} \cdot M_{RB}^{x}(i),$$

where
max() represents taking a maximum value from a plurality of numerals, min() represents taking a minimum value from a plurality of numerals, $M_{RB}^{PSCCH}(i)$ represents the first bandwidth at the transmission moment $i$, $M_{RB}^{SL-PRS}(i)$ represents the second bandwidth at the transmission moment $i$, $M_{RB}^{x}(i)$ represents the bandwidth for the message with the higher priority in the message carried on the PSCCH and the SL-PRS at the transmission moment $i$, $\mu$ is the subcarrier spacing for sending the PSCCH and/or the subcarrier spacing for sending the SL-PRS by the first terminal device, and $N_{comb}$ is the frequency domain interval for sending the SL-PRS. With reference to the tenth aspect, in some implementations of the tenth aspect, the processing unit is specifically configured to determine a transmit power for the PSCCH, where the transmit power for the PSCCH is related to the first parameter, and the transmit power for the PSCCH is the first transmit power.

With reference to the tenth aspect, in some implementations of the tenth aspect, the transmit power for the PSCCH satisfies any one of the following conditions:

$$P_{PSCCH}(i) = min\left(\begin{array}{l} P_{CMAX}, \\ min\left(P_{PSCCH,D}(i), P_{PSCCH,SL}(i)\right) + 10log_{10}(A) - 10log_{10}\left(M_{RB}^{PSCCH}(i)\right) \end{array}\right);$$

or

$$P_{PSCCH}(i) = min\left(\begin{array}{l} P_{CMAX}, \\ min\left(P_{PSCCH,D}(i), P_{PSCCH,SL}(i)\right) + 10log_{10}(A) - 10log_{10}\left(2^{\mu} \cdot M_{RB}^{PSCCH}(i)\right) \end{array}\right);$$

or

$$P_{PSCCH}(i) = min \left( \begin{array}{l} P_{CMAX}, \\ min\left(P_{PSCCH,D}(i), P_{PSCCH,SL}(i) + 10log_{10}(A) - 10log_{10}\left(M_{RB}^{PSCCH}(i)\right)\right) \end{array} \right);$$

or

$$P_{PSCCH}(i) = min \left( \begin{array}{l} P_{CMAX}, \\ min\left(P_{PSCCH,D}(i), P_{PSCCH,SL}(i) + 10log_{10}(A) - 10log_{10}\left(2^{\mu} \cdot M_{RB}^{PSCCH}(i)\right)\right) \end{array} \right);$$

or

$$P_{PSCCH}(i) = min \left( \begin{array}{l} P_{CMAX}, \\ P_{MAX,CBR}, \\ min\left(P_{PSCCH,D}(i), P_{PSCCH,SL}(i)\right) + 10log_{10}(A) - 10log_{10}\left(M_{RB}^{PSCCH}(i)\right) \end{array} \right);$$

or

$$P_{PSCCH}(i) = min \left( \begin{array}{l} P_{CMAX}, \\ P_{MAX,CBR}, \\ min\left(P_{PSCCH,D}(i), P_{PSCCH,SL}(i)\right) + 10log_{10}(A) - 10log_{10}\left(2^{\mu} \cdot M_{RB}^{PSCCH}(i)\right) \end{array} \right);$$

or

$$P_{PSCCH}(i) = min \left( \begin{array}{l} P_{CMAX}, \\ P_{MAX,CBR}, \\ min\left(P_{PSCCH,D}(i), P_{PSCCH,SL}(i) + 10log_{10}(A) - 10log_{10}\left(2^{\mu} \cdot M_{RB}^{PSCCH}(i)\right)\right) \end{array} \right);$$

or

$$P_{PSCCH}(i) = min \left( \begin{array}{l} P_{CMAX}, \\ P_{MAX,CBR}, \\ min\left(P_{PSCCH,D}(i), P_{PSCCH,SL}(i) + 10log_{10}(A) - 10log_{10}\left(M_{RB}^{PSCCH}(i)\right)\right) \end{array} \right);$$

or

$$P_{PSCCH}(i) = min \left( \begin{array}{l} P_{MAX,CBR}, \\ min\left(P_{PSCCH,D}(i), P_{PSCCH,SL}(i)\right) + 10log_{10}(A) - 10log_{10}\left(M_{RB}^{PSCCH}(i)\right) \end{array} \right);$$

or

$$P_{PSCCH}(i) = min \left( \begin{array}{l} P_{MAX,CBR}, \\ min\left(P_{PSCCH,D}(i), P_{PSCCH,SL}(i)\right) + 10log_{10}(A) - 10log_{10}\left(2^{\mu} \cdot M_{RB}^{PSCCH}(i)\right) \end{array} \right);$$

or

$$P_{PSCCH}(i) = min\left(\begin{array}{c} P_{MAX,CBR}, \\ min\left(P_{PSCCH,D}(i), P_{PSCCH,SL}(i) + 10log_{10}(A) - 10log_{10}\left(M_{RB}^{PSCCH}(i)\right)\right) \end{array}\right);$$

or

$$P_{PSCCH}(i) = min\left(\begin{array}{c} P_{MAX,CBR}, \\ min\left(P_{PSCCH,D}(i), P_{PSCCH,SL}(i) + 10log_{10}(A) - 10log_{10}\left(2^{\mu} \cdot M_{RB}^{PSCCH}(i)\right)\right) \end{array}\right),$$

where
$P_{PSCCH,D}(i)$ satisfies:

$$P_{PSCCH,D}(i) = P_{O,D} + 10log_{10}\left(2^{\mu} \cdot M_{RB}^{PSCCH}(i)\right) + \alpha_D \cdot PL_D;$$

or

$$P_{PSCCH,D}(i) = min\left(P_{CMAX}, P_{MAX,CBR}\right);$$

and $P_{PSCCH,D}(i)$ satisfies:

$$P_{PSCCH,SL}(i) = P_{O,SL} + 10log_{10}\left(2^{\mu} \cdot M_{RB}^{PSCCH}(i)\right) + \alpha_{SL} \cdot PL_{SL};$$

; or

$$P_{PSCCH,SL}(i) = min\left(P_{CMAX}, P_{PSSCH,D}(i)\right);$$

or

$$P_{PSCCH,SL}(i) = min\left(P_{MAX,CBR}, P_{PSSCH,D}(i)\right).$$

With reference to the tenth aspect, in some implementations of the tenth aspect, the transmit power for the PSCCH satisfies any one of the following conditions:

$$P_{PSCCH}(i) = min\left(P_{CMAX}, P_{MAX,CBR}, min\left(P_{PSCCH,D}(i), P_{PSCCH,SL}(i)\right)\right);$$

or

$$P_{PSCCH}(i) = min\left(P_{CMAX}, min\left(P_{PSCCH,D}(i), P_{PSCCH,SL}(i)\right)\right);$$

or

$$P_{PSCCH}(i) = min\left(P_{MAX,CBR}, min\left(P_{PSCCH,D}(i), P_{PSCCH,SL}(i)\right)\right),$$

where

$$P_{PSCCH,D}(i) = P_{O,D} + 10log_{10}(A) + \alpha_D \cdot PL_D;$$

or

$$P_{PSCCH,D}(i) = P_{O,D} + 10log_{10}\left(2^{\mu} \cdot M_{RB}^{PSCCH}(i)\right) + \alpha_D \cdot PL_D \;;$$

or

$$P_{PSCCH,D}(i) = P_{O,D} + 10log_{10}\left(M_{RB}^{PSCCH}(i)\right) + \alpha_D \cdot PL_D \;;$$

or

$$P_{PSCCH,D}(i) = min\left(P_{CMAX}, P_{MAX,CBR}\right);$$

and
$P_{PSCCH,SL}(i)$ satisfies:

$$P_{PSCCH,SL}(i) = P_{O,SL} + 10log_{10}\left(A\right) + \alpha_{SL} \cdot PL_{SL} \;;$$

or

$$P_{PSCCH,SL}(i) = P_{O,SL} + 10log_{10}\left(2^{\mu} \cdot M_{RB}^{PSCCH}(i)\right) + \alpha_{SL} \cdot PL_{SL} \;;$$

or

$$P_{PSCCH,SL}(i) = P_{O,SL} + 10log_{10}\left(M_{RB}^{PSCCH}(i)\right) + \alpha_{SL} \cdot PL_{SL} \;;$$

or

$$P_{PSCCH,SL}(i) = min\left(P_{CMAX}, P_{PSSCH,D}\right).$$

In the foregoing two implementations, $P_{PSCCH}(i)$ represents the transmit power for the PSCCH at the transmission moment $i$, $P_{CMAX}$ represents a maximum transmit power of the first terminal device, $P_{MAX,CBR}$ is a power value associated with a CBR of a resource pool, $P_{PSCCH,D}(i)$ represents a first power parameter of the PSCCH at the transmission moment $i$, $P_{PSCCH,SL}(i)$ represents a second power parameter of the PSCCH at the transmission moment $i$, $P_{O,D}$ and $\alpha_D$ are power parameters of the PSCCH, $PL_D$ is a path loss between the first terminal device and a serving cell, $P_{O,SL}$ and $\alpha_{SL}$ are power parameters of the PSCCH, $PL_{SL}$ is a sidelink path loss between the first terminal device and the second terminal device, and $\mu$ is the subcarrier spacing for sending the PSCCH by the first terminal device.

With reference to the tenth aspect, in some implementations of the tenth aspect, the transceiver unit is further configured to obtain first configuration information, where the first configuration information indicates the first terminal device to determine the first transmit power based on the first message or to determine the first transmit power based on the message with the higher priority in the first message and the second message.

With reference to the tenth aspect, in some implementations of the tenth aspect, the processing unit is specifically configured to determine a transmit power for the SL-PRS, where the transmit power for the SL-PRS is related to the first parameter, and the transmit power for the SL-PRS is the first transmit power.

With reference to the tenth aspect, in some implementations of the tenth aspect, the transmit power for the SL-PRS satisfies any one of the following conditions:

$$P_{SL-PRS}(i) = min\begin{pmatrix} P_{CMAX}, \\ P_{MAX,CBR}, \\ min\left(P_{SL-PRS,D}(i), P_{SL-PRS,SL}(i)\right) + 10log_{10}(A) - 10log_{10}\left(M_{RB}^{SL-PRS}(i)\right) \end{pmatrix};$$

or

$$P_{SL-PRS}(i) = min \begin{pmatrix} P_{CMAX}, \\ P_{MAX,CBR}, \\ min \left( P_{SL-PRS,D}(i), P_{SL-PRS,SL}(i) \right) + 10 log_{10}(A) - 10 log_{10} \left( 2^{\mu} \cdot M_{RB}^{SL-PRS}(i) \right) \end{pmatrix};$$

or

$$P_{SL-PRS}(i) = min \begin{pmatrix} P_{CMAX}, \\ P_{MAX,CBR}, \\ min \left( P_{SL-PRS,D}(i), P_{SL-PRS,SL}(i) + 10 log_{10}(A) - 10 log_{10} \left( M_{RB}^{SL-PRS}(i) \right) \right) \end{pmatrix};$$

or

$$P_{SL-PRS}(i) = min \begin{pmatrix} P_{CMAX}, \\ P_{MAX,CBR}, \\ min \left( P_{SL-PRS,D}(i), P_{SL-PRS,SL}(i) + 10 log_{10}(A) - 10 log_{10} \left( 2^{\mu} \cdot M_{RB}^{SL-PRS}(i) \right) \right) \end{pmatrix};$$

or

$$P_{SL-PRS}(i) = min \begin{pmatrix} P_{CMAX}, \\ min \left( P_{SL-PRS,D}(i), P_{SL-PRS,SL}(i) \right) + 10 log_{10}(A) - 10 log_{10} \left( M_{RB}^{SL-PRS}(i) \right) \end{pmatrix};$$

or

$$P_{SL-PRS}(i) = min \begin{pmatrix} P_{CMAX}, \\ min \left( P_{SL-PRS,D}(i), P_{SL-PRS,SL}(i) \right) + 10 log_{10}(A) - 10 log_{10} \left( 2^{\mu} \cdot M_{RB}^{SL-PRS}(i) \right) \end{pmatrix};$$

or

$$P_{SL-PRS}(i) = min \begin{pmatrix} P_{CMAX}, \\ min \left( P_{SL-PRS,D}(i), P_{SL-PRS,SL}(i) + 10 log_{10}(A) - 10 log_{10} \left( 2^{\mu} \cdot M_{RB}^{SL-PRS}(i) \right) \right) \end{pmatrix};$$

or

$$P_{SL-PRS}(i) = min \begin{pmatrix} P_{CMAX}, \\ min \left( P_{SL-PRS,D}(i), P_{SL-PRS,SL}(i) + 10 log_{10}(A) - 10 log_{10} \left( M_{RB}^{SL-PRS}(i) \right) \right) \end{pmatrix};$$

or

$$P_{SL-PRS}(i) = min \begin{pmatrix} P_{MAX,CBR}, \\ min \left( P_{SL-PRS,D}(i), P_{SL-PRS,SL}(i) \right) + 10 log_{10}(A) - 10 log_{10} \left( M_{RB}^{SL-PRS}(i) \right) \end{pmatrix};$$

or

$$P_{SL-PRS}(i) = min\left(\begin{array}{l} P_{MAX,CBR}, \\ min\left(P_{SL-PRS,D}(i), P_{SL-PRS,SL}(i)\right) + 10log_{10}(A) - 10log_{10}\left(2^{\mu} \cdot M_{RB}^{SL-PRS}(i)\right) \end{array}\right);$$

or

$$P_{SL-PRS}(i) = min\left(\begin{array}{l} P_{MAX,CBR}, \\ min\left(P_{SL-PRS,D}(i), P_{SL-PRS,SL}(i) + 10log_{10}(A) - 10log_{10}\left(M_{RB}^{SL-PRS}(i)\right)\right) \end{array}\right);$$

or

$$P_{SL-PRS}(i) = min\left(\begin{array}{l} P_{MAX,CBR}, \\ min\left(P_{SL-PRS,D}(i), P_{SL-PRS,SL}(i) + 10log_{10}(A) - 10log_{10}\left(2^{\mu} \cdot M_{RB}^{SL-PRS}(i)\right)\right) \end{array}\right) \quad,$$

where

$P_{SL-PRS,D}(i)$ satisfies:

$$P_{SL-PRS,D}(i) = P_{O,D} + 10log_{10}\left(2^{\mu} \cdot M_{RB}^{SL-PRS}(i)\right) + \alpha_D \cdot PL_D;$$

or

$$P_{SL-PRS,D}(i) = min\left(P_{CMAX}, P_{CMAX,CBR}\right);$$

and
$P_{SL-PRS,SL}(i)$ satisfies:

$$P_{SL-PRS,SL}(i) = P_{O,SL} + 10log_{10}\left(2^{\mu} \cdot M_{RB}^{SL-PRS}(i)\right) + \alpha_{SL} \cdot PL_{SL};$$

or

$$P_{SL-PRS,SL}(i) = min\left(P_{CMAX}, P_{SL-PRS,D}(i)\right);$$

or

$$P_{SL-PRS,SL}(i) = min\left(P_{CMAX,CBR}, P_{SL-PRS,D}(i)\right).$$

With reference to the tenth aspect, in some implementations of the tenth aspect, the transmit power for the SL-PRS satisfies any one of the following conditions:

$$P_{SL-PRS}(i) = min\left(P_{CMAX}, P_{MAX,CBR}, min\left(P_{SL-PRS,D}(i), P_{SL-PRS,SL}(i)\right)\right);$$

or

$$P_{SL-PRS}(i) = min\left(P_{CMAX}, min\left(P_{SL-PRS,D}(i), P_{SL-PRS,SL}(i)\right)\right);$$

or

$$P_{SL-PRS}(i) = min\left(P_{MAX,CBR}, min\left(P_{SL-PRS,D}(i), P_{SL-PRS,SL}(i)\right)\right),$$

where

$P_{SL-PRS,D}(i)$ satisfies:

$$P_{SL-PRS,D}(i) = P_{O,D} + 10log_{10}(A) + \alpha_D \cdot PL_D;$$

or

$$P_{SL-PRS,D}(i) = P_{O,D} + 10log_{10}\left(2^{\mu} \cdot M_{RB}^{SL-PRS}(i)\right) + \alpha_D \cdot PL_D;$$

or

$$P_{SL-PRS,D}(i) = P_{O,D} + 10log_{10}\left(M_{RB}^{SL-PRS}(i)\right) + \alpha_D \cdot PL_D;$$

or

$$P_{SL-PRS,D}(i) = min\left(P_{CMAX}, P_{CMAX,CBR}\right);$$

and
$P_{SL-PRS,SL}(i)$ satisfies:

$$P_{SL-PRS,SL}(i) = P_{O,SL} + 10log_{10}(A) + \alpha_{SL} \cdot PL_{SL};$$

or

$$P_{SL-PRS,SL}(i) = P_{O,SL} + 10log_{10}\left(2^{\mu} \cdot M_{RB}^{SL-PRS}(i)\right) + \alpha_{SL} \cdot PL_{SL};$$

or

$$P_{SL-PRS,SL}(i) = P_{O,SL} + 10log_{10}\left(M_{RB}^{SL-PRS}(i)\right) + \alpha_{SL} \cdot PL_{SL};$$

or

$$P_{SL-PRS,SL}(i) = min\left(P_{CMAX}, P_{SL-PRS,D}\right).$$

In the foregoing two implementations, $P_{SL-PRS}(i)$ represents the transmit power for the SL-PRS at the transmission moment $i$, $P_{CMAX}$ represents a maximum transmit power of the first terminal device, $P_{MAX,CBR}$ is a power value associated with a CBR of a resource pool, $P_{SL-PRS,D}(i)$ represents a first power parameter of the SL-PRS at the transmission moment $i$, $P_{SL-PRS,SL}(i)$ represents a second power parameter of the SL-PRS at the transmission moment $i$, $P_{O,D}$ and $\alpha_D$ are power parameters of the SL-PRS, $PL_D$ is a path loss between the first terminal device and a serving cell, $P_{O,SL}$ and $\alpha_{SL}$ are power parameters of the SL-PRS, $PL_{SL}$ is a sidelink path loss between the first terminal device and the second terminal device, and $\mu$ is the subcarrier spacing for sending the SL-PRS by the first terminal device.

With reference to the tenth aspect, in some implementations of the tenth aspect, the transceiver unit is further configured to obtain second configuration information, where the second configuration information indicates the first terminal device to determine the first transmit power based on the second message or to determine the first transmit power based on the message with the higher priority in the first message and the second message.

With reference to the tenth aspect, in some implementations of the tenth aspect, the maximum transmit power $P_{CMAX}$ of the first terminal device is a smaller value of a first maximum transmit power and a second maximum transmit power, the first maximum transmit power is a maximum transmit power determined based on the first message, and the second maximum transmit power is a maximum transmit power determined based on the second message.

According to an eleventh aspect, a communication apparatus is provided. The apparatus may be a second terminal device (for example, a UE 2), or may be a chip or a circuit used for the second terminal device. This is not limited in this application.

The apparatus includes: a transceiver unit, configured to receive a first message and a second message, where the first message and the second message are sent by using a first transmit power, the first transmit power is related to a first bandwidth and/or a second bandwidth, the first bandwidth is a bandwidth for sending the first message, the second bandwidth is a bandwidth for sending the second message, and a time domain resource for the first message and a time domain resource for the second message are consecutive; and a processing unit, configured to determine a receive power for the first message and/or a receive power for the second message.

Optionally, the first bandwidth is different from the second bandwidth.

Optionally, the time domain resource for the first message and the time domain resource for the second message are located in a same time domain unit, and the time domain resource for the first message is located before the time domain resource for the second message.

Optionally, the first message is carried on a physical sidelink control channel (physical sidelink control channel, PSCCH), and the second message is a sidelink positioning reference signal (sidelink positioning reference signal, SL-PRS).

With reference to the eleventh aspect, in some implementations of the eleventh aspect, the receive power is determined based on at least one of the following parameters: a reference signal received power (reference signal received power, RSRP), a received signal strength indicator (received signal strength indicator, RSSI), and a reference signal received quality (reference signal received quality, RSRQ).

With reference to the eleventh aspect, in some implementations of the eleventh aspect, the transceiver unit is further configured to receive third configuration information, where the third configuration information indicates the second terminal device to determine the receive power for the second message based on the first message.

With reference to the eleventh aspect, in some implementations of the eleventh aspect, the receive power $PR_2$ for the second message satisfies the following condition:

$$PR_2 = PR_1 \cdot \left( M^{msg1}(i) \big/ M^{msg2}(i) \right);$$

or

$$PR_2 = PR_1 + 10log_{10}\left( M^{msg1}(i) \big/ M^{msg2}(i) \right),$$

where

$PR_1$ represents the receive power for the first message, $PR_2$ represents the receive power for the second message, $M^{msg1}(i)$ represents the first bandwidth at a transmission moment $i$, and $M^{msg2}(i)$ represents the second bandwidth at the transmission moment $i$.

With reference to the eleventh aspect, in some implementations of the eleventh aspect, the transceiver unit is further configured to receive fourth configuration information, where the fourth configuration information indicates the second terminal device to determine the receive power for the first message based on the second message.

With reference to the eleventh aspect, in some implementations of the eleventh aspect, the receive power $PR_1$ for the first message satisfies the following condition:

$$PR_1 = PR_2 \cdot \left( M^{msg2}(i) \big/ M^{msg1}(i) \right);$$

or

$$PR_1 = PR_2 + 10log_{10}\left( M^{msg2}(i) \big/ M^{msg1}(i) \right),$$

where

$PR_1$ represents the receive power for the first message, $PR_2$ represents the receive power for the second message, $M^{msg1}(i)$ represents the first bandwidth at a transmission moment $i$, and $M^{msg2}(i)$ represents the second bandwidth at the transmission moment $i$.

With reference to the eleventh aspect, in some implementations of the eleventh aspect, the processing unit is further configured to determine, based on the receive power for the first message and/or the receive power for the second message, a transmission resource for sending a third message.

According to a twelfth aspect, a communication apparatus is provided. The apparatus may be a first terminal device (for example, a UE 1), or may be a chip or a circuit used for the first terminal device. This is not limited in this application.

The apparatus includes: a processing unit, configured to determine a first transmit power and a second transmit power, where the first transmit power is a power for sending a first message by the first terminal device, and the second transmit power is a power for sending a second message by the first terminal device; and a transceiver unit, configured to send first information when the first transmit power is different from the second transmit power, where the first information indicates a transient period, the transient period is a time interval between a time domain resource for sending the first message and a time domain resource for sending the second message, and the time domain resource for sending the first message is located before the time domain resource for sending the second message.

With reference to the twelfth aspect, in some implementations of the twelfth aspect, the transceiver unit is further configured to: send the first message by using the first transmit power, and send, for the first terminal device, the second message by using the second transmit power.

Optionally, the time domain resource for the first message and the time domain resource for the second message are located in a same time domain unit, and the time domain resource for the first message is located before the time domain resource for the second message.

Optionally, the first message is carried on a PSCCH, and the second message is an SL-PRS.

With reference to the twelfth aspect, in some implementations of the twelfth aspect, the first information indicates at least one of the following: duration of the transient period; or whether duration of the transient period occupies one symbol.

With reference to the twelfth aspect, in some implementations of the twelfth aspect, the transceiver unit is further configured to send second information, where the second information indicates a power difference between the first transmit power and the second transmit power.

For example, the second information is carried in sidelink control information (sidelink control information, SCI) or uplink control information (uplink control information, UCI).

It should be understood that the sidelink control information may also be referred to as sidelink control information, and the uplink control information may also be referred to as uplink control information.

For example, the first information is carried in SCI or UCI.

According to a thirteenth aspect, a communication apparatus is provided. The apparatus may be a second terminal device (for example, a UE 2), or may be a chip or a circuit used for the second terminal device. This is not limited in this application.

The apparatus includes: a transceiver unit, configured to receive first information from a first terminal device, where the first information indicates a transient period, the transient period is a time interval between a time domain resource for sending a first message by the first terminal device and a time domain resource for sending a second message by the first terminal device, the time domain resource for the first message is located before the time domain resource for the second message, the first terminal device sends the first message to the second terminal device by using a first transmit power, the first terminal device sends the second message to the second terminal device by using a second transmit power, and the first transmit power is different from the second transmit power; and a processing unit, configured to determine, based on the transient period, a time domain start location for receiving the second message.

Optionally, the time domain resource for the first message and the time domain resource for the second message are located in a same time domain unit, and the time domain resource for the first message is located before the time domain resource for the second message.

Optionally, the first message is carried on a PSCCH, and the second message is an SL-PRS.

With reference to the thirteenth aspect, in some implementations of the thirteenth aspect, the processing unit is specifically configured to determine the time domain start location based on the transient period and duration that is for performing AGC processing by the second device.

According to a fourteenth aspect, a communication apparatus is provided. The apparatus may be a second terminal device (for example, a UE 2), or may be a chip or a circuit used for the second terminal device. This is not limited in this application.

The apparatus includes: a processing unit, configured to determine third information, where the third information indicates duration for performing automatic gain control AGC processing by the second terminal device; and a transceiver unit, configured to send the third information.

For example, the third information is carried in SCI or UCI.

According to a fifteenth aspect, a communication apparatus is provided. The apparatus may be a first device, or may be a chip or a circuit used for the first device. This is not limited in this application.

For example, the first device may be a first terminal device, or may be a network side device. The network side device may be an access side network device, for example, a base station, or may be a core network element, for example, a location management function (location management function, LMF) or a positioning server.

The apparatus includes: a transceiver unit, configured to obtain first information, where the first information indicates a transient period of a first terminal device, the transient period is a time interval between a time domain resource for sending a first message by the first terminal device and a time domain resource for sending a second message by the first terminal device, the time domain resource for the first message is located before the time domain resource for the second message, the first terminal device sends the first message to a second terminal device by using a first transmit power, the first terminal device sends the second message to the second terminal device by using a second transmit power, and the first transmit power is different from the second transmit power; and a processing unit, configured to determine, based on the first information, a transmission resource used by the first terminal device to send the second message to the second terminal device.

Optionally, the time domain resource for the first message and the time domain resource for the second message are located in a same time domain unit, and the time domain resource for the first message is located before the time domain resource for the second message.

Optionally, the first message is carried on a PSCCH, and the second message is an SL-PRS.

With reference to the fifteenth aspect, in some implementations of the fifteenth aspect, the processing unit is specifically configured to determine, based on the transient period, whether the transmission resource includes one adjacent symbol after the time domain resource for the first message.

In an example, the transient period is less than or equal to a first threshold, and the transmission resource includes one adjacent symbol after the time domain resource for the first message.

In another example, the transient period is greater than a first threshold, and the transmission resource does not include one adjacent symbol after the time domain resource for the first message. With reference to the fifteenth aspect, in some implementations of the fifteenth aspect, the transceiver unit is further configured to receive third information from the second device, where the third information indicates duration for performing automatic gain control AGC processing by the second device; and the processing unit is specifically configured to determine the transmission resource based on the first information and/or the third information.

With reference to the fifteenth aspect, in some implementations of the fifteenth aspect, the processing unit is specifically configured to: determine, based on the transient period and/or the duration that is for performing the AGC processing, a quantity of symbols occupied by the transmission resource; and/or determine a frequency domain interval of the transmission resource based on the transient period and/or the duration that is for performing the AGC processing.

For example, the third information is carried in SCI or UCI.

For example, the first information is carried in SCI or UCI.

According to a sixteenth aspect, a communication apparatus is provided. The apparatus may be a first terminal device (for example, a UE 1), or may be a chip or a circuit used for the first terminal device. This is not limited in this application.

The apparatus includes: a processing unit, configured to determine second information, where the second information indicates a power difference between a first transmit power and a second transmit power, the first transmit power is a power for sending a first message by the first terminal device, and the second transmit power is a power for sending a second message by the first terminal device; and a transceiver unit, configured to send the second information.

Optionally, the power difference between the first transmit power and the second transmit power is a difference between a transmit power for a symbol occupied by the first message and a transmit power for a symbol occupied by the second message; or the power difference between the first transmit power and the second transmit power is a difference between an RSRP for the first message on each subcarrier and an RSRP for the second message on each subcarrier.

According to a seventeenth aspect, a communication apparatus is provided. The apparatus may be a second terminal device (for example, a UE 2), or may be a chip or a circuit used for the second terminal device. This is not limited in this application.

The apparatus includes: a transceiver unit, configured to receive second information, where the second information indicates a power difference between a first transmit power and a second transmit power, the first transmit power is a power for sending a first message by a first terminal device, and the second transmit power is a power for sending a second message by the first terminal device; and a processing unit, configured to: determine a receive power for the second message based on the second information, and determine, for the second terminal device, a candidate resource for a third message based on the receive power for the second message.

With reference to the seventeenth aspect, in some implementations of the seventeenth aspect, the processing unit is specifically configured to: determine a receive power for the first message; and determine the receive power for the second message based on the receive power for the first message and the power difference between the first transmit power and the second transmit power. With reference to the seventeenth aspect, in some implementations of the seventeenth aspect, the power difference between the first transmit power and the second transmit power is a difference between a transmit power for a symbol occupied by the first message and a transmit power for a symbol occupied by the second message; or the power difference between the first transmit power and the second transmit power is a difference between an RSRP for the first message on each subcarrier and an RSRP for the second message on each subcarrier.

With reference to the seventeenth aspect, in some implementations of the seventeenth aspect, if the receive power for the second message is greater than a configured threshold, the processing unit is specifically configured to exclude, from a candidate resource set, the time domain resource occupied by the second message, to obtain the candidate resource for the third message.

According to an eighteenth aspect, a communication apparatus is provided. The apparatus may be a first terminal device (for example, a UE 1), or may be a chip or a circuit used for the first terminal device. This is not limited in this application.

The apparatus includes: a processing unit, configured to determine a first transmit power, where the first transmit power is related to a first path loss and/or a second path loss, the first path loss is a path loss of a first sidelink between the communication apparatus and a second terminal device, and the second path loss is a path loss of a second sidelink between the communication apparatus and a third terminal device; and a transceiver unit, configured to send a first message to the second terminal device by using the first transmit power, and send a second message to the third terminal device by using the first transmit power.

Optionally, a time domain resource for the first message and a time domain resource for the second message are located in a same time domain unit.

Optionally, a time domain resource for a fourth message is located before the time domain resources for the first message and the second message, and the fourth message carries scheduling information indicating the first message and/or the second message.

Optionally, the first message is carried on a physical sidelink shared channel PSSCH, the second message is a sidelink positioning reference signal SL-PRS, and the fourth message is carried on a physical sidelink control channel PSCCH.

With reference to the eighteenth aspect, in some implementations of the eighteenth aspect, the processing unit is specifically configured to: determine a second parameter B, where the second parameter $B$ is related to the first path loss and/or the second path loss; and determine the first transmit power based on the second parameter $B$, where the second parameter $B$ is determined based on any one of the following:

a larger value of the first path loss and the second path loss;
a smaller value of the first path loss and the second path loss;
a path loss of a sidelink on which a message with a higher priority in the first message and the second message is located;
a larger value of a second power parameter of the first message and a second power parameter of the second message;
a smaller value of a second power parameter of the first message and a second power parameter of the second message;
a second power parameter of a message with a higher priority in the first message and the second message; or
at least three of a first power parameter of the first message, a second power parameter of the first message, a first power parameter of the second message, and a second power parameter of the second message, where
the second power parameter of the first message is determined based on the first path loss, and the second power parameter of the second message is determined based on the second path loss.

With reference to the eighteenth aspect, in some implementations of the eighteenth aspect, the second parameter $B$ is determined based on any one of the following:

$$min\left(PL_{SL,\,1}, PL_{SL,\,2}\right);$$

$$max\left(PL_{SL,\,1}, PL_{SL,\,2}\right);$$

$$PL_{SL,\,x};$$

$$min\left(P_{1,\,SL}(i), P_{2,\,SL}(i)\right);$$

$$max\left(P_{1,SL}(i),P_{2,SL}(i)\right);$$

$$P_{x,SL}(i);$$

$$min\left(P_{1,D}(i),P_{1,SL}(i),P_{2,D}(i),P_{2,SL}(i)\right);$$

$$max\left(min\left(P_{1,D}(i),P_{1,SL}(i)\right),min\left(P_{2,D}(i),P_{2,SL}(i)\right)\right);$$

$$max\left(min\left(P_{1,D}(i),P_{2,D}(i)\right),min\left(P_{1,SL}(i),P_{2,SL}(i)\right)\right);$$

$$min\left(P_{1,D}(i),min\left(P_{1,SL}(i),P_{2,SL}(i)\right)\right);$$

$$min\left(P_{1,D}(i),max\left(P_{1,SL}(i),P_{2,SL}(i)\right)\right);$$

and

$$max\left(min\left(P_{1,D}(i),P_{2,D}(i)\right),P_{1,SL}(i)\right),$$

where

*max*() represents taking a maximum value from a plurality of numerals, *min*() represents taking a minimum value from a plurality of numerals, $PL_{SL,1}$ represents the first path loss, $PL_{SL,2}$ represents the second path loss, and $PL_{SL,x}$ represents the path loss of the sidelink on which the message with the higher priority in the first message and the second message is located, or $PL_{SL,x}$ represents a path loss, indicated by signaling, of a sidelink on which a message used to determine the second parameter in the first message and the second message is located; $P_{1,SL}(i)$ represents the second power parameter of the first message at a transmission moment *i*, $P_{2,SL}(i)$ represents the second power parameter of the second message at the transmission moment *i*, and $P_{x,SL}(i)$ represents the second power parameter of the message with the higher priority in the first message and the second message at the transmission moment *i*, or $P_{x,SL}(i)$ represents a second power parameter, indicated by signaling, of a message used to determine the second parameter at the transmission moment *i* in the first message and the second message; and $P_{1,D}(i)$ represents the first power parameter of the first message at the transmission moment *i*, and $P_{2,D}(i)$ represents the first power parameter of the second message at the transmission moment *i*.

With reference to the eighteenth aspect, in some implementations of the eighteenth aspect, the processing unit is specifically configured to determine a transmit power for the first message, where the transmit power for the first message is related to the second parameter B, and the transmit power for the first message is the first transmit power.

With reference to the eighteenth aspect, in some implementations of the eighteenth aspect, the first message is carried on a physical sidelink shared channel PSSCH, the second message is a sidelink positioning reference signal SL-PRS, and the processing unit is specifically configured to: determine the second parameter B; and determine the transmit power for the first message based on the second parameter, where the second parameter *B* satisfies any one of the following conditions:

$$B = min\left(PL_{SL,PSSCH},PL_{SL,SL-PRS}\right);$$

$$B = max\left(PL_{SL,PSSCH},PL_{SL,SL-PRS}\right);$$

and

$$B = PL_{SL,x},$$

where

$max()$ represents taking a maximum value from a plurality of numerals, $min()$ represents taking a minimum value from a plurality of numerals, $PL_{SL,\,PSSCH}$ represents the first path loss, $PL_{SL,\,SL\text{-}PRS}$ represents the second path loss, and $PL_{SL,\,x}$ represents the path loss of the sidelink on which the message with the higher priority in the first message and the second message is located, or $PL_{SL,\,x}$ represents the path loss, indicated by the signaling, of the sidelink on which the message used to determine the second parameter in the first message and the second message is located.

With reference to the eighteenth aspect, in some implementations of the eighteenth aspect, a transmit power for the PSSCH satisfies:

$$P_{PSSCH}(i) = min \begin{pmatrix} P_{CMAX}, \\ P_{MAX,CBR}, \\ min\left(P_{PSSCH,D}(i), P_{PSSCH,SL}(i)\right) \end{pmatrix};$$

or

$$P_{PSSCH}(i) = min \begin{pmatrix} P_{CMAX}, \\ min\left(P_{PSSCH,D}(i), P_{PSSCH,SL}(i)\right) \end{pmatrix};$$

or

$$P_{PSSCH}(i) = min \begin{pmatrix} P_{MAX,CBR}, \\ min\left(P_{PSSCH,D}(i), P_{PSSCH,SL}(i)\right) \end{pmatrix};$$

or

$$P_{PSSCH}(i) = min\left(P_{PSSCH,D}(i), P_{PSSCH,SL}(i)\right),$$

where

$P_{PSSCH,D}(i)$ satisfies:

$$P_{PSSCH,D}(i) = P_{O,D} + 10log_{10}\left(2^{\mu} \cdot M_{RB}^{PSSCH}(i)\right) + \alpha_D \cdot PL_D;$$

and
$P_{PSCCH,SL}(i)$ satisfies:

$$P_{PSSCH,SL}(i) = P_{O,SL} + 10log_{10}\left(2^{\mu} \cdot M_{RB}^{PSSCH}(i)\right) + \alpha_{SL} \cdot B,$$

where

$P_{PSSCH}(i)$ represents the transmit power for the PSSCH at the transmission moment $i$, $P_{CMAX}$ represents a maximum transmit power of the communication apparatus, $P_{MAX,CBR}$ is a power value associated with a channel busy ratio CBR of a resource pool, $P_{PSSCH,D}(i)$ represents the first power parameter of the PSSCH at the transmission moment $i$, $P_{PSSCH,SL}(i)$ represents the second power parameter of the PSSCH at the transmission moment $i$, $P_{O,D}$ is a power parameter of the communication apparatus and a serving cell, $\alpha_D$ is a power parameter of the communication apparatus and the serving cell, $PL_D$ is a downlink path loss between the communication apparatus and the serving cell, $P_{O,SL}$ is a power parameter of the communication apparatus on a sidelink, $\alpha_{SL}$ is a power parameter of the communication apparatus on the sidelink, $\mu$ is a subcarrier spacing for sending the PSCCH by the communication apparatus, and $M_{RB}^{PSSCH}(i)$ represents a bandwidth for the PSSCH at the transmission moment $i$.

With reference to the eighteenth aspect, in some implementations of the eighteenth aspect, the first message is carried on a physical sidelink shared channel PSSCH, the second message is a sidelink positioning reference signal SL-PRS, and the processing unit is specifically configured to: determine the second parameter; and determine the transmit power for the first message based on the second parameter, where the second parameter $B$ satisfies any one of the following conditions:

$$B = min\left(P_{PSSCH,D}(i), min\left(P_{PSSCH,SL}(i), P_{SL-PRS,SL}(i)\right)\right);$$

$$B = min\left(P_{PSSCH,D}(i), max\left(P_{PSSCH,SL}(i), P_{SL-PRS,SL}(i)\right)\right);$$

$$B = min\left(P_{PSSCH,D}(i), P_{x,SL}(i)\right);$$

$$B = min\left(P_{PSSCH,D}(i), P_{PSSCH,SL}(i), P_{SL-PRS,D}(i), P_{SL-PRS,SL}(i)\right);$$

$$B = max\left(min\left(P_{PSSCH,D}(i), P_{PSSCH,SL}(i)\right), min\left(P_{SL-PRS,D}(i), P_{SL-PRS,SL}(i)\right)\right);$$

$$B = max\left(min\left(P_{PSSCH,D}(i), P_{SL-PRS,D}(i)\right), min\left(P_{PSSCH,SL}(i), P_{SL-PRS,SL}(i)\right)\right);$$

and

$$B = max\left(min\left(P_{PSSCH,D}(i), P_{SL-PRS,D}(i)\right), P_{PSSCH,SL}(i)\right),$$

where

max() represents taking a maximum value from a plurality of numerals, min() represents taking a minimum value from a plurality of numerals, $P_{PSSCH,D}(i)$ represents the first power parameter of the PSSCH at the transmission moment $i$, $P_{PSSCH,SL}(i)$ represents the second power parameter of the PSSCH at the transmission moment $i$, $P_{SL-PRS,D}(i)$ represents the first power parameter of the SL-PRS at the transmission moment $i$, $P_{SL-PRS,SL}(i)$ represents the second power parameter of the SL-PRS at the transmission moment $i$, and $P_{x,SL}(i)$ represents the second power parameter of the message with the higher priority in the first message and the second message at the transmission moment $i$, or $P_{x,SL}(i)$ represents the second power parameter, indicated by the signaling, of the message used to determine the second parameter at the transmission moment $i$ in the first message and the second message; and $P_{PSSCH,D}(i)$ is determined based on first downlink power parameters, $P_{PSSCH,SL}(i)$ is determined based on first sidelink power parameters, $P_{SL-PRS,D}(i)$ is determined based on second downlink power parameters, $P_{SL-PRS,SL}(i)$ is determined based on second sidelink power parameters, the first sidelink power parameters include the first path loss, and the second sidelink power parameters include the second path loss.

Optionally, the first sidelink power parameters include a first sidelink power parameter $P_{O,SL,PSSCH}$, a first sidelink power parameter $\alpha_{SL,PSSCH}$, and the first path loss $PL_{SL,PSSCH}$.

Optionally, the second sidelink power parameters include a second sidelink power parameter $P_{O,SL,SL-PRS}$, a second sidelink power parameter $\alpha_{SL,SL-PRS}$, and the second path loss $PL_{SL,SL-PRS}$.

Optionally, the first downlink power parameters include a power parameter $P_{O,D,PSSCH}$ of the communication apparatus and a serving cell, a power parameter $\alpha_{D,PSSCH}$ of the communication apparatus and the serving cell, and a downlink path loss $PL_D$ between the communication apparatus and the serving cell.

Optionally, the second downlink power parameters include a power parameter $P_{O,D,SL-PRS}$ of the communication apparatus and the serving cell, a power parameter $\alpha_{D,SL-PRS}$ of the communication apparatus and the serving cell, and a downlink path loss $PL_D$ between the communication apparatus and the serving cell.

With reference to the eighteenth aspect, in some implementations of the eighteenth aspect, values of $P_{O,SL,PSSCH}$ and $P_{O,SL,SL-PRS}$ are the same, values of $\alpha_{SL,PSSCH}$ and $\alpha_{SL,SL-PRS}$ are the same, values of $P_{O,D,PSSCH}$ and $P_{O,D,SL-PRS}$ are the same, and values of $\alpha_{D,PSSH}$ and $\alpha_{D,SL-PRS}$ are the same.

With reference to the eighteenth aspect, in some implementations of the eighteenth aspect, values of $P_{O,SL,PSSCH}$ and $P_{O,SL,SL-PRS}$ are different, values of $\alpha_{SL,PSSH}$ and $\alpha_{SL,SL-PRS}$ are different, values of $P_{O,D,PSSCH}$

and $P_{O, D, SL\text{-}PRS}$ are different, and values of $\alpha_{D, PSSH}$ and $\alpha_{D, SL\text{-}PRS}$ are different.

With reference to the eighteenth aspect, in some implementations of the eighteenth aspect, values of $P_{O, SL, PSSH}$ and $P_{O, SL, SL\text{-}PRS}$ are different, values of $\alpha_{SL, PSSCH}$ and $\alpha_{SL, SL\text{-}PRS}$ are different, values of $P_{O, D, PSSCH}$ and $P_{O, D, SL\text{-}PRS}$ are the same, and values of $\alpha_{D, PSSCH}$ and $\alpha_{D, SL\text{-}PRS}$ are the same.

With reference to the eighteenth aspect, in some implementations of the eighteenth aspect, values of $P_{O, SL, PSSCH}$ and $P_{O, SL, SL\text{-}PRS}$ are the same, values of $\alpha_{SL, PSSCH}$ and $\alpha_{SL, SL\text{-}PRS}$ are the same, values of $P_{O, D, PSSCH}$ and $P_{O, D, SL\text{-}PRS}$ are different, and values of $\alpha_{D, PSSCH}$ and $\alpha_{D, SL\text{-}PRS}$ are different.

With reference to the eighteenth aspect, in some implementations of the eighteenth aspect, $P_{PSSCH,D}(i)$, $P_{PSSCH,SL}(i)$, $P_{SL\text{-}PRS, D}(i)$, and $P_{SL\text{-}PRS,SL}(i)$ satisfy the following conditions:

$$P_{PSSCH,D}(i) = P_{O,D,\,PSSCH} + 10log_{10}\left(2^{\mu} \cdot M_{RB}^{PSSCH}(i)\right) + \alpha_{D,\,PSSCH} \cdot PL_{D}\;;$$

$$P_{PSSCH,SL}(i) = P_{O,SL,\,PSSCH} + 10log_{10}\left(2^{\mu} \cdot M_{RB}^{PSSCH}(i)\right) + \alpha_{SL,\,PSSCH} \cdot PL_{SL,\,PSSCH}\;;$$

$$P_{SL\text{-}PRS,D}(i) = P_{O,D,\,SL\text{-}PRS} + 10log_{10}\left(2^{\mu} \cdot M_{RB}^{SL\text{-}PRS}(i)\right) + \alpha_{D,\,SL\text{-}PRS} \cdot PL_{D}\;;$$

and

$$P_{PSL\text{-}PRS,SL}(i) = P_{O,SL,\,SL\text{-}PRS} + 10log_{10}\left(2^{\mu} \cdot M_{RB}^{SL\text{-}PRS}(i)\right) + \alpha_{SL,\,SL\text{-}PRS} \cdot PL_{SL,\,SL\text{-}PRS}\;,$$

where

$\mu$ is the subcarrier spacing for sending the PSSCH by the communication apparatus, $M_{RB}^{PSSCH}(i)$ represents the bandwidth for the PSSCH at the transmission moment $i$, and $M_{RB}^{SL\text{-}PRS}(i)$ represents a bandwidth for the SL-PRS at the transmission moment i.

With reference to the eighteenth aspect, in some implementations of the eighteenth aspect, a transmit power for the PSSCH satisfies:

$$P_{PSSCH}(i) = min\begin{pmatrix} P_{CMAX},\\ P_{MAX,CBR},\\ B \end{pmatrix}\;;$$

or

$$P_{PSSCH}(i) = min\begin{pmatrix} P_{CMAX},\\ B \end{pmatrix}\;;$$

or

$$P_{PSSCH}(i) = min\begin{pmatrix} P_{MAX,CBR},\\ B \end{pmatrix}\;;$$

or

$$P_{PSSCH}(i) = min\begin{pmatrix} P_{CMAX},\\ min\left(P_{MAX,CBR,PSSCH},\; P_{MAX,CBR,SL\text{-}PRS}\right)\\ B \end{pmatrix}\;;$$

or

$$P_{PSSCH}(i) = min\left(\begin{array}{c} min\left(P_{MAX,CBR,PSSCH}, \ P_{MAX,CBR,SL-PRS}\right) \\ B \end{array}\right),$$

where

$P_{PSSCH}(i)$ represents the transmit power for the PSSCH at the transmission moment $i$, $P_{CMAX}$ represents a maximum transmit power of the communication apparatus, $P_{MAX,CBR}$ is a power value associated with a channel busy ratio CBR of a resource pool, $P_{MAX,CBR, PSSCH}$ represents a power value that is associated with the channel busy ratio CBR of the resource pool and that is obtained based on the PSSCH, and $P_{MAX,CBR,SL-PRS}$ represents a power value that is associated with the channel busy ratio CBR of the resource pool and that is obtained based on the SL-PRS.

With reference to the eighteenth aspect, in some implementations of the eighteenth aspect, values of $PL_{SL, PSSCH}$ and $PL_{SL, SL-PRS}$ are different.

According to a nineteenth aspect, a communication apparatus is provided, including a transceiver, a processor, and a memory. The processor is configured to control the transceiver to receive and send signals. The memory is configured to store a computer program. The processor is configured to invoke the computer program from the memory and run the computer program, so that the communication apparatus performs the method in any possible implementation of any one of the first aspect to the ninth aspect.

Optionally, there are one or more processors and one or more memories.

Optionally, the memory may be integrated with the processor, or the memory and the processor are disposed separately.

Optionally, the communication apparatus further includes a transmitter (transmitter) and a receiver (receiver).

According to the twelfth aspect, a computer-readable storage medium is provided. The computer-readable storage medium stores a computer program or code. When the computer program or code is run on a computer, the computer is enabled to perform the method in any possible implementation of any one of the first aspect to the ninth aspect.

According to a twenty-first aspect, a chip is provided, including at least one processor. The at least one processor is coupled to a memory. The memory is configured to store a computer program. The processor is configured to invoke the computer program from the memory and run the computer program, so that an apparatus in which the chip system is installed performs the method in any possible implementation of any one of the first aspect to the ninth aspect.

The chip may include an input circuit or interface configured to send information or data, and an output circuit or interface configured to receive information or data.

According to a twenty-second aspect, a computer program product is provided. The computer program product includes computer program code. When the computer program code is run by an apparatus, the apparatus is enabled to perform the method in any possible implementation of any one of the first aspect to the ninth aspect.

## BRIEF DESCRIPTION OF DRAWINGS

FIG. 1 is a diagram of a wireless communication system to which an embodiment of this application is applicable;
FIG. 2 shows an SL slot structure;
FIG. 3 is a schematic flowchart of a communication method 200 according to an embodiment of this application;
FIG. 4 is a diagram of a slot structure in which an SL-PRS and a PSCCH are jointly transmitted;
FIG. 5 is a diagram of several time-frequency patterns (patterns) of SL-PRSs;
FIG. 6 is a schematic flowchart of a communication method 300 according to an embodiment of this application;
FIG. 7 is a diagram of another slot structure in which an SL-PRS and a PSCCH are jointly transmitted;
FIG. 8 is a schematic flowchart of a communication method 400 according to an embodiment of this application;
FIG. 9 is a schematic flowchart of a communication method 500 according to an embodiment of this application;
FIG. 10 is a diagram of a slot structure in which an SL-PRS, a PSSCH, and a PSCCH are jointly transmitted;
FIG. 11 is a block diagram of an apparatus 3000 according to an embodiment of this application;
FIG. 12 is a block diagram of an apparatus 2000 according to an embodiment of this application; and
FIG. 13 is a diagram of a chip system 3000 according to an embodiment of this application.

## DESCRIPTION OF EMBODIMENTS

The following describes technical solutions of embodiments in this application with reference to accompanying drawings.

The technical solutions provided in this application can be applied to various communication systems, for example, a 5th generation (5th generation, 5G) system, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application can also be applied to future communication systems, for example, a 6th generation (6th generation, 6G) mobile communication system. The technical solutions provided in this application can also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In an example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication. V2V refers to communication between vehicles. V2P refers to communication between a vehicle and a person (including a pedestrian, a bicyclist, a driver, a passenger, or the like). V2I refers to communication between a vehicle and an infrastructure. The infrastructure is, for example, a roadside unit (roadside unit, RSU) or a network device. The RSU includes two types: a terminal-type RSU and a base station-type RSU. The terminal-type RSU is deployed on a roadside and is in a non-moving state, and therefore mobility does not need to be considered. The base station-type RSU can provide timing synchronization and resource scheduling for a vehicle that communicates with the base station-type RSU. V2N refers to communication between a vehicle and a network device. It can be understood that the foregoing descriptions are examples, and are not limited in embodiments of this application. For example, V2X may further include NR system-based V2X communication in current 3GPP Rel-16 and later releases.

A terminal device in embodiments of this application may also be referred to as a user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides a user with a voice/data, for example, a handheld device or a vehicle-mounted device having a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a wearable device, a terminal device in a 5G network, and a terminal device in a future evolved public land mobile network (public land mobile network, PLMN). This is not limited in embodiments of this application.

By way of example rather than limitation, in embodiments of this application, the terminal device may be alternatively a wearable device. The wearable device may also be referred to as a wearable smart device and is a generic name for wearable devices that are intelligently designed and developed for everyday wear by applying a wearable technology, for example, glasses, gloves, watches, clothes, and shoes. The wearable device is a portable device that is directly worn on a body or integrated into clothes or an accessory of a user. The wearable device is not only a hardware device, but also implements powerful functions through software support, data exchange, and cloud interaction. Generalized wearable smart devices include full-featured and large-sized devices that can implement complete or partial functions without relying on smartphones, for example, smartwatches and smart glasses; and include devices that are specialized in only one type of application function and that need to be used cooperatively with other devices such as a smartphone, for example, various smart bands or smart jewelry for monitoring physical signs.

In embodiments of this application, an apparatus configured to implement a function of the terminal device, namely, a terminal apparatus, may be a terminal device; or may be an apparatus that can support the terminal device in implementing the function, for example, a chip system or a chip, where the apparatus may be installed in the terminal device. In embodiments of this application, the chip system may include a chip, or may include a chip and another discrete device. A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmission reception point (transmission reception point, TRP), a transmission point, a master station, a secondary station, a multi-standard radio (multi-standard radio, MSR) node, a home NodeB, a network controller, an access node, a radio node, an access point (access point, AP), a transmission node, a transmission/reception node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, an analogue, or a combination thereof. The base station may be alternatively a communication module, a modem, or a chip that is disposed in the foregoing device or apparatus. The base station may be alternatively a mobile switching center, a device that performs a base station function in D2D, V2X, and M2M communication, a network side device in a 6G network, a device that performs a base station function in a future communication system, or the like. The base station can support networks using a same access technology or different access technologies. A specific technology and a specific device form that are used by the network device are not limited in embodiments of this application.

The base station may be immovable or movable. For example, a helicopter or an uncrewed aerial vehicle may be configured as a mobile base station, and one or more cells may move based on a location of the mobile base station. In other examples, a helicopter or an uncrewed aerial vehicle may be configured as a device for communicating with another base station.

In some deployments, the network device mentioned in embodiments of this application may be a device including a CU or a DU, a device including a CU and a DU, or a device including a CU control plane node (a central unit-control plane (central unit-control plane, CU-CP)), a CU user plane node (a central unit-user plane (central unit-user plane, CU-UP)), and a DU node.

In embodiments of this application, an apparatus configured to implement a function of the network device may be a network device; or may be an apparatus that can support the network device in implementing the function, for example, a chip system or a chip, where the apparatus may be installed in the network device. In embodiments of this application, the chip system may include a chip, or may include a chip and another discrete device.

The network device and the terminal device may be deployed on land, including an indoor, outdoor, handheld, or vehicle-mounted device; may be deployed on water; or may be deployed on an airplane, a balloon, or a satellite in the air. Scenarios in which the network device and the terminal device are situated are not limited in embodiments of this application.

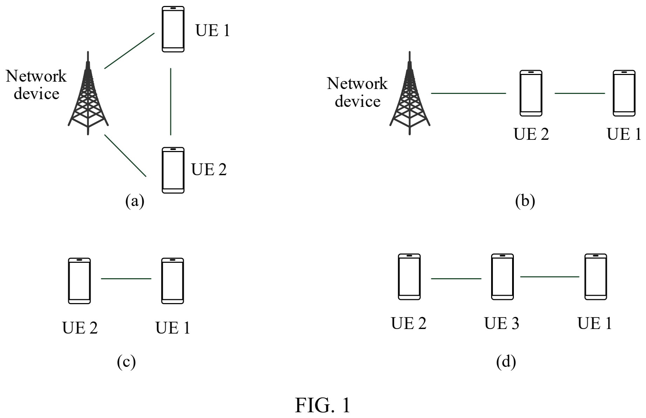

It should be noted that the technical solutions of this application are mainly applied to a sidelink transmission scenario. The following briefly describes, with reference to FIG. 1, a communication system to which an embodiment of this application is applicable.

FIG. 1 is a diagram of a wireless communication system to which an embodiment of this application is applicable. As shown in FIG. 1, the wireless communication system may include at least one terminal device, for example, a UE 1, a UE 2, and a UE 3 shown in FIG. 1. Optionally, the communication system may further include at least one network device, for example, a network device shown in FIG. 1.

The network device and the terminal device may communicate with each other. For example, the network device and the terminal device may communicate with each other through a Uu interface, and a link (link) for communication between the network device and the terminal device may be denoted as a Uu link. As shown in (a) in FIG. 1, the network device and the UE 1 may directly communicate with each other. As shown in (b) in FIG. 1, the network device and the UE 1 may alternatively communicate with each other through the UE 2. Similarly, the network device and the UE 2 may directly communicate with each other, or the network device and the UE 2 may communicate with each other through the UE 1. It can be understood that, the Uu link represents a connection relationship between the terminal device and the network device, and is a logical concept rather than a physical entity. A main link is merely a name for differentiation, and a specific name of the main link does not constitute any limitation on the protection scope of this application. Terminal devices may also communicate with each other. For example, the terminal devices may directly communicate with each other. As shown in (a) to (c) in FIG. 1, the UE 1 and the UE 2 may directly communicate with each other. For another example, the terminal devices may communicate with each other through another device, for example, a network device or a terminal device. As shown in (a) in FIG. 1, the UE 1 and the UE 2 may communicate with each other through the network device. As shown in (d) in FIG. 1, the UE 1 and the UE 2 may communicate with each other through the UE 3. An interface for communication between the terminal devices may be denoted as a proximity-based services communication 5 (proximity-based services communication 5, PC5) interface, a link for communication between the terminal devices may be denoted as a sidelink (sidelink, SL), and communication between the terminal devices may be denoted as SL communication. The sidelink may also be referred to as a side link, a secondary link, or the like. It can be understood that, the sidelink represents a connection relationship between the terminal devices, and is a logical concept rather than a physical entity. A sidelink is merely a name for differentiation, and a specific name of the sidelink does not constitute any limitation on the protection scope of this application.

In an example, SL communication between the terminal devices may be used in an internet of vehicles or an intelligent transportation system (intelligent transportation system, ITS), for example, the V2X communication described above.

Optionally, SL communication between the terminal devices may be performed with network coverage, or may be performed without network coverage. As shown in (a) and (b) in FIG. 1, the UE 1 and another UE may communicate with each other with network coverage. Alternatively, as shown in (c) and (d) in FIG. 1, the UE 1 and another UE may communicate with each other outside a network coverage area (out-of-coverage).

Optionally, configuration information used during SL communication between the terminal devices, for example, a time-frequency resource used during the SL communication between the terminal devices, may be configured or scheduled by the network device, or may be autonomously selected by the terminal device. This is not limited.

It can be understood that FIG. 1 is merely a simplified diagram used as an example for ease of understanding. The wireless communication system may further include other network devices or other terminal devices not drawn in FIG. 1. Embodiments of this application are applicable to any communication scenario in which a transmit end device communicates with a receive end device. It should be noted that a specific structure of an entity for performing a method provided in embodiments of this application is not particularly limited in embodiments of this application, provided that the entity can run a program that records code for the method provided in embodiments of this application, to perform communication according to the method provided in embodiments of this application. For example, the entity for performing the method provided in embodiments of this application may be a terminal device, or may be a functional module that is in a terminal device and that can invoke and execute the program.

For ease of understanding embodiments of this application, several basic concepts in embodiments of this application are briefly described.

1. Time-frequency resource

In embodiments of this application, data or information may be carried by using a time-frequency resource. The time-frequency resource may include a resource in time domain (namely, a time domain resource) and a resource in frequency domain (namely, a frequency domain resource). The time-frequency resource may include one or more time domain units (which may also be referred to as a time unit, a unit of time, or the like), and the frequency domain resource may include one or more frequency domain units.

One time domain unit may be one symbol or several symbols (for example, an orthogonal frequency division multiplexing (orthogonal frequency division multiplexing, OFDM) symbol), one slot (slot), one mini-slot (mini-slot), or one subframe (subframe). One slot may include seven symbols or 14 symbols. One mini-slot may include at least one symbol (for example, two symbols, seven symbols, 14 symbols, or any quantity of symbols less than or equal to 14 symbols). In addition, duration of a slot may be related to a subcarrier spacing (subcarrier spacing, SCS). For example, when the subcarrier spacing is 15 kHz, duration of one slot is 1 millisecond (ms); when the subcarrier spacing is 30 kHz, duration of one slot is 0.5 ms; or when the subcarrier spacing is 60 kHz, duration of one slot is 0.25 ms. Similarly, it may be deduced that when the subcarrier spacing is $15*2^u$, duration of one slot is $2^{-u}$ ms, where u=0, 1, 2, .... It should be understood that the listed sizes of the foregoing time domain units are merely used for ease of understanding the solutions of this application, and do not constitute any limitation on the protection scope of this application. It can be understood that the sizes of the foregoing time domain units may be other values, and are not limited in this application.

A frequency domain unit may be one resource block (resource block, RB), one resource block set (resource block set), one subcarrier (subcarrier), one resource block group (resource block group, RBG), one predefined subband (subband), one precoding resource block group (precoding resource block group, PRG), one bandwidth part (bandwidth part, BWP), one resource element (resource element, RE) (which may also be referred to as a resource element), one channel with a given bandwidth, one carrier, or one serving cell.

2. Transient period (transient period, TP)

The TP is a stable time period needed by a radio frequency component of a device to perform power adjustment between adjacent transmit signals in time domain due to different transmit powers and the like. The TP may be applied when there is a power change or RB hopping in a continuous power transmission scenario. When a UE indicates a TP capability of the UE, a value of the TP may be 0, 2, 4, or 7 microseconds ($\mu s$). If the UE does not indicate the TP capability of the UE, a default value of 10 $\mu s$ may be used.

Optionally, in a case of RB hopping, a value of $tp_{start}$ is specified, indicating a start location of the TP. When the value of the TP is 10 $\mu s$, the TP is symmetrically shared. If the UE indicates that the TP capability of the UE is 2, 4, or 7 $\mu s$, for the start location $tp_{start}$ of the TP, refer to Table 1.

Table 1

| TP ($\mu s$) | $tp_{start}$ |
|---|---|
| 2 | -0.5 |

(continued)

| TP ($\mu s$) | tp$_{start}$ |
|---|---|
| 4 | -1 |
| 7 | -2.7 |

A negative value in Table 1 indicates that the TP starts before a symbol boundary -0.

3. Priority

A service priority of a UE is specifically a transmission priority (transmission priority) of the UE. The UE may send a plurality of services at the same time, and priorities of the plurality of services may be different. Therefore, the transmission priority of the UE may also be described as the service priority of the UE.

The service priority may also be referred to as an L1 priority (L1 priority), a physical layer priority, a priority carried in sidelink control information (sidelink control information, SCI), a priority corresponding to a physical sidelink shared channel (physical sidelink shared channel, PSSCH) associated with SCI, the transmission priority, a priority of sending a PSSCH, a priority for resource determining, a priority of a logical channel, or a highest-level priority of a logical channel. There may be a correspondence between a priority level and a priority value. For example, a higher priority level is corresponding to a smaller priority value, or a lower priority level is corresponding to a smaller priority value. In an example in which a higher priority level is corresponding to a smaller priority value, the priority value may be an integer ranging from 1 to 8 or an integer ranging from 0 to 7. If the priority value ranges from 1 to 8, a priority value 1 indicates a highest-level priority.

Standardization work is being carried out on sidelink (sidelink, SL) positioning by using a 5th generation mobile communication technology (5th generation, 5G), to improve positioning accuracy between devices through SL positioning.

In the SL positioning technology, a terminal device may continuously send a plurality of messages in time domain. In some cases, the terminal device may need a transient period (transient period, TP) to switch between transmit powers for the plurality of messages. Consequently, resource utilization is low.

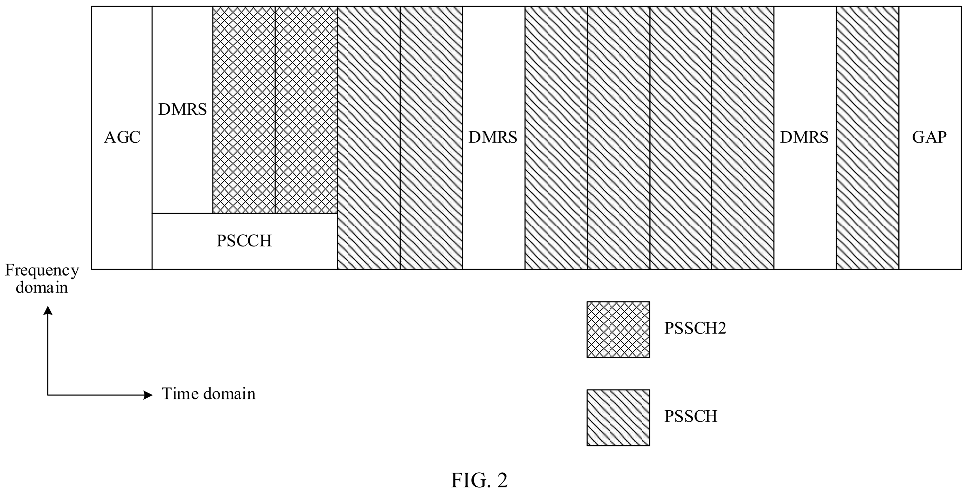

For example, FIG. 2 shows an SL slot structure. As shown in FIG. 2, the slot structure includes a time domain resource occupied by a channel that carries a demodulation reference signal (demodulation reference signal, DMRS), a time domain resource occupied by a physical sidelink control channel (physical sidelink control channel, PSCCH), a time domain resource occupied by a physical sidelink shared channel (physical sidelink shared channel, PSSCH), a time domain resource occupied by a PSSCH2, a time domain resource for automatic gain control (automatic gain control, AGC) processing, and a time domain gap (GAP). The time domain resources are consecutive.

In the slot structure shown in FIG. 2, powers of messages sent on channels such as the PSSCH, the PSSCH2, and the PSCCH are separately determined. In this case, a TP is needed to switch a transmit power for each message. Because the TP occupies a specific time domain resource, resource utilization is low.

This application provides a communication method and apparatus. A plurality of messages are sent by using a same power, so that a TP is not needed for power switching, and therefore resource utilization can be improved.

For ease of understanding embodiments of this application, the following descriptions are provided. First, in this application, "used to indicate" may include "directly indicate" and "indirectly indicate". When a piece of indication information is used to indicate A, the indication information may directly indicate A or indirectly indicate A, but it does not indicate that the indication information definitely carries A.

Information indicated by indication information is referred to as to-be-indicated information. In a specific implementation process, there are many manners of indicating the to-be-indicated information, for example, but not limited to, the following manners: The to-be-indicated information may be directly indicated, for example, the to-be-indicated information or an index of the to-be-indicated information may be indicated. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or is agreed in advance. For example, alternatively, specific information may be indicated by using a sorting order of a variety of information agreed in advance (for example, specified in a protocol), to reduce indication overheads to some extent. In addition, common parts of all pieces of information may be further identified and then indicated together, to reduce indication overheads caused by separately indicating same information.

Second, "at least one" described in this application means one or more, and "a plurality of" means two or more. In addition, in embodiments of this application, "first", "second", and various numeric numbers (for example, "#1" and "#2") are merely used for differentiation for ease of description, and are not intended to indicate a definite difference and are not intended to limit the scope of embodiments of this application. Sequence numbers of the following processes do not mean execution sequences. The execution sequences of the processes should be determined based on functions and internal logic of the processes, and should not be construed as any limitation on the implementation processes of embodiments of this application. It should be understood that objects described in such a manner are interchangeable in proper circumstances, to describe solutions other than embodiments of this application. Moreover, in embodiments of this application, words such as "510", "610", and "810" are merely identifiers for ease of description, and do not limit a sequence of performing steps.

Third, in embodiments of this application, a term "example", "for example", or the like is used to represent giving an example, an illustration, or a description. Any embodiment or design scheme described as "example" or "for example" in this application should not be construed as being preferred or having more advantages over other embodiments or design schemes. To be precise, use of the term "example", "for example", or the like is intended to present a related concept in a specific manner.

Fourth, in embodiments of this application, "protocols" may be standard protocols in the communication field, and may include, for example, an NR protocol and a related protocol applied to a future communication system. This is not limited in this application.

Fifth, in embodiments of this application, "of (of)", "corresponding or relevant (corresponding, relevant)"," corresponding (corresponding)", and "associate (associate)" may sometimes be used interchangeably. It should be noted that meanings expressed by the terms are consistent when differences between the terms are not emphasized.

Sixth, in embodiments of this application, "A is associated with B" can be understood as "A changes with B", can be understood as "B needs to be used when A is determined", or can be understood as "A is determined based on B".

Seventh, a term "at least one of", "at least one type of", or "at least one item of" in this specification indicates all of or any combination of the listed items. For example, "at least one of A, B, and C" may indicate the following six cases: Only A exists, only B exists, only C exists, both A and B exist, both B and C exist, and A, B and C all exist. In this specification, "at least one" means one or more, and "a plurality of" means two or more.

Ninth, in this application, a configuration may be a dynamic configuration (configured) performed by a network device by using signaling or a message, or may be a preconfiguration (preconfigured), that is, may be implemented by pre-storing corresponding code or a corresponding table in a device (for example, a terminal device) or in another manner that may be used to indicate related information. A specific implementation of the configuration is not limited in this application. In this application, unless otherwise specified, "configuration" may be generally construed as any one of the foregoing cases.

With reference to the accompanying drawings, the following details communication methods provided in embodiments of this application. Embodiments provided in this application are applicable to any communication scenario in which a transmit end device communicates with a receive end device, for example, can be applied to the SL communication system shown in FIG. 1.

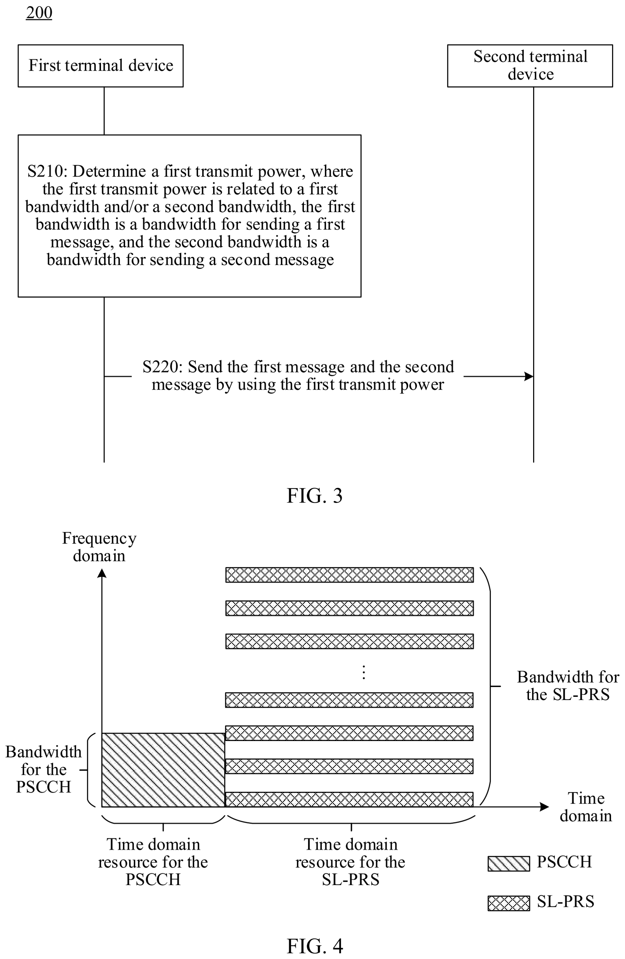

FIG. 3 is a schematic flowchart of a communication method 200 according to an embodiment of this application. As shown in FIG. 3, the method includes a plurality of steps as follows.

S210: A first terminal device determines a first transmit power.

The first transmit power is related to a first bandwidth and/or a second bandwidth, the first bandwidth is a bandwidth for sending a first message, and the second bandwidth is a bandwidth for sending a second message.

In this application, "a bandwidth for sending a message" can be understood as a bandwidth occupied by a channel that carries a message. The bandwidth may be a size of a resource block (resource block, RB) occupied by the message, or may be a bandwidth occupied for sending the message. A unit of the bandwidth occupied for sending the message may be Hertz (Hz), and kHz, or MHz. Optionally, a quantity of RBs occupied by the message and the bandwidth occupied by the message may be considered as different units of the bandwidth that are used for describing the message. For example, the quantity of RBs occupied by the message and the bandwidth occupied by the message may be mutually converted. For example, when one RB includes 12 REs, a bandwidth corresponding to one RB is $1*12*2^\mu*15$ kHz. If the quantity of RBs occupied by the message is one RB, the bandwidth occupied by the message is $*12*2^\mu*15$ kHz. $\mu$ indicates a subcarrier spacing. For example, $\mu=0$ indicates that the subcarrier spacing is 15 kHz, $\mu=1$ indicates that the subcarrier spacing is 30 kHz, $\mu=2$ indicates that the subcarrier spacing is 60 kHz, and $\mu=3$ indicates that the subcarrier spacing is 120 kHz.

Optionally, the first bandwidth is different from the second bandwidth. In other words, the first terminal device sends the first message and the second message by using different bandwidths.

It should be understood that the first bandwidth may be indicated by a network device to the first terminal device, or may be preconfigured. Similarly, the second bandwidth may be indicated by the network device to the first terminal device, or may be preconfigured.

In this application, "the first transmit power is related to the first bandwidth and/or the second bandwidth" can be understood as "changes of the first bandwidth and the second bandwidth affect the first transmit power", "the first transmit power is determined based on the first bandwidth and the second bandwidth", "a change of the first bandwidth affects the first transmit power", "the first transmit power is determined based on the first bandwidth", "a change of the second bandwidth affects the first transmit power", or "the first transmit power is determined based on the second bandwidth".

A "transmit power" may be measured in decibels relative to one watt (decibels relative to one watt, dB), watts (watts, W), decibels relative to one milliwatt (decibels relative to one milliwatt, dBm), or milliwatts (milliwatts, mW). In other words, a value of the transmit power may be represented by a logarithmic value (may be in units of dBm), or may be represented by a linear value (may be in units of mW). dBm indicates an absolute value or logarithmic value of a power. Conversion between any linear value Q (mW) and logarithmic value x (dBm) of a power satisfies the following: $x = 10\log_{10}(Q)$. For example, if Q=200 mW, a logarithmic value x of Q is 23 dBm. Optionally, the "transmit power" may be a value for a single frequency domain transmission resource (for example, an RB), or may be a value for an entire transmission bandwidth. Whether a power in embodiments of this application is a logarithmic value or a linear value may be determined based on a unit of the power.

Optionally, in this application, the first message and the second message are consecutive in time domain, a time-frequency resource for the first message and a time-frequency resource for the second message are consecutive, or a time-frequency resource for sending the first message and a time-frequency resource for sending the second message are consecutive. "Consecutive" may mean that there is no transmission time interval between a sending resource for the first message and a sending resource for the second message. Alternatively, "consecutive" may mean that a last symbol occupied by the sending resource for the first message is adjacent to a 1st symbol occupied by the sending resource for the second message in time domain.

Optionally, a time domain resource for the first message and a time domain resource for the second message are located in a same time domain unit. For example, the time domain resource for the first message and the time domain resource for the second message are adjacent in one slot, and the first message and the second message are arranged in a time-division multiplexing (time-division multiplexing, TDM) manner.

Optionally, the time domain resource for the first message is located before the time domain resource for the second message. For example, the first message indicates transmission parameters of the second message, such as scheduling information. For example, the scheduling information may be one or more of the following: indication information of the time domain resource for transmitting the second message, indication information of a frequency domain resource for transmitting the second message, a priority of the second message, reservation period indication information of the second message, modulation and coding scheme (modulation and coding scheme, MCS) indication information of the second message, source identifier indication information corresponding to the second message, destination identifier indication information corresponding to the second message, and the like.

In this application, "a time domain resource for a message" can be understood as "a time domain resource for sending a message", and the two descriptions may be mutually replaced. This is not limited.

In this application, "a bandwidth for a message" and "a channel bandwidth" may be mutually replaced, and "a time-frequency resource for a message" and "a channel time-frequency resource" may be mutually replaced. The channel is a channel carrying a message. For example, if the first message is carried on a PSCCH, the bandwidth for the first message can be understood as a bandwidth for the PSCCH, and the time domain resource for the first message can be understood as the bandwidth for the PSCCH. For another example, if the second message is a PRS, the bandwidth for the first message can be understood as a bandwidth for the PSCCH, and the time domain resource for the first message can be understood as the bandwidth for the PSCCH.

For example, the first message is carried on the PSCCH, and the second message is a positioning reference signal (positioning reference signal, PRS). When the PRS is used for an SL, the PRS may be referred to as "a PRS used for an SL" or a "sidelink positioning reference signal", or may be referred to as an "SL-PRS" for short. Optionally, the SL-PRS is a short form of a positioning reference signal used for a sidelink, and the positioning reference signal used for the sidelink may also be written as an SLPRS, an SPRS, an S-PRS, or another form. In this application, the SL-PRS represents the positioning reference signal used for the sidelink. It should be understood that a specific short form of the positioning reference signal used for the sidelink does not constitute any limitation on the protection scope of this application.

FIG. 4 is a diagram of a slot structure in which an SL-PRS and a PSCCH are jointly transmitted. As shown in FIG. 4, a time domain resource for the PSCCH and a time domain resource for the SL-PRS are consecutive, that is, there is no time interval between the time domain resource for the PSCCH and the time domain resource for the SL-PRS, and a sending occasion of the PSCCH is earlier than a sending occasion of the SL-PRS. The PSCCH may carry sidelink control information (sidelink control information, SCI), which may indicate transmission parameters of the SL-PRS, for example, indication information of the time domain resource for the SL-PRS, indication information of a frequency domain resource for the SL-PRS, a priority of the SL-PRS, reservation period indication information of the SL-PRS, source identifier indication information corresponding to the SL-PRS, destination identifier indication information corresponding to the SL-PRS, and the like.

Optionally, the first message and the second message in this application may be different messages, or may be different parts of a message.

S220: The first terminal device sends the first message and the second message to a second terminal device by using the first transmit power, and correspondingly the second terminal device receives the first message and the second message.

In other words, the first terminal device sends the first message and the second message by using a same transmit power. To be specific, after determining the first transmit power, the first terminal device sends the first message and the second message by using the first transmit power.

According to the solution provided in this application, the first terminal device may send the first message and the second message by using the same transmit power, so that a transient period TP is not needed for power switching between the messages, and therefore time domain resource utilization can be improved.

Optionally, the first transmit power may be determined based on the first message, or may be determined based on the second message. For example, the first transmit power may be a transmit power for the first message. For another example, the first transmit power may be a transmit power for the second message.

In an implementation, the method 200 may further include: The first terminal device obtains first configuration information or second configuration information, where the first configuration information indicates the first terminal device to determine the first transmit power based on the first message or to determine the first transmit power based on a message with a higher priority in the first message and the second message , and the second configuration information indicates the first terminal device to determine the first transmit power based on the second message or to determine the first transmit power based on the message with the higher priority in the first message and the second message.

For example, the first configuration information or the second configuration information may be from the network device.

Optionally, that a first terminal device determines a first transmit power in S210 includes: The first terminal device determines a first parameter, where the first parameter is related to the first bandwidth and/or the second bandwidth, and the first transmit power is related to the first parameter.

In other words, the first terminal device may first determine the first parameter, and then determine the first transmit power.

For example, "the first parameter is related to the first bandwidth and/or the second bandwidth" can be understood as "the first parameter changes with the first bandwidth and the second bandwidth", "the first parameter is determined based on the first bandwidth and the second bandwidth", "the first parameter changes with the first bandwidth", "the first parameter is determined based on the first bandwidth", "the first parameter changes with the second bandwidth", or "the first parameter is determined based on the second bandwidth". "The first transmit power is related to the first parameter" can be understood as "the first transmit power changes with the first parameter", or "the first transmit power is determined based on the first parameter".

The first parameter may be determined based on any one of the following:

(1) a larger value of the first bandwidth and the second bandwidth;
(2) a smaller value of the first bandwidth and the second bandwidth;
(3) the first bandwidth, the second bandwidth, and a frequency domain interval for sending the first message and/or a frequency domain interval for sending the second message;
(4) the first bandwidth, the second bandwidth, and a subcarrier spacing for sending the first message and/or a subcarrier spacing for sending the second message;
(5) the first bandwidth, the second bandwidth, a subcarrier spacing for sending the first message and/or a subcarrier spacing for sending the second message, and a frequency domain interval for sending the first message and/or a frequency domain interval for sending the second message;
(6) the first bandwidth;
(7) the second bandwidth; or
(8) a bandwidth for the message with the higher priority in the first message and the second message.

For example, the first parameter is the larger value of the first bandwidth and the second bandwidth. For another example, the first parameter is the smaller value of the first bandwidth and the second bandwidth.

For another example, the first parameter is jointly determined by the first bandwidth, the second bandwidth, and the frequency domain interval for sending the first message and/or the frequency domain interval for sending the second message.

For another example, the first parameter is jointly determined by the first bandwidth, the second bandwidth, and the subcarrier spacing for sending the first message and/or the subcarrier spacing for sending the second message.

For another example, the first parameter is jointly determined by the first bandwidth, the second bandwidth, the subcarrier spacing for sending the first message and/or the subcarrier spacing for sending the second message, and the frequency domain interval for sending the first message and/or the frequency domain interval for sending the second message.

For another example, the first parameter is the first bandwidth.

For another example, the first parameter is the second bandwidth.

For another example, the first parameter is the bandwidth for the message with the higher priority in the first message and the second message.

In an example, both the first bandwidth and the second bandwidth are RB sizes occupied by the messages. In this case, the first bandwidth at a transmission moment $i$ is represented as $M^{msg1}(i)$, and the second bandwidth at the transmission moment $i$ is represented as $M^{msg2}(i)$. Correspondingly, the first parameter is as follows:

(1) That the first parameter is the larger value of the first bandwidth and the second bandwidth may mean that the first parameter is $max(M^{msg1}(i),M^{msg2}(i))$.

(2) That the first parameter is the smaller value of the first bandwidth and the second bandwidth may mean that the first parameter is $min(M^{msg1}(i),M^{msg2}(i))$.

(3) That the first parameter is jointly determined by the first bandwidth, the second bandwidth, and the frequency domain interval for sending the first message and/or the frequency domain interval for sending the second message may mean that the first parameter is $max(M^{msg1}(i),M^{msg2}(i) / N)$ or $min(M^{msg1}(i),M^{msg2}(i) / N)$.

(4) That the first parameter is jointly determined by the first bandwidth, the second bandwidth, and the subcarrier spacing for sending the first message and/or the subcarrier spacing for sending the second message may mean that the first parameter is $max(2^{\mu} \cdot M^{msg1}(i),2^{\mu} \cdot M^{msg2}(i))$ or $min(2^{\mu} \cdot M^{msg1}(i), 2^{\mu} \cdot M^{msg2}(i))$.

(5) That the first parameter is jointly determined by the first bandwidth, the second bandwidth, the subcarrier spacing for sending the first message and/or the subcarrier spacing for sending the second message, and the frequency domain interval for sending the first message and/or the frequency domain interval for sending the second message may mean that the first parameter is $max(2^{\mu} \cdot M^{msg1}(i), 2^{\mu} \cdot M^{msg2}(i) / N)$ or $min(2^{\mu} \cdot M^{msg1}(i),2^{\mu} \cdot M^{msg2}(i) / N)$.

(6) That the first parameter is the first bandwidth may mean that the first parameter is $M^{msg1}(i)$.

(7) That the first parameter is the second bandwidth may mean that the first parameter is $M^{msg2}(i)$.

(8) That the first parameter is the bandwidth for the message with the higher priority in the first message and the second message may mean that the first parameter is $M^{msgx}(i)$, where $M^{msgx}(i)$ represents the bandwidth for the message with the higher priority in the first message and the second message at the transmission moment $i$, and $M^{msgx}(i) = M^{msg1}(i)$ or $M^{msgx}(i) = M^{msg2}(i)$.

In this application, $max()$ represents taking a maximum value from a plurality of numerals, $min()$ represents taking a minimum value from a plurality of numerals, $\mu$ is the subcarrier spacing for sending the first message and/or the subcarrier spacing for sending the second message by the first terminal device, and $N$ is the frequency domain interval for sending the first message and/or the frequency domain interval for sending the second message.

In another example, both the first bandwidth and the second bandwidth are bandwidths occupied for sending the messages. In this case, the first bandwidth at a transmission moment $i$ is represented as $2^{\mu} \cdot M^{msg1}(i)$, and the second bandwidth at the transmission moment $i$ is represented as $2^{\mu} \cdot M^{msg2}(i)$. Correspondingly, the first parameter is as follows:

(1) That the first parameter is the larger value of the first bandwidth and the second bandwidth may mean that the first parameter is $max(2^{\mu} \cdot M^{msg1}(i), 2^{\mu} \cdot M^{msg2}(i))$.

(2) That the first parameter is the smaller value of the first bandwidth and the second bandwidth may mean that the first parameter is $min(2^{\mu} \cdot M^{msg1}(i), 2^{\mu} \cdot M^{msg2}(i))$.

(3) That the first parameter is jointly determined by the first bandwidth, the second bandwidth, and the frequency domain interval for sending the first message and/or the frequency domain interval for sending the second message may mean that the first parameter is $max(2^{\mu} \cdot M^{msg1}(i), 2^{\mu} \cdot M^{msg2}(i) / N)$ or $min(2^{\mu} \cdot M^{msg1}(i), 2^{\mu} \cdot M^{msg2}(i) / N)$.

(4) That the first parameter is jointly determined by the first bandwidth, the second bandwidth, and the subcarrier spacing for sending the first message and/or the subcarrier spacing for sending the second message may mean that the first parameter is $max(2^{\mu} \cdot M^{msg1}(i) / 2^{\mu}, 2^{\mu} \cdot M^{msg2}(i) / 2^{\mu})$ or $min(2^{\mu} \cdot M^{msg1}(i) / 2^{\mu}, 2^{\mu} \cdot M^{msg2}(i) / 2^{\mu})$, that is, the first parameter is $max(M^{msg1}(i), M^{msg2}(i))$ or $min(M^{msg1}(i), M^{msg2}(i))$.

(5) That the first parameter is jointly determined by the first bandwidth, the second bandwidth, and the frequency domain interval for sending the first message and/or the frequency domain interval for sending the second message may mean that the first parameter is $max(2^{\mu} \cdot M^{msg1}(i) / 2^{\mu}, 2^{\mu} \cdot M^{msg2}(i) / 2^{\mu} / N)$ or $min(2^{\mu} \cdot M^{msg1}(i) / 2^{\mu}, 2^{\mu} \cdot M^{msg2}(i) / 2^{\mu} / N)$, that is, the first parameter is $max(M^{msg1}(i),M^{msg2}(i) / N)$ or $min(M^{msg1}(i),M^{msg2}(i) / N)$.

(6) That the first parameter is the first bandwidth may mean that the first parameter is $2^{\mu} \cdot M^{msg1}(i)$.

(7) That the first parameter is the second bandwidth may mean that the first parameter is $2^{\mu} \cdot M^{msg2}(i)$.

(8) That the first parameter is the bandwidth for the message with the higher priority in the first message and the second message may mean that the first parameter is $2^{\mu} \cdot M^{msgx}(i)$, where $2^{\mu} \cdot M^{msgx}(i)$ represents the bandwidth for the message with the higher priority in the first message and the second message at the transmission moment $i$, and $2^{\mu} \cdot M^{msgx}(i) = 2^{\mu} \cdot M^{msg1}(i)$ or $2^{\mu} \cdot M^{msgx}(i) = 2^{\mu} \cdot M^{msg2}(i)$.

The following uses an example in which both the first bandwidth and the second bandwidth are RB sizes occupied by the messages for description.

In an example, the first message is carried on a PSCCH, and the second message is an SL-PRS. In this case, the first parameter A satisfies any one of the following conditions:

$$A = max\left(M_{RB}^{PSCCH}(i), M_{RB}^{SL-PRS}(i)\right);$$

$$A = max\left(M_{RB}^{PSCCH}(i), M_{RB}^{SL-PRS}(i) / N_{comb}\right);$$

$$A = min\left(M_{RB}^{PSCCH}(i), M_{RB}^{SL-PRS}(i)\right);$$

$$A = min\left(M_{RB}^{PSCCH}(i), M_{RB}^{SL-PRS}(i) / N_{comb}\right);$$

$$A = max\left(2^{\mu} \cdot M_{RB}^{PSCCH}(i), 2^{\mu} \cdot M_{RB}^{SL-PRS}(i)\right);$$

$$A = max\left(2^{\mu} \cdot M_{RB}^{PSCCH}(i), 2^{\mu} \cdot M_{RB}^{SL-PRS}(i) / N_{comb}\right);$$

$$A = min\left(2^{\mu} \cdot M_{RB}^{PSCCH}(i), 2^{\mu} \cdot M_{RB}^{SL-PRS}(i)\right);$$

$$A = min\left(2^{\mu} \cdot M_{RB}^{PSCCH}(i), 2^{\mu} \cdot M_{RB}^{SL-PRS}(i) / N_{comb}\right);$$

$$A = M_{RB}^{PSCCH}(i);$$

$$A = 2^{\mu} \cdot M_{RB}^{PSCCH}(i);$$

$$A = M_{RB}^{SL-PRS}(i);$$

$$A = 2^{\mu} \cdot M_{RB}^{SL-PRS}(i);$$

$$A = M_{RB}^{x}(i);$$

and

$$A = 2^{\mu} \cdot M_{RB}^{x}(i),$$

where

$M_{RB}^{PSCCH}(i)$ represents the first bandwidth at the transmission moment $i$, $M_{RB}^{SL-PRS}(i)$ represents the second bandwidth at the transmission moment $i$, $M_{RB}^{x}(i)$ represents the bandwidth for the message with the higher priority in the message carried on the PSCCH and the SL-PRS at the transmission moment $i$, $\mu$ is the subcarrier spacing for sending the PSCCH and/or the subcarrier spacing for sending the SL-PRS by the first terminal device, and $N_{comb}$ is the frequency domain interval for sending the SL-PRS; in other words, when the second message is the SL-PRS, the frequency domain interval $N$ for sending the second message may be represented as $N_{comb}$.

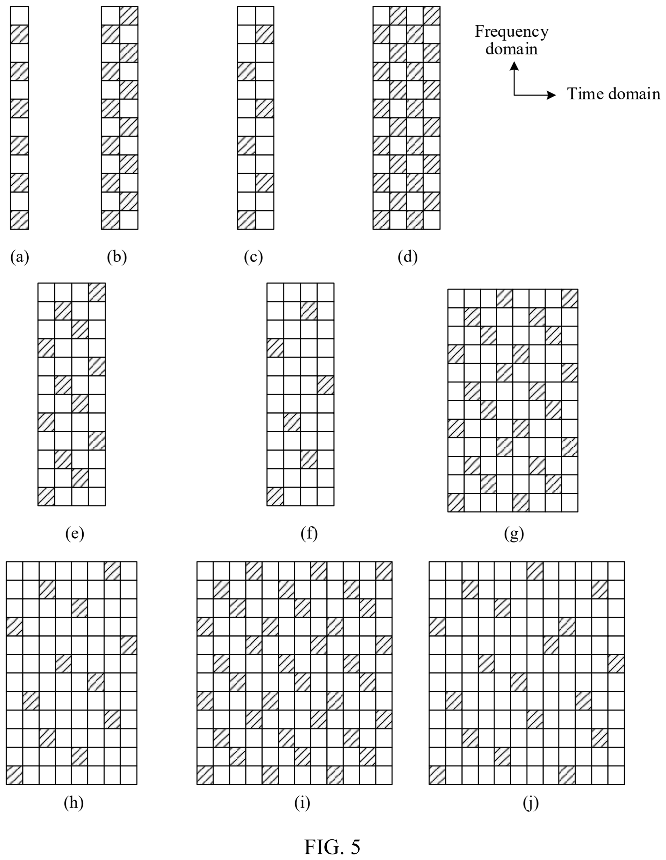

FIG. 5 is a diagram of several time-frequency patterns (patterns) of SL-PRSs. In the figure, one small square represents one RE, shadow parts represent REs occupied by the SL-PRSs, horizontal axes represent time domain, and vertical axes represent frequency domain.

(a) in FIG. 5 shows a time-frequency mapping pattern of SL-PRSs when a frequency domain interval is 2 and one symbol is occupied.

(b) in FIG. 5 shows a time-frequency mapping pattern of SL-PRSs when a frequency domain interval is 2 and two symbols are occupied.

(c) in FIG. 5 shows a time-frequency mapping pattern of SL-PRSs when a frequency domain interval is 4 and two symbols are occupied.

(d) in FIG. 5 shows a time-frequency mapping pattern of SL-PRSs when a frequency domain interval is 2 and four symbols are occupied.

(e) in FIG. 5 shows a time-frequency mapping pattern of SL-PRSs when a frequency domain interval is 4 and four symbols are occupied.

(f) in FIG. 5 shows a time-frequency mapping pattern of SL-PRSs when a frequency domain interval is 8 and one symbol is occupied.

(g) in FIG. 5 shows a time-frequency mapping pattern of SL-PRSs when a frequency domain interval is 4 and eight symbols are occupied.

(h) in FIG. 5 shows a time-frequency mapping pattern of SL-PRSs when a frequency domain interval is 8 and eight symbols are occupied.

(i) in FIG. 5 shows a time-frequency mapping pattern of SL-PRSs when a frequency domain interval is 4 and 12 symbols are occupied.

(j) in FIG. 5 shows a time-frequency mapping pattern of SL-PRSs when a frequency domain interval is 8 and 12 symbols are occupied.

The frequency domain interval $N_{comb}$ for sending the SL-PRS means that one SL-PRS is placed on every N REs in frequency domain, and no signal is placed on the other N-1 REs. For example, in (a), (b), and (d) in FIG. 5, one SL-PRS is placed on every two REs in frequency domain, and therefore the frequency domain interval is 2. For another example, in (c), (e), (g), and (i) in FIG. 5, one SL-PRS is placed on every four REs in frequency domain, and therefore the frequency domain interval is 4. For another example, in (f), (h), and (j) in FIG. 5, one SL-PRS is placed on every eight REs in frequency domain, and therefore the frequency domain interval is 8. It should be understood that in this application, the frequency domain interval $N_{comb}$ for sending the SL-PRS can also be understood as a comb size represented as $K_{TC}$.

In addition, if resources occupied by a message are contiguous in frequency domain, it may be considered that a frequency domain interval for the message is 1. For example, resources occupied by the PSCCH are contiguous in frequency domain. Therefore, a frequency domain interval for the PSCCH is 1.

According to any one of (a) to (j) in FIG. 5, it can be understood that an actual quantity of RBs occupied by SL-PRSs is 1/N of a quantity of RBs shown in the figure. In this application, the quantity of RBs shown in the figure may be referred to as a quantity of RBs occupied by the messages or a total quantity of RBs occupied by the messages, and the quantity of RBs occupied by the messages divided by the frequency domain interval $N$ for sending the message can be understood as the actual quantity of RBs occupied by the messages. Similarly, a bandwidth occupied by the messages divided by the frequency domain interval $N$ for sending the message can be understood as an actual bandwidth occupied by the messages. For example, in (b) in FIG. 5, a quantity of RBs occupied by the SL-PRSs (or referred to as a total quantity of RBs occupied by the SL-PRSs) is 2 RBs, and the frequency domain interval is 2. In this case, an actual quantity of RBs occupied by the SL-PRSs shown in (b) in FIG. 5 is 2/2=1 RB. For another example, in (c) in FIG. 5, a quantity of RBs occupied by the SL-PRSs (or referred to as a total quantity of RBs occupied by the SL-PRSs) is 2 RBs, and the frequency domain interval is 4. In this case, an actual quantity of RBs occupied by the SL-PRSs shown in (c) in FIG. 5 is 2/4=0.5 RB, that is, the actual quantity of RBs occupied by the messages is 1/N of the total quantity of occupied RBs. Similarly, the actual bandwidth occupied by the messages is also 1/N of the total bandwidth occupied by the messages.

Based on the foregoing definitions, if $M_{RB}^{SL-PRS}(i)$ represents a total RB size occupied for sending the SL-PRS at the transmission moment $i$, $M_{RB}^{SL-PRS}(i)/N_{comb}$ can be understood as an actual quantity of RBs occupied for sending the SL-PRS, $2^{\mu} \cdot M_{RB}^{PSCCH}(i)$ and $2^{\mu} \cdot M_{RB}^{SL-PRS}(i)$ respectively represent total bandwidths occupied for sending the PSCCH and the SL-PRS, and $2^{\mu} \cdot M_{RB}^{SL-PRS}(i) / N_{comb}$ can be understood as an actual bandwidth occupied for sending the SL-PRS.

When the first parameter is $A = max\left(M_{RB}^{PSCCH}(i), M_{RB}^{SL-PRS}(i)\right)$, $M_{RB}^{PSCCH}(i)$ and $M_{RB}^{SL-PRS}(i)$ respectively represent total quantities of RBs occupied by the PSCCH and the SL-PRS. In other words, the first transmit power may be determined based on a larger value of the total quantity of RBs occupied by the PSCCH and the total quantity of RBs occupied by the SL-PRS. In this way, a maximum transmit power can be obtained, and performance of sending the PSCCH and the SL-PRS can be improved. In addition, because the two messages both use the total quantities of RBs for the two messages, a process of determining the first transmit power is simpler.

When the first parameter is $A = max\left(M_{RB}^{PSCCH}(i), M_{RB}^{SL-PRS}(i) / N_{comb}\right)$, $M_{RB}^{PSCCH}(i)$ and $M_{RB}^{SL-PRS}(i) / N_{comb}$ respectively represent a total quantity of RBs occupied by the PSCCH and the actual quantity of RBs occupied by the SL-PRS. In other words, the first transmit power may be determined based on a larger value of the total quantity of RBs occupied by the PSCCH and the actual quantity of RBs occupied by the SL-PRS. In this way, a maximum transmit power can be obtained, and performance of sending the PSCCH and the SL-PRS can be improved. In addition, because the actual quantity of RBs occupied by the SL-PRS is used, a determining result of the first transmit power is more accurate.

When the first parameter is $A = min\left(M_{RB}^{PSCCH}(i), M_{RB}^{SL-PRS}(i)\right)$, $M_{RB}^{PSCCH}(i)$ and $M_{RB}^{SL-PRS}(i)$ respectively represent total quantities of RBs occupied by the PSCCH and the SL-PRS. In other words, the first transmit power may be determined based on a smaller value of the total quantity of RBs occupied by the PSCCH and the total quantity of RBs occupied by the SL-PRS. In this way, a most conservative transmit power can be obtained, and performance of sending the PSCCH and the SL-PRS can be ensured. In addition, because the two messages both use the total quantities of RBs for the two messages, a process of determining the first transmit power is simpler.

When the first parameter is $A = min\left(M_{RB}^{PSCCH}(i), M_{RB}^{SL-PRS}(i) / N_{comb}\right)$, $M_{RB}^{PSCCH}(i)$ and $M_{RB}^{SL-PRS}(i) / N_{comb}$ respectively represent a total quantity of RBs occupied by the PSCCH and the actual quantity of RBs occupied by the SL-PRS. In other words, the first transmit power may be determined based on a smaller value of the total quantity of RBs occupied by the PSCCH and the actual quantity of RBs occupied by the SL-PRS. In this way, a most conservative transmit power can be obtained, and performance of sending the PSCCH and the SL-PRS can be ensured. In addition, because the actual quantity of RBs occupied by the SL-PRS is used, a determining result of the first transmit power is more accurate.

When the first parameter is $A = max\left(2^{\mu} \cdot M_{RB}^{PSCCH}(i), 2^{\mu} \cdot M_{RB}^{SL-PRS}(i)\right)$, $2^{\mu} \cdot M_{RB}^{PSCCH}(i)$ and $2^{\mu} \cdot M_{RB}^{SL-PRS}(i)$ respectively represent the total bandwidths occupied by the PSCCH and the SL-PRS. In other words, the first transmit power may be determined based on a larger value of the total bandwidth occupied by the PSCCH and the total bandwidth occupied by the SL-PRS. In this way, a maximum transmit power can be obtained, and performance of sending the PSCCH and the SL-PRS can be improved. In addition, because the two messages both use the total bandwidths for the two messages, a process of determining the first transmit power is simpler.

When the first parameter is $A = max\left(2^{\mu} \cdot M_{RB}^{PSCCH}(i), 2^{\mu} \cdot M_{RB}^{SL-PRS}(i) / N_{comb}\right)$, $2^{\mu} \cdot M_{RB}^{PSCCH}(i)$ and $2^{\mu} \cdot M_{RB}^{SL-PRS}(i) / N_{comb}$ respectively represent the total bandwidth occupied by the PSCCH and the actual bandwidth occupied by the SL-PRS. In other words, the first transmit power may be determined based on a larger value of the total bandwidth occupied by the PSCCH and the actual bandwidth occupied by the SL-PRS. In this way, a maximum transmit power can be obtained, and performance of sending the PSCCH and the SL-PRS can be improved. In addition, because the actual bandwidth occupied by the SL-PRS is used, a determining result of the first transmit power is more accurate.

When the first parameter is $A = min\left(2^{\mu} \cdot M_{RB}^{PSCCH}(i), 2^{\mu} \cdot M_{RB}^{SL-PRS}(i)\right)$ , $2^{\mu} \cdot M_{RB}^{PSCCH}(i)$ and $2^{\mu} \cdot M_{RB}^{SL-PRS}(i)$ respectively represent the total bandwidths occupied by the PSCCH and the SL-PRS. In other words, the first transmit power may be determined based on a smaller value of the total bandwidth occupied by the PSCCH and the total bandwidth occupied by the SL-PRS. In this way, a most conservative transmit power can be obtained, and performance of sending the PSCCH and the SL-PRS can be ensured. In addition, because the two messages both use the total bandwidths for the two messages, a process of determining the first transmit power is simpler.

When the first parameter is $A = min\left(2^{\mu} \cdot M_{RB}^{PSCCH}(i), 2^{\mu} \cdot M_{RB}^{SL-PRS}(i) / N_{comb}\right)$ , $2^{\mu} \cdot M_{RB}^{PSCCH}(i)$ and $2^{\mu} \cdot M_{RB}^{SL-PRS}(i) / N_{comb}$ respectively represent the total bandwidth occupied by the PSCCH and the actual bandwidth occupied by the SL-PRS. In other words, the first transmit power may be determined based on a smaller value of the total bandwidth occupied by the PSCCH and the actual bandwidth occupied by the SL-PRS. In this way, a most conservative transmit power can be obtained, and performance of sending the PSCCH and the SL-PRS can be ensured. In addition, because the actual bandwidth occupied by the SL-PRS is used, a determining result of the first transmit power is more accurate.

When the first parameter is $A = M_{RB}^{PSCCH}(i)$ or $A = M_{RB}^{SL-PRS}(i)$ , $M_{RB}^{PSCCH}(i)$ and $M_{RB}^{SL-PRS}(i)$ respectively represent total quantities of RBs occupied by the PSCCH and the SL-PRS. In other words, the first transmit power may be determined based on any one of the total quantity of RBs occupied by the PSCCH or the total quantity of RBs occupied by the SL-PRS. Because the total quantity of RBs for only one message is used, a process of determining the first transmit power is simpler.

When the first parameter is $A = M_{RB}^{x}(i)$ , $M_{RB}^{x}(i)$ represents a total quantity of RBs occupied by the message with the higher priority in the PSCCH and the SL-PRS. In other words, the first transmit power may be determined based on the total quantity of RBs occupied by the message with the higher priority. In this way, performance of transmitting the message with the higher priority can be ensured.

When the first parameter is $A = 2^{\mu} \cdot M_{RB}^{PSCCH}(i)$ or $A = 2^{\mu} \cdot M_{RB}^{SL-PRS}(i)$ , $2^{\mu} \cdot M_{RB}^{PSCCH}(i)$ and $2^{\mu} \cdot M_{RB}^{SL-PRS}(i)$ respectively represent the total bandwidths occupied by the PSCCH and the SL-PRS. In other words, the first transmit power may be determined based on any one of the total bandwidth occupied by the PSCCH or the total bandwidth occupied by the SL-PRS. Because the total bandwidth for only one message is used, a process of determining the first transmit power is simpler.

When the first parameter is $A = 2^{\mu} \cdot M_{RB}^{x}(i)$ , $2^{\mu} \cdot M_{RB}^{x}(i)$ represents a total bandwidth occupied by the message with the higher priority in the PSCCH and the SL-PRS. In other words, the first transmit power may be determined based on the total bandwidth occupied by the message with the higher priority. In this way, performance of transmitting the message with the higher priority can be ensured.

In an implementation scenario, the first terminal device first determines a transmit power for the PSCCH, where the transmit power for the PSCCH is related to the first parameter; and the first terminal device sends the SL-PRS by using a power that is the same as the transmit power for the PSCCH. In other words, the first transmit power is the transmit power for the PSCCH.

In this implementation scenario, the first terminal device may determine the transmit power for the PSCCH in any one of the following manners.

Manner 1: The transmit power $P_{PSCCH}(i)$ for the PSCCH at the transmission moment $i$ satisfies any one of the following formula (1) to formula (12):

$$P_{PSCCH}(i) = min\left(\begin{array}{l} P_{CMAX}, \\ min\left(P_{PSCCH,D}(i), P_{PSCCH,SL}(i)\right) + 10log_{10}(A) - 10log_{10}\left(M_{RB}^{PSCCH}(i)\right) \end{array}\right) \quad (1)$$

$$P_{PSCCH}(i) = min\left(\begin{array}{l} P_{CMAX}, \\ min\left(P_{PSCCH,D}(i), P_{PSCCH,SL}(i)\right) + 10log_{10}(A) - 10log_{10}\left(2^{\mu} \cdot M_{RB}^{PSCCH}(i)\right) \end{array}\right) \quad (2)$$

$$P_{PSCCH}(i) = min\left(\begin{array}{l} P_{CMAX}, \\ min\left(P_{PSCCH,D}(i), P_{PSCCH,SL}(i) + 10log_{10}(A) - 10log_{10}\left(M_{RB}^{PSCCH}(i)\right)\right) \end{array}\right) \quad (3)$$

$$P_{PSCCH}(i) = min\left(\begin{array}{l} P_{CMAX}, \\ min\left(P_{PSCCH,D}(i), P_{PSCCH,SL}(i) + 10log_{10}(A) - 10log_{10}\left(2^{\mu} \cdot M_{RB}^{PSCCH}(i)\right)\right) \end{array}\right) \quad (4)$$

$$P_{PSCCH}(i) = min\left(\begin{array}{l} P_{CMAX}, \\ P_{MAX,CBR}, \\ min\left(P_{PSCCH,D}(i), P_{PSCCH,SL}(i)\right) + 10log_{10}(A) - 10log_{10}\left(M_{RB}^{PSCCH}(i)\right) \end{array}\right) \quad (5)$$

$$P_{PSCCH}(i) = min\left(\begin{array}{l} P_{CMAX}, \\ P_{MAX,CBR}, \\ min\left(P_{PSCCH,D}(i), P_{PSCCH,SL}(i)\right) + 10log_{10}(A) - 10log_{10}\left(2^{\mu} \cdot M_{RB}^{PSCCH}(i)\right) \end{array}\right) \quad (6)$$

$$P_{PSCCH}(i) = min\left(\begin{array}{l} P_{CMAX}, \\ P_{MAX,CBR}, \\ min\left(P_{PSCCH,D}(i), P_{PSCCH,SL}(i) + 10log_{10}(A) - 10log_{10}\left(M_{RB}^{PSCCH}(i)\right)\right) \end{array}\right) \quad (7)$$

$$P_{PSCCH}(i) = min\left(\begin{array}{l} P_{CMAX}, \\ P_{MAX,CBR}, \\ min\left(P_{PSCCH,D}(i), P_{PSCCH,SL}(i) + 10log_{10}(A) - 10log_{10}\left(2^{\mu} \cdot M_{RB}^{PSCCH}(i)\right)\right) \end{array}\right) \quad (8)$$

$$P_{PSCCH}(i) = min\left(\begin{array}{l} P_{MAX,CBR}, \\ min\left(P_{PSCCH,D}(i), P_{PSCCH,SL}(i)\right) + 10log_{10}(A) - 10log_{10}\left(M_{RB}^{PSCCH}(i)\right) \end{array}\right) \quad (9)$$

$$P_{PSCCH}(i) = min\left(\begin{array}{l} P_{MAX,CBR}, \\ min\left(P_{PSCCH,D}(i), P_{PSCCH,SL}(i)\right) + 10log_{10}(A) - 10log_{10}\left(2^{\mu} \cdot M_{RB}^{PSCCH}(i)\right) \end{array}\right) \quad (10)$$

$$P_{PSCCH}(i) = min\left(\begin{array}{l} P_{MAX,CBR}, \\ min\left(P_{PSCCH,D}(i), P_{PSCCH,SL}(i) + 10log_{10}(A) - 10log_{10}\left(M_{RB}^{PSCCH}(i)\right)\right) \end{array}\right) \quad (11)$$

$$P_{PSCCH}(i) = min\left(\begin{array}{l} P_{MAX,CBR}, \\ min\left(P_{PSCCH,D}(i), P_{PSCCH,SL}(i) + 10log_{10}(A) - 10log_{10}\left(2^{\mu} \cdot M_{RB}^{PSCCH}(i)\right)\right)\end{array}\right) \quad (12)$$

When a parameter dl-P0 is configured, a parameter $P_{PSCCH,D}(i)$ in any one of formula (1) to formula (12) satisfies:

$$P_{PSCCH,D}(i) = P_{O,D} + 10log_{10}\left(2^{\mu} \cdot M_{RB}^{PSCCH}(i)\right) + \alpha_{D} \cdot PL_{D}$$ . When a parameter dl-P0 is not configured, a parameter $P_{PSCCH,D}(i)$ in any one of formula (1) to formula (12) satisfies:

$$P_{PSCCH,D}(i) = min\left(P_{CMAX}, P_{MAX,CBR}\right).$$

A parameter $P_{PSCCH,SL}(i)$ in any one of formula (1) to formula (12) satisfies:

$$P_{PSCCH,SL}(i) = P_{O,SL} + 10log_{10}\left(2^{\mu} \cdot M_{RB}^{PSCCH}(i)\right) + \alpha_{SL} \cdot PL_{SL};$$

or

$$P_{PSCCH,SL}(i) = min\left(P_{CMAX}, P_{PSSCH,D}(i)\right);$$

or

$$P_{PSCCH,SL}(i) = min\left(P_{MAX,CBR}, P_{PSSCH,D}(i)\right).$$

Manner 2: The transmit power $P_{PSCCH}(i)$ for the PSCCH at the transmission moment $i$ satisfies any one of the following formula (13) to formula (15):

$$P_{PSCCH}(i) = min\left(\begin{array}{l} P_{CMAX}, \\ P_{MAX,CBR}, \\ min\left(P_{PSCCH,D}(i), P_{PSCCH,SL}(i)\right)\end{array}\right) \quad (13)$$

$$P_{PSCCH}(i) = min\left(\begin{array}{l} P_{CMAX}, \\ min\left(P_{PSCCH,D}(i), P_{PSCCH,SL}(i)\right)\end{array}\right) \quad (14)$$

$$P_{PSCCH}(i) = min\left(\begin{array}{l} P_{MAX,CBR}, \\ min\left(P_{PSCCH,D}(i), P_{PSCCH,SL}(i)\right)\end{array}\right) \quad (15)$$

When a parameter dl-P0 is configured, a parameter $P_{PSCCH,D}(i)$ in any one of formula (13) to formula (15) satisfies:

$$P_{PSCCH,D}(i) = P_{O,D} + 10log_{10}(A) + \alpha_{D} \cdot PL_{D};$$

or

$$P_{PSCCH,D}(i) = P_{O,D} + 10log_{10}\left(2^{\mu} \cdot M_{RB}^{PSCCH}(i)\right) + \alpha_{D} \cdot PL_{D};$$

or

$$P_{PSCCH,D}(i) = P_{O,D} + 10log_{10}\left(M_{RB}^{PSCCH}(i)\right) + \alpha_D \cdot PL_D.$$

When a parameter dl-P0 is not configured, a parameter $P_{PSCCH,D}(i)$ in any one of formula (13) to formula (15) satisfies:

$$P_{PSCCH,D}(i) = \min\left(P_{CMAX}, P_{MAX,CBR}\right).$$

A parameter $P_{PSCCH,SL}(i)$ in any one of formula (13) to formula (15) satisfies:

$$P_{PSCCH,SL}(i) = P_{O,SL} + 10log_{10}\left(A\right) + \alpha_{SL} \cdot PL_{SL};$$

or

$$P_{PSCCH,SL}(i) = P_{O,SL} + 10log_{10}\left(2^\mu \cdot M_{RB}^{PSCCH}(i)\right) + \alpha_{SL} \cdot PL_{SL};$$

or

$$P_{PSCCH,SL}(i) = P_{O,SL} + 10log_{10}\left(M_{RB}^{PSCCH}(i)\right) + \alpha_{SL} \cdot PL_{SL};$$

or

$$P_{PSCCH,SL}(i) = \min\left(P_{CMAX}, P_{PSSCH,D}\right).$$

In this implementation scenario, letters in any one of formula (1) to formula (15) have the following meanings: $P_{SCCH}(i)$ represents the transmit power for the PSCCH at the transmission moment $i$, $P_{CMAX}$ represents a maximum transmit power of the first terminal device, $P_{MAX,CBR}$ is a power value associated with a channel busy ratio (channel busy ratio, CBR) of a resource pool, $P_{PSCCH,D}(i)$ represents a first power parameter of the PSCCH at the transmission moment $i$, $P_{PSCCH,SL}(i)$ represents a second power parameter of the PSCCH at the transmission moment $i$, and $\mu$ is the subcarrier spacing for sending the PSCCH by the first terminal device. $N_{comb}$ is the frequency domain interval for the SL-PRS. A represents the first parameter, where the first parameter may be any one of the foregoing.

$P_{O,D}$ and $\alpha_D$ are power parameters of the PSCCH, $PL_D$ is a path loss between the first terminal device and a serving cell, $P_{O,SL}$ and $\alpha_{SL}$ are power parameters of the PSCCH, and $PL_{SL}$ is a sidelink path loss between the first terminal device and the second terminal device.

For example, a value of $P_{O,D}$ is a value of *dl-P0-PSSCH-PSCCH*. If *dl-Alpha-PSSCH-PSCCH* is provided, $\alpha_D$ is the value provided by *dl-Alpha-PSSCH-PSCCH*. Otherwise, $\alpha_D = 1$.

For example, a value of $P_{O,SL}$ is a value of *sl-P0-PSSCH-PSCCH*. If *sl-Alpha-PSSCH-PSCCH* is provided, $\alpha_{SL}$ is the value provided by *sl-Alpha-PSSCH-PSCCH*. Otherwise, $\alpha_{SL} = 1$. $PL_{SL}$ is a reference signal power (Reference Signal Power) minus a higher layer filtered reference signal received power (higher layer filtered Reference Signal received Power). The reference signal power is a sum of powers of PSCCH transmission on REs through an antenna port of the first terminal device, and may be obtained by a higher layer filter by using an sl-FilterCoefficient configuration. The higher layer filtered reference signal received power is a reference signal received power (reference signal received power, RSRP) value that is obtained by the first terminal device through the sl-FilterCoefficient filter-configuration by using a PSSCH DMRS in PSCCH-PSSCH transmission.

Optionally, $P_{MAX,CBR}$ in any one of formula (1) to formula (15) is a power value associated with a transmission priority of the PSCCH.

Optionally, if a value of *sl-MaxTxPower* is not provided, $P_{MAX,CBR} = P_{CMAX}$.

Optionally, in this implementation scenario, the method further includes: The first terminal device obtains configuration information #1 (an example of the first configuration information), where the configuration information #1 indicates the first terminal device to determine the first transmit power based on the first message (for example, the first message is the PSCCH).

For example, the configuration information may be from the network device, or may be preconfigured information of the first terminal device.

It should be understood that, that the configuration information #1 indicates the first terminal device to determine the first transmit power based on the first message can be understood as follows: The configuration information #1 indicates the first terminal device to determine the first transmit power based on the transmit power for the first message, or the configuration information #1 indicates that the first transmit power is the transmit power for the first message.

That the first transmit power is determined based on the first message means that: When the first transmit power is determined, the second message is used instead of the second message; or when the first transmit power is determined, both the first message and another message, for example, the second message, are used.

In another implementation scenario, the first terminal device first determines a transmit power for the SL-PRS, where the transmit power for the SL-PRS is related to the first parameter; and the first terminal device sends the PSCCH by using a power that is the same as the transmit power for the SL-PRS. In other words, the first transmit power is the transmit power for the SL-PRS.

In this implementation scenario, the first terminal device may determine the transmit power for the SL-PRS in any one of the following manners.

Manner 1: The transmit power $P_{SL\text{-}PRS}(i)$ for the SL-PRS at the transmission moment $i$ satisfies any one of the following formula (16) to formula (27):

$$P_{SL-PRS}(i) = min \begin{pmatrix} P_{CMAX}, \\ P_{MAX,CBR}, \\ min\left(P_{SL-PRS,D}(i), P_{SL-PRS,SL}(i)\right) + 10log_{10}(A) - 10log_{10}\left(M_{RB}^{SL-PRS}(i)\right) \end{pmatrix} \quad (16)$$

$$P_{SL-PRS}(i) = min \begin{pmatrix} P_{CMAX}, \\ P_{MAX,CBR}, \\ min\left(P_{SL-PRS,D}(i), P_{SL-PRS,SL}(i)\right) + 10log_{10}(A) - 10log_{10}\left(2^{\mu} \cdot M_{RB}^{SL-PRS}(i)\right) \end{pmatrix} \quad (17)$$

$$P_{SL-PRS}(i) = min \begin{pmatrix} P_{CMAX}, \\ P_{MAX,CBR}, \\ min\left(P_{SL-PRS,D}(i), P_{SL-PRS,SL}(i) + 10log_{10}(A) - 10log_{10}\left(M_{RB}^{SL-PRS}(i)\right)\right) \end{pmatrix} \quad (18)$$

$$P_{SL-PRS}(i) = min \begin{pmatrix} P_{CMAX}, \\ P_{MAX,CBR}, \\ min\left(P_{SL-PRS,D}(i), P_{SL-PRS,SL}(i) + 10log_{10}(A) - 10log_{10}\left(2^{\mu} \cdot M_{RB}^{SL-PRS}(i)\right)\right) \end{pmatrix} \quad (19)$$

$$P_{SL-PRS}(i) = min \begin{pmatrix} P_{CMAX}, \\ min\left(P_{SL-PRS,D}(i), P_{SL-PRS,SL}(i)\right) + 10log_{10}(A) - 10log_{10}\left(M_{RB}^{SL-PRS}(i)\right) \end{pmatrix} \quad (20)$$

$$P_{SL-PRS}(i) = min \begin{pmatrix} P_{CMAX}, \\ min\left(P_{SL-PRS,D}(i), P_{SL-PRS,SL}(i)\right) + 10log_{10}(A) - 10log_{10}\left(2^{\mu} \cdot M_{RB}^{SL-PRS}(i)\right) \end{pmatrix} \quad (21)$$

$$P_{SL-PRS}(i) = min \begin{pmatrix} P_{CMAX}, \\ min\left(P_{SL-PRS,D}(i), P_{SL-PRS,SL}(i) + 10log_{10}(A) - 10log_{10}\left(M_{RB}^{SL-PRS}(i)\right)\right) \end{pmatrix} \quad (22)$$

$$P_{SL-PRS}(i) = min \begin{pmatrix} P_{CMAX}, \\ min\left(P_{SL-PRS,D}(i), P_{SL-PRS,SL}(i) + 10log_{10}(A) - 10log_{10}\left(2^{\mu} \cdot M_{RB}^{SL-PRS}(i)\right)\right) \end{pmatrix} \quad (23)$$

$$P_{SL-PRS}(i) = min \begin{pmatrix} P_{MAX,CBR}, \\ min\left(P_{SL-PRS,D}(i), P_{SL-PRS,SL}(i)\right) + 10log_{10}(A) - 10log_{10}\left(M_{RB}^{SL-PRS}(i)\right) \end{pmatrix} \quad (24)$$

$$P_{SL-PRS}(i) = min \begin{pmatrix} P_{MAX,CBR}, \\ min\left(P_{SL-PRS,D}(i), P_{SL-PRS,SL}(i)\right) + 10log_{10}(A) - 10log_{10}\left(2^{\mu} \cdot M_{RB}^{SL-PRS}(i)\right) \end{pmatrix} \quad (25)$$

$$P_{SL-PRS}(i) = min \begin{pmatrix} P_{MAX,CBR}, \\ min\left(P_{SL-PRS,D}(i), P_{SL-PRS,SL}(i) + 10log_{10}(A) - 10log_{10}\left(M_{RB}^{SL-PRS}(i)\right)\right) \end{pmatrix} \quad (26)$$

$$P_{SL-PRS}(i) = min \begin{pmatrix} P_{MAX,CBR}, \\ min\left(P_{SL-PRS,D}(i), P_{SL-PRS,SL}(i) + 10log_{10}(A) - 10log_{10}\left(2^{\mu} \cdot M_{RB}^{SL-PRS}(i)\right)\right) \end{pmatrix} \quad (27)$$

When a parameter dl-P0 is configured, a parameter $P_{SL-PRS,D}(i)$ in any one of formula (16) to formula (27) satisfies: $P_{SL-PRS,D}(i) = P_{O,D} + 10log_{10}\left(2^{\mu} \cdot M_{RB}^{SL-PRS}(i)\right) + \alpha_D \cdot PL_D$ . When a parameter dl-P0 is not configured, a parameter $P_{SL-PRS,D}(i)$ in any one of formula (16) to formula (27) satisfies:

$$P_{SL-PRS,D}(i) = min\left(P_{CMAX}, P_{MAX,CBR}\right).$$

A parameter $P_{SL-PRS,SL}(i)$ in any one of formula (16) to formula (27) satisfies:

$$P_{SL-PRS,SL}(i) = P_{O,SL} + 10log_{10}\left(2^{\mu} \cdot M_{RB}^{SL-PRS}(i)\right) + \alpha_{SL} \cdot PL_{SL};$$

or

$$P_{SL-PRS,SL}(i) = min\left(P_{CMAX}, P_{SL-PRS,D}(i)\right);$$

or

$$P_{SL-PRS,SL}(i) = min\left(P_{MAX,CBR}, P_{SL-PRS,D}(i)\right).$$

Manner 2: The transmit power $P_{SL-PRS}(i)$ for the SL-PRS at the transmission moment $i$ satisfies any one of the following formula (28) to formula (30):

$$P_{SL-PRS}(i) = min \begin{pmatrix} P_{CMAX}, \\ P_{MAX,CBR}, \\ min\left(P_{SL-PRS,D}(i), P_{SL-PRS,SL}(i)\right) \end{pmatrix} \quad (28)$$

$$P_{SL-PRS}(i) = min \begin{pmatrix} P_{CMAX}, \\ min\left(P_{SL-PRS,D}(i), P_{SL-PRS,SL}(i)\right) \end{pmatrix} \quad (29)$$

$$P_{SL-PRS}(i) = min \begin{pmatrix} P_{MAX,CBR}, \\ min\left(P_{SL-PRS,D}(i), P_{SL-PRS,SL}(i)\right) \end{pmatrix} \quad (30)$$

When a parameter dl-P0 is configured, a parameter $P_{SL-PRS,D}(i)$ in any one of formula (28) to formula (30) satisfies:

$$P_{SL-PRS,D}(i) = P_{O,D} + 10log_{10}(A) + \alpha_D \cdot PL_D;$$

or

$$P_{SL-PRS,D}(i) = P_{O,D} + 10log_{10}\left(2^\mu \cdot M_{RB}^{SL-PRS}(i)\right) + \alpha_D \cdot PL_D;$$

or

$$P_{SL-PRS,D}(i) = P_{O,D} + 10log_{10}\left(M_{RB}^{SL-PRS}(i)\right) + \alpha_D \cdot PL_D.$$

When a parameter dl-P0 is not configured, a parameter $P_{SL-PRS,D}(i)$ in any one of formula (28) to formula (30) satisfies:

$$P_{SL-PRS,D}(i) = min\left(P_{CMAX}, P_{MAX,CBR}\right).$$

A parameter $P_{SL-PRS,SL}(i)$ in any one of formula (28) to formula (30) satisfies:

$$P_{SL-PRS,SL}(i) = P_{O,SL} + 10log_{10}(A) + \alpha_{SL} \cdot PL_{SL};$$

or

$$P_{SL-PRS,SL}(i) = P_{O,SL} + 10log_{10}\left(2^\mu \cdot M_{RB}^{SL-PRS}(i)\right) + \alpha_{SL} \cdot PL_{SL};$$

or

$$P_{SL-PRS,SL}(i) = P_{O,SL} + 10log_{10}\left(M_{RB}^{SL-PRS}(i)\right) + \alpha_{SL} \cdot PL_{SL};$$

or

$$P_{SL-PRS,SL}(i) = min\left(P_{CMAX}, P_{SL-PRS,D}\right).$$

In this implementation scenario, letters in any one of formula (16) to formula (30) have the following meanings: $P_{SL-PRS}(i)$ represents the transmit power for the SL-PRS at the transmission moment $i$, $P_{CMAX}$ represents a maximum transmit power of the first terminal device, $P_{MAX,CBR}$ is a power value associated with a channel busy ratio (channel busy ratio, CBR) of a resource pool, $P_{SL-PRS,D}(i)$ represents a first power parameter of the SL-PRS at the transmission moment $i$, $P_{SL-PRS,SL}(i)$ represents a second power parameter of the SL-PRS at the transmission moment $i$, and $\mu$ is the subcarrier spacing for sending the SL-PRS by the first terminal device. $N_{comb}$ is the frequency domain interval for the SL-PRS. A represents the first parameter, where the first parameter may be any one of the foregoing.

$P_{O,D}$ and $\alpha_D$ are power parameters of the SL-PRS, $PL_D$ is a path loss between the first terminal device and a serving cell, $P_{O,SL}$ and $\alpha_{SL}$ are power parameters of the SL-PRS, and $PL_{SL}$ is a sidelink path loss between the first terminal device and the second device.

For example, for values of $P_{O,D}$, $\alpha_D$, $PL_D$, $P_{O,SL}$, $\alpha_{SL}$, and $PL_{SL}$, refer to the foregoing implementation scenario. A difference lies in that these parameters are PSCCH-related parameters in the foregoing implementation scenario, while these parameters are all SL-PRS-related parameters in this implementation scenario. Optionally, the values of $P_{O,D}$, $\alpha_D$, $PL_D$, $P_{O,SL}$, $\alpha_{SL}$, and $PL_{SL}$ may be separately configured by a base station.

Optionally, in this implementation scenario, $P_{MAX,CBR}$ in any one of formula (16) to formula (30) is a power value associated with a transmission priority of the SL-PRS.

Optionally, if a value of *sl-MaxTxPower* is not provided, $P_{MAX,CBR} = P_{CMAX}$.

Optionally, in this implementation scenario, the method further includes: The first terminal device obtains configuration information #2 (an example of the second configuration information), where the configuration information #2 indicates the first terminal device to determine the first transmit power based on the second message (for example, the second message is the SL-PRS).

For example, the configuration information may be from the network device, or may be preconfigured information of the first terminal device.

It should be understood that, that the configuration information #2 indicates the first terminal device to determine the first transmit power based on the second message can be understood as follows: The configuration information #2 indicates the first terminal device to determine the first transmit power based on the transmit power for the second message, or the configuration information #2 indicates that the first transmit power is the transmit power for the second message. That the first transmit power is determined based on the second message means that: When the first transmit power is determined, the second message is used instead of the first message; or when the first transmit power is determined, both the second message and another message, for example, the first message, are used.

In addition, in any one of the foregoing implementation scenarios, when the first parameter A in any one of formula (1) to formula (30) is $M^{msg1}(i)$ or $2^\mu \cdot M^{msg1}(i)$, it can be understood that the first parameter is related to the first bandwidth and is not related to the second bandwidth, or that the first transmit power is related to the first bandwidth and is not related to the second bandwidth. Similarly, when the first parameter A in any one of formula (1) to formula (30) is $M^{msg2}(i)$ or $2^\mu \cdot M^{msg2}(i)$, it can be understood that the first parameter is related to the second bandwidth and is not related to the first bandwidth, or that the first transmit power is related to the second bandwidth and is not related to the first bandwidth.

In any one of the foregoing implementation scenarios, $P_{CMAX}$ in any one of formula (1) to formula (30) may be a smaller value of a first maximum transmit power and a second maximum transmit power, the first maximum transmit power is a maximum transmit power determined based on a maximum power reduction (max power reduction, MPR) value of the PSCCH, and the second maximum transmit power is a maximum transmit power determined based on an MRP value of the SL-PRS. For example, the maximum transmit power determined by the UE-1 based on the MRP1 value of the PSCCH is $P_{CMAX1}$, and the maximum transmit power determined by the UE-1 based on the MRP2 value of the SL-PRS is $P_{CMAX2}$. $P_{CMAX}$ may be represented as:

$$P_{CMAX} = min\left(P_{CMAX1}, P_{CMAX2}\right).$$

Optionally, the method 300 further includes: The second terminal device determines a receive power for the first message and/or a receive power for the second message.

For example, the receive power is determined based on at least one of the following parameters: a reference signal received power (reference signal received power, RSRP), a received signal strength indicator (received signal strength indicator, RSSI), and a reference signal received quality (reference signal received quality, RSRQ).

In an implementation scenario, the second terminal device determines the receive power for the second message based on the first message. For example, the second terminal device may determine the receive power for the second message based on the receive power for the first message.

In this implementation scenario, the receive power $PR_2$ for the second message satisfies the following condition:

$$PR_2 = PR_1 \cdot \left(M^{msg1}(i)/M^{msg2}(i)\right);$$

or

$$PR_2 = PR_1 + 10log_{10}\left(M^{msg1}(i)/M^{msg2}(i)\right),$$

where

$PR_1$ represents the receive power for the first message, $PR_2$ represents the receive power for the second message, $M^{msg1}$($i$) represents the first bandwidth at the transmission moment $i$, and $M^{msg2}$($i$) represents the second bandwidth at the transmission moment $i$.

It should be understood that the first bandwidth may be indicated by the network device or the first terminal device to the second terminal device, or may be preconfigured. Similarly, the second bandwidth may be indicated by the network device or the first terminal device to the second terminal device, or may be preconfigured.

Optionally, in this implementation scenario, the method further includes: The second terminal device obtains configuration information #3 (an example of third configuration information), where the configuration information #3 indicates the second terminal device to determine the receive power for the second message based on the first message.

For example, the configuration information #3 may be from the network device or the first terminal device, or may be preconfigured information of the second terminal device.

It should be understood that, that the configuration information #3 indicates the second terminal device to determine the receive power for the second message based on the first message can be understood as follows: The configuration information #3 indicates the second terminal device to determine the receive power for the second message based on the receive power for the first message.

In another implementation scenario, the second terminal device determines the receive power for the first message based on the second message. For example, the second terminal device may determine the receive power for the first message based on the receive power for the second message.

In this implementation scenario, the receive power $PR_1$ for the first message satisfies the following condition:

$$PR_1 = PR_2 \cdot \left( M^{msg2}(i) \big/ M^{msg1}(i) \right);$$

or

$$PR_1 = PR_2 + 10log_{10} \left( M^{msg2}(i) \big/ M^{msg1}(i) \right),$$

where

$PR_1$ represents the receive power for the first message, $PR_2$ represents the receive power for the second message, $M^{msg1}$($i$) represents the first bandwidth at the transmission moment $i$, and $M^{msg2}$($i$) represents the second bandwidth at the transmission moment $i$.

It should be understood that the first bandwidth may be indicated by the network device or the first terminal device to the second terminal device, or may be preconfigured. Similarly, the second bandwidth may be indicated by the network device or the first terminal device to the second terminal device, or may be preconfigured.

Optionally, in this implementation scenario, the method further includes: The second terminal device obtains configuration information #4 (an example of fourth configuration information), where the configuration information #4 indicates the second terminal device to determine the receive power for the first message based on the second message.

For example, the configuration information #4 may be from the network device or the first terminal device, or may be preconfigured information of the second terminal device.

It should be understood that, that the configuration information #3 indicates the second terminal device to determine the receive power for the first message based on the second message can be understood as follows: The configuration information #3 indicates the second terminal device to determine the receive power for the first message based on the receive power for the second message.

It should also be understood that, because the transmit power for the first message is the same as the transmit power for the second message, the second terminal device may calculate, based on the receive power for the first message, a power for a symbol occupied by the first message, to calculate the receive power for the second message. A calculation manner may be one of the foregoing calculation manners of $PR_2$. Optionally, the bandwidth for the first message is configured by using signaling, and the bandwidth for the second message is indicated by the first message. Similarly, the second terminal device may calculate, based on the receive power for the second message, a power for a symbol occupied by the second message, to calculate the receive power for the first message. A calculation manner may be one of the foregoing calculation manners of $PR_1$.

Optionally, the method 300 further includes: The second terminal device determines, based on the receive power for the first message and/or the receive power for the second message, a transmission resource for sending a third message.

The third message may be any message other than the first message and the second message, and the third message is sent by the second terminal device.

Specifically, after determining the receive power for the first message and/or the receive power for the second message, the second terminal device may determine whether a resource occupied by the first message and/or a resource occupied by the second message are/is suitable for the second terminal device to send the third message. If the receive power for the first message and/or the receive power for the second message are/is excessively high (for example, greater than a configured threshold), the second terminal device may determine that the resource occupied by the first message and/or the resource occupied by the second message are/is not suitable for transmitting the third message. On the contrary, if the receive power for the first message and/or the receive power for the second message are/is excessively low (for example, greater than a configured threshold), the second terminal device may determine that the resource occupied by the first message and/or the resource occupied by the second message are/is suitable for transmitting the third message. Therefore, the second terminal device may use the resource occupied by the first message and/or the resource occupied by the second message to transmit the third message. The foregoing method can prevent the second terminal device from selecting a high-interference resource to transmit the third message, to avoid interference between users and improve system performance.

In an SL positioning technology, when a transmit end sends a plurality of messages by using different powers, a receive end may not be able to accurately determine a time domain start location for receiving a message.

This application further provides a communication method, so that a receive end can determine a time domain start location for receiving a message.

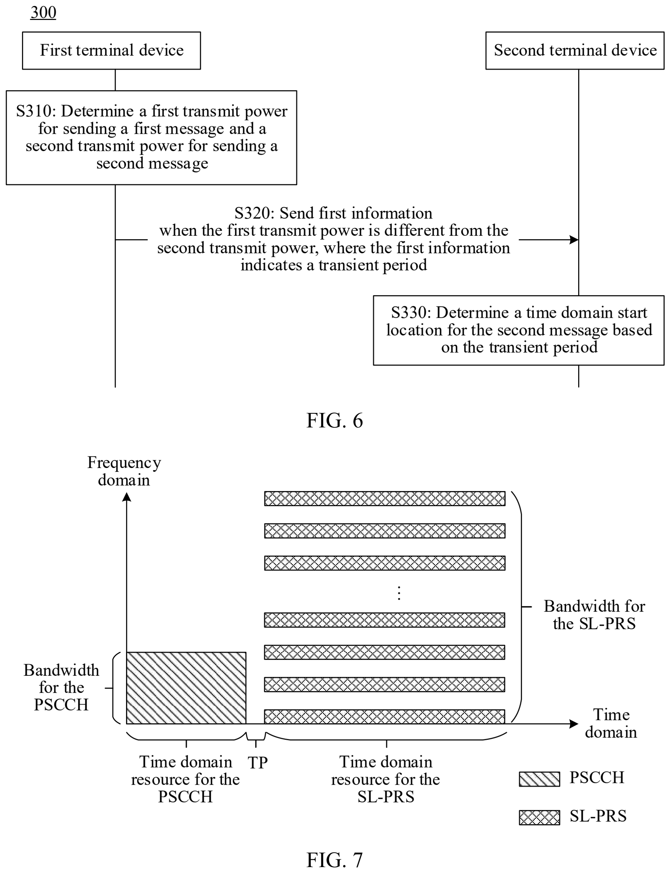

FIG. 6 is a schematic flowchart of a communication method 300 according to an embodiment of this application. As shown in FIG. 6, the method includes a plurality of steps as follows.

S310: A first terminal device determines a first transmit power and a second transmit power.

The first transmit power is a power for sending a first message by the first terminal device, and the second transmit power is a power for sending a second message by the first terminal device.

"The power for sending the first message" can be understood as "a transmit power for the first message", and "the power for sending the second message" can be understood as "a transmit power for the second message". For descriptions of the "transmit power", refer to the method 200. Details are not described herein again.

Optionally, a time domain resource for the first message and a time domain resource for the second message are located in a same time domain unit. For example, the time domain resource for the first message and the time domain resource for the second message are in one slot, and the first message and the second message are arranged in a time-division multiplexing (time-division multiplexing, TDM) manner.

Similar to the method 200, the time domain resource for the first message is located before the time domain resource for the second message.

Similar to the method 200, the first message and the second message may be different messages, or may be different parts of a message.

S320: The first terminal device sends first information when the first transmit power is different from the second transmit power.

The first information indicates a transient period, and the transient period is a time interval between the time domain resource for sending the first message and the time domain resource for sending the second message.

Similar to the method 200, the first message may be carried on a PSCCH, and the second message may be an SL-PRS. The following describes the transient period TP by using an example with reference to FIG. 7.

FIG. 7 is a diagram of another slot structure in which an SL-PRS and a PSCCH are jointly transmitted; As shown in FIG. 7, a sending occasion of the PSCCH is earlier than a sending occasion of the SL-PRS, and there is a transient period (transient period, TP) between a time domain resource for the PSCCH and a time domain resource for the SL-PRS, that is, a time-frequency resource for the PSCCH and a time-frequency resource for the SL-PRS are nonconsecutive in time domain. The PSCCH may carry SCI, which may indicate transmission parameters of the SL-PRS, for example, indication information of the time domain resource for the SL-PRS, indication information of a frequency domain resource for the SL-PRS, a priority of the SL-PRS, reservation period indication information of the SL-PRS, source identifier indication information corresponding to the second message, destination identifier indication information corresponding to the second message, and the like.

Optionally, because the first transmit power is different from the second transmit power, there is a TP between the time domain resource for the first message and the time domain resource for the second message. The TP is used by the first terminal device to perform power switching.

In an example, the first information indicates duration of the transient period. For example, the first information has two bits, and meanings of values of the first information are listed in Table 2.

Table 2

| Value of the first information | Meaning |
|---|---|
| 00 | A value of the TP is 2 $\mu$s, or a value of the TP is less than or equal to 2 $\mu$s (including 0). |
| 01 | A value of the TP is 4 $\mu$s, or a value of the TP is less than or equal to 4 $\mu$s and greater than 2 $\mu$s. |
| 10 | A value of the TP is 7 $\mu$s, or a value of the TP is less than or equal to 7 $\mu$s and greater than 4 $\mu$s. |
| 11 | A value of the TP is 10 $\mu$s, or a value of the TP is less than or equal to 10 $\mu$s and greater than 7 $\mu$s. |

In another example, the first information indicates whether duration of the transient period occupies one symbol. For example, the first information has one bit, and a value of the first information indicates that the duration of the transient period does not occupy one symbol or the duration of the transient period occupies one symbol.

It should be understood that in this application, the TP, the duration of the TP, the value of the TP, and the like represent a same meaning, and may be mutually replaced. This is not limited. Optionally, the first information is carried in SCI or uplink control information (uplink control information, UCI).

For example, if the first terminal device may send the first information to a second terminal device, the first information may be carried in SCI.

For another example, if the first terminal device may send the first information to a network side device, the first information may be carried in UCI.

Optionally, the network side device may be the access side network device shown in FIG. 1, for example, a base station, or may be a core network element, for example, a location management function (location management function, LMF) or a positioning server.

S330: The second terminal device determines a time domain start location for the second message based on the transient period.

For example, the second terminal device may continue to receive the first message in a blind detection manner; and after receiving the first message, determine the time domain start location for the second message based on the transient period indicated by the first information.

For example, a UE 2 (an example of the second terminal device) may determine, by using indication information of a TP capability (an example of the first information) of a UE 1 (an example of the first terminal device) that is indicated in the received SCI, specific duration occupying adjacent symbols after the first message is not affected. For example, if the UE 1 indicates that the TP capability of the UE 1 is less than or equal to 4 $\mu$s, sampling points of the adjacent symbols after the first message are almost not affected. The UE 2 uses a $1^{st}$ symbol following the first message as the time domain start symbol for the second message. For another example, if the UE 1 indicates that the TP capability of the UE 1 is greater than or equal to 10 $\mu$s, a large quantity of sampling points of the adjacent symbols after the first message are not normally sent. The UE 2 uses a $2^{nd}$ symbol following the first message as the time domain start symbol for the second message. In this way, the UE 2 can accurately avoid receiving, based on the received TP capability indicated by the UE 1, a symbol affected by the TP, thereby reducing a performance loss.

According to the foregoing solution, when the terminal device sends a plurality of messages by using different powers, the receiving device can accurately determine a time domain start location for receiving a message. This improves communication efficiency.

Optionally, the method 300 further includes: The second terminal device sends third information, where the third information indicates duration for performing automatic gain control (automatic gain control, AGC) processing by the second terminal device.

For example, that the third information indicates duration for performing AGC processing by the second terminal device can also be understood as follows: The third information indicates whether the AGC processing performed by the second terminal device occupies one symbol, or the third information indicates whether the AGC processing performed by the second terminal device can be implemented by using a part that is other than the TP and that is in the $1^{st}$ symbol following the first message.

Specifically, the AGC processing means that, when performing reception detection, the receiving device needs to adjust a receive gain for information that enters from a radio frequency front-end to a baseband, so that an amplitude of a signal input to an analog to digital converter (analog to digital converter, ADC) module is exactly within a quantization range of the ADC. In this way, a signal-to-noise ratio of a received signal in the baseband can be maximized, and optimal receiving performance can be achieved. The duration for performing the AGC processing is a time period needed to adjust the receive gain by the receive end.

Optionally, the third information is carried in SCI or UCI.

For example, if the second terminal device may send the third information to the first terminal device, the first information may be carried in SCI.

For another example, if the second terminal device may send the third information to the network side device, the first information may be carried in UCI.

Optionally, S330 specifically includes: The second terminal device determines, based on the first information and the third information, the time domain start location for sending the second message.

For example, after receiving the indication information of the TP sent by the UE-1, the UE 2 determines, based on the duration of the TP and the duration that is needed to perform the AGC by the UE 2, that a sum of the duration of the TP and the duration that is for performing the AGC processing is any one of the following results: A sum of the duration of the TP and the duration that is for performing the AGC processing occupies one symbol, or a sum of the duration of the TP and the duration that is for performing the AGC processing occupies two symbols. When the sum of the duration of the TP and the duration that is for performing the AGC processing occupies one symbol, the UE 2 may determine, as the time domain start location for receiving the SL-PRS, a location that is after the PSCCH (an example of the first message) and that is separated from the PSCCH by one symbol. When the sum of the duration of the TP and the duration that is for performing the AGC processing occupies two symbols, the UE 2 may determine, as the time domain start location for receiving the SL-PRS, that a location that is after the PSCCH and that is separated from the PSCCH by two symbols. Further, the UE-2 may determine an SL-PRS transmission pattern based on the sum of the duration of the TP and the duration that is for performing the AGC processing, symbol duration of the SL-PRS configured by the network device, SL-PRS pattern indication information, and the like, to correspondingly perform detection and receiving.

Optionally, the method 300 may further include: A first device determines, based on the first information, a transmission resource used by the first terminal device to send the second message to the second terminal device.

The first device may be the first terminal device, or may be the network side device. In other words, the first terminal device may directly determine the transmission resource for the second message by using the first information, or may send the first information to the network device side, and then the network device determines the transmission resource for the second message.

Optionally, determining the transmission resource for the second message may include at least one of the following: determining a quantity of symbols occupied by the transmission resource, and determining a time domain gap of the transmission resource.

Specifically, the first device may determine, based on the transient period, whether the transmission resource for the second message includes one adjacent symbol after the time domain resource for the first message. When the transient period is less than or equal to a first threshold, the transmission resource includes one adjacent symbol after the time domain resource for the first message. When the transient period is greater than a first threshold, the transmission resource does not include one adjacent symbol after the time domain resource for the first message. A value of the first threshold is related to a subcarrier spacing SCS.

The following uses an example in which the first message is carried on a PSCCH and the second message is an SL-PRS for description.

For example, for a 15 kHz SCS, a length of a cyclic prefix (cyclic prefix, CP) is 4.6 $\mu$s or 5.2 $\mu$s, and symbol duration is 67 $\mu$s. When a value of a TP is small, for example, 0, 2 $\mu$s, or 4 $\mu$s, the PRS selected by the UE-1 may use all symbols following the PSCCH. For other values of the TP, one adjacent symbol after the PSCCH cannot be used for transmitting the PRS, and the symbol cannot be included when a resource or a pattern is selected for the PRS.

For another example, for a 30 kHz SCS, a length of a CP is 2.3 $\mu$s or 2.6 $\mu$s, and symbol duration is 33 $\mu$s. When a value of a TP is small, for example, 0 or 2 $\mu$s, the PRS selected by the UE-1 may use all symbols following the PSCCH. For other values of the TP, one adjacent symbol after the PSCCH cannot be used for transmitting the PRS, and the symbol cannot be included when a resource or a pattern is selected for the PRS.

For another example, for a 60 kHz SCS, a length of a CP is 1.2 $\mu$s or 1.3 $\mu$s, and symbol duration is 16 $\mu$s. When a value of a TP is small, for example, 0 or 2 $\mu$s, the PRS selected by the UE-1 may use all symbols following the PSCCH. For other values of the TP, one adjacent symbol after the PSCCH cannot be used for transmitting the PRS, and the symbol cannot be included when a resource or a pattern is selected for the PRS.

The resources for the PRS include a quantity M of symbols, a frequency domain interval N, and a pattern of a frequency domain interaction structure that are used for transmitting the PRS.

In an example, the first device determines the transmission resource for the second message in the following manner.

Optionally, that the first information indicates a transient period can also be understood as follows: The first information indicates whether the first message affects transmission of a cyclic prefix (cyclic prefix, CP), or the first information indicates whether a symbol following the first message is complete.

According to the foregoing solution, the first device may determine the transmission resource for the second message based on the first information, to avoid affecting transmission performance because of using an inappropriate transmission resource.

Optionally, the method 300 further includes: The first device determines, based on the first information and/or the third information, the transmission resource used by the first terminal device to send the second message to the second terminal device.

It should be understood that if the first device is the first terminal device, the first device may determine, based on the transient period of the first device and the third information from the second terminal device, the transmission resource for sending the second message. If the first device is the network side device, the first device may determine, based on the transient period from the first terminal device and the third information from the second terminal device, the transmission resource for sending the second message.

Specifically, the first device determines, based on the transient period and/or the duration that is for performing the AGC processing, the quantity of symbols occupied by the transmission resource; or the first device determines a frequency domain interval of the transmission resource based on the transient period and/or the duration that is for performing the AGC processing.

FIG. 7 is used as an example. It is assumed that the PSCCH occupies two symbols, and a last symbol in a slot is used as a gap for transmit/receive switching. Therefore, for a slot including 14 symbols, a total of 11 symbols may be used for the TP and the SL-PRS. If the first information indicates that the duration of the TP occupies one symbol, and the third information indicates that the duration for performing the AGC processing by the second terminal device occupies one symbol, the first device may determine that a sum of the duration of the TP and the duration for performing the AGC processing occupies two symbols, and therefore a total of nine symbols may be used for the SL-PRS. In this case, the first device may use an SL-PRS frequency domain pattern with $N_{comb}=3$, and a manner of sending the SL-PRS may be: Three symbols are used as a group, and the selected frequency domain pattern is repeated for three times on the foregoing nine symbols. Alternatively, if the first information indicates that the duration of the TP does not occupy one symbol, and the third information indicates that the duration for performing the AGC processing by the second terminal device occupies one symbol, the first device may determine that a sum of the duration of the TP and the duration for performing the AGC processing occupies one symbol, and therefore a total of 10 symbols may be used for the transmission resource for the SL-PRS. In this case, the first device may use a frequency domain pattern with $N_{comb}=2$, and a manner of sending the SL-PRS may be: Two symbols are used as a group, and the selected frequency domain pattern is repeated for five times on the foregoing 10 symbols. Alternatively, the first device may use a frequency domain pattern with $N_{comb}=5$, and a manner of sending the SL-PRS may be: Five symbols are used as a group, and the selected frequency domain pattern is repeated for two times on the foregoing 10 symbols.

Optionally, the method 300 further includes: The first terminal device sends second information, where the second information indicates a power difference between the first transmit power and the second transmit power.

Specifically, the first terminal device may send the power difference between the first transmit power and the second transmit power to any terminal device (for example, referred to as the second terminal device or a third terminal device) that communicates with the first terminal device on an SL. When RSRP measurement is performed based on the PSCCH, the third terminal device may estimate an RSRP value for the SL-PRS based on the power difference and an RSRP value detected on the PSCCH, to perform resource selection and exclusion based on the determined RSRP value for the SL-PRS For example, if the power difference is ΔP=RSRPSLPRS-RSRPPSCCH, the RSRP for the SL-PRS is:

$$RSRP_{SLPRS}=\Delta P+RSRP_{PSCCH} \qquad\qquad \text{formula (51)}$$

Optionally, the power difference may be represented in a logarithmic form. In this case, formula (51) may be converted into the following form for representation:

$$RSRP_{SLPRS} = \Delta_p + 10\log_{10}(N_1) - 10\log_{10}(N_{RS}) + RSRP_{PSCCH} \qquad \text{formula} \quad (52),$$

where
$RSRP_{SLPRS}$ represents the RSRP for the SL-PRS, $N_1$ represents a bandwidth for the PSCCH, $N_{RS}$ represents a bandwidth for the SL-PRS, $RSRP_{PSCCH}$ represents the RSRP for the PSCCH, and $\Delta_p$ represents a power difference between symbols occupied by the PSCCH and the SL-PRS and is measured in dB or dBm.

It can be understood that, when the power difference is described by using an arithmetic value, formula (51) may also be converted into the following formula (53) for description:

$$RSRP_{SLPRS} = \Delta_p \cdot \frac{N_1}{N_{RS}} \cdot RSRP_{PSCCH} \qquad\qquad \text{formula} \quad (53),$$

where
$RSRP_{SLPRS}$ represents the RSRP for the SL-PRS, $N_1$ represents a bandwidth for the PSCCH, $N_{RS}$ represents a bandwidth for the SLPRS, $RSRP_{PSCCH}$ represents the RSRP for the PSCCH, and $\Delta_p$ represents a power ratio between symbols occupied by the PSCCH and the SL-PRS.

Optionally, the method 300 further includes: The network device sends fourth information to the first terminal device, where the fourth information indicates the first terminal device to measure a quality of a reference signal based on the first message or to measure a quality of a reference signal based on the second message.

The quality of the reference signal may be measured by using a reference signal received power (reference signal received power, RSRP). In other words, the fourth information may indicate the first terminal device to measure the RSRP based on the first message or the second message.

Optionally, when the fourth information indicates the first device to measure the RSRP based on the first message, the first terminal device sends the second information.

In an SL positioning technology, when a transmit end sends a plurality of messages by using different powers, if transmit powers for different messages are different, a receive end may not be able to accurately determine a power used for receiving a message.

This application further provides a communication method. A transmit end indicates a power difference between receive powers for different messages to a receive end, so that the receive end can determine a power used for receiving a message.

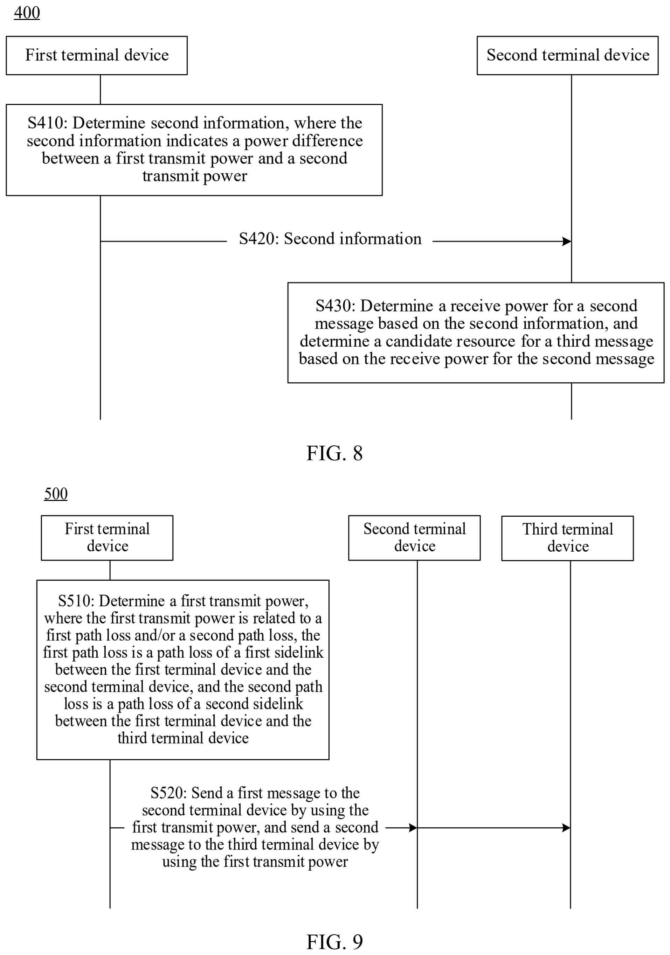

FIG. 8 is a schematic flowchart of a communication method 400 according to an embodiment of this application. As shown in FIG. 8, the method 400 includes the following steps.

S410: A first terminal device determines second information.

The second information indicates a power difference between a first transmit power and a second transmit power, the first transmit power is a power for sending a first message by the first terminal device to a second terminal device, and the second transmit power is a power for sending a second message by the first terminal device to the second terminal device.

"The power for sending the first message" can be understood as "a transmit power for the first message", and "the power for sending the second message" can be understood as "a transmit power for the second message". For descriptions of the "transmit power", refer to the method 200. Details are not described herein again.

Optionally, a bandwidth for sending the first message may be the same as or different from a bandwidth for sending the second message.

Optionally, the first transmit power is different from the second transmit power.

Optionally, a time domain resource for the first message and a time domain resource for the second message are located in a same time domain unit. For example, the time domain resource for the first message and the time domain resource for the second message are in one slot, and the first message and the second message are arranged in a time-division multiplexing (time-division multiplexing, TDM) manner.

Similar to the method 200, the time domain resource for the first message may be located before the time domain resource for the second message.

Similar to the method 200, the first message and the second message may be different messages, or may be different parts of a message.

For example, the first message is carried on a PSCCH, and the second message is an SL-PRS.

In an implementation, the power difference between the first transmit power and the second transmit power is a difference between a transmit power for a symbol occupied by the first message and a transmit power for a symbol occupied by the second message.

In another implementation, the power difference between the first transmit power and the second transmit power is a difference between an RSRP for the first message on each subcarrier and an RSRP for the second message on each subcarrier.

S420: The first terminal device sends the second information to the second terminal device, and correspondingly the second terminal device receives the second information.

For example, the second information is carried in sidelink control information (sidelink control information, SCI).

Optionally, the first terminal device may further send the second information to a network device. In this case, the second information may be carried in uplink control information (uplink control information, UCI).

S430: The second terminal device determines a receive power for the second message based on the second information, and determines a candidate resource for a third message based on the receive power for the second message, where the third message is a message to be sent by the second terminal device.

For example, the second device may first determine a receive power for the first message, and then determine the receive power for the second message based on the receive power for the first message and the power difference between the first transmit power and the second transmit power. That the second terminal device determines a candidate resource for a third message based on the receive power for the second message may be: When the receive power for the second message is greater than a configured threshold, the second terminal device determines to exclude, from a candidate resource set, a time-frequency resource occupied by or reserved for the second message. Optionally, the candidate resource set is a universal set used to determine the candidate resource for the third message. Optionally, an initial value of the candidate resource set may be all time-frequency resources in a resource selection window.

Specifically, before performing resource selection, the second terminal device may set the candidate resource set to all the time-frequency resources in the resource selection window. When it is detected that the receive power for the second message is greater than the configured threshold, the time-frequency resource occupied by or reserved for the second message is excluded from the candidate resource set, to obtain the candidate resource for the third message.

Optionally, the second device may further exclude, from the candidate resource set, a time-frequency resource that is being occupied by or reserved for any other message. By detecting resources for all detected messages, the second terminal device may obtain a set of candidate resources with less interference, where the set excludes all time-frequency resources occupied by, reserved for, or used for sending by other terminal devices. The set of candidate resources with less interference may be referred to as the candidate resource for the third message. The second terminal device may determine, from this set, the resource for the to-be-sent third message.

According to the solutions in the foregoing embodiments, in an SL positioning technology, when the transmit power for the first message is different from the transmit power for the second message, the first device may indicate the power difference between the transmit power for the first message and the transmit power for the second message to the second device, so that the second device can determine the receive power for the second message based on the receive power for the first message, and the second device can further perform effective selection and exclusion on the resource for the third message. In this way, resource selection accuracy can be improved, and transmission performance can be improved.

In the SL positioning technology, when a transmit end sends messages to different terminal devices in a same time domain unit, different path losses of different links affect transmit powers on the different links, and an AGC symbol and a TP symbol are needed for different transmit powers. Consequently, transmission efficiency in the time domain unit is affected, affecting performance of transmitting the messages.

This application further provides a communication method. A transmit end sends messages to different terminal devices in a same time domain unit by using a same transmit power. This is conducive to improving efficiency and performance of transmitting a message.

FIG. 9 is a schematic flowchart of a communication method 500 according to an embodiment of this application. As shown in FIG. 9, the method 500 includes the following steps.

S510: A first terminal device determines a first transmit power.

The first transmit power is related to a first path loss and/or a second path loss, the first path loss is a path loss of a first sidelink between the first terminal device and a second terminal device, and the second path loss is a path loss of a second sidelink between the first terminal device and a third terminal device.

It should be understood that a "path loss" may be referred to as an attenuation loss or a propagation loss, is a loss generated when an electromagnetic wave is propagated through space, and is determined by one or more of the following factors: radiation diffusion of a transmit power, a propagation characteristic of a channel, a propagation distance, a height of a transceiver antenna, a channel quality, and the like.

Optionally, the first path loss is different from the second path loss. In other words, the first sidelink and the second sidelink have different path losses.

It should be understood that the first path loss is determined by performance of the first sidelink, and the second path loss is determined by a characteristic of the second sidelink.

In this application, "the first transmit power is related to the first path loss and/or the second path loss" can be understood as "changes of the first path loss and the second path loss affect the first transmit power", "the first transmit power is determined based on the first path loss and the second path loss", "a change of the first path loss affects the first transmit power", "the first transmit power is determined based on the first path loss", "a change of the second path loss affects the first transmit power", or "the first transmit power is determined based on the second path loss".

Optionally, a time domain resource for a first message and a time domain resource for a second message are located in a same time domain unit. For example, the time domain resource for the first message and the time domain resource for the second message are located in a same slot, and the first message and the second message are arranged in a time-division multiplexing (time-division multiplexing, TDM) manner.

Optionally, a time domain resource for a fourth message is located before the time domain resources for the first message and the second message, and the fourth message indicates transmission parameters of the first message and/or the second message. For example, the fourth message carries scheduling information indicating the first message and/or the second message.

For example, the scheduling information may be one or more of the following: indication information of the time domain resource for transmitting the first message, indication information of a frequency domain resource for transmitting the first message, a priority of the first message, reservation period indication information of the first message, modulation and coding scheme (modulation and coding scheme, MCS) indication information of the first message, source identifier indication information corresponding to the first message, destination identifier indication information corresponding to the first message, indication information of the time domain resource for transmitting the second message, indication information of a frequency domain resource for transmitting the second message, a priority of the second message, reservation period indication information of the second message, source identifier indication information corresponding to the second message, destination identifier indication information corresponding to the second message, and the like.

Optionally, the first message and the second message in this application may be different messages, or may be different parts of a message.

For example, the first message is carried on a PSSCH, and the second message is an SL-PRS. Optionally, the fourth message is carried on a PSCCH.

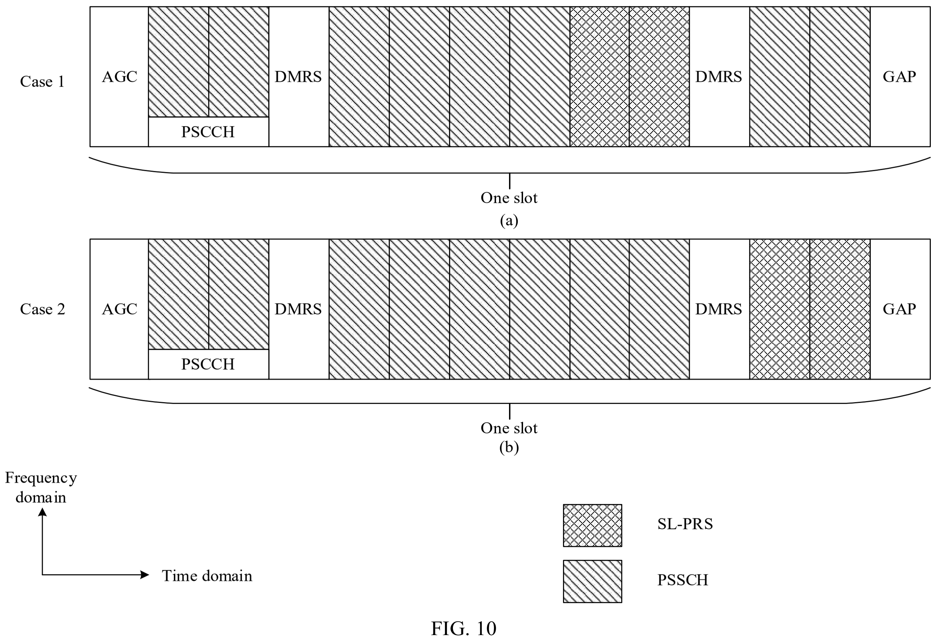

FIG. 10 is a diagram of a slot structure in which an SL-PRS, a PSSCH, and a PSCCH are jointly transmitted. As shown in (a) in FIG. 10, a time domain resource for the PSSCH and a time domain resource for the SL-PRS are located in a same slot, and the time domain resource for the SL-PRS is located between the time domain resource for the PSSCH in time domain. As shown in (b) in FIG. 10, a time domain resource for the PSSCH and a time domain resource for the SL-PRS are located in a same slot, and the time domain resource for the PSSCH is located before the time domain resource for the SL-PRS in time domain. In addition, in (a) and (b) in FIG. 10, a time domain resource for the PSCCH is located before the time domain resources for the SL-PRS and the PSSCH. The PSCCH may carry SCI, which may indicate transmission parameters of the PSSCH and/or the SL-PRS. For example, the transmission parameters may include one or more of the following information: indication information of the time domain resource for the PSSCH, indication information of a frequency domain resource for the PSSCH, a priority of the PSSCH, reservation period indication information of the PSSCH, source identifier indication information corresponding to the PSSCH, destination identifier indication information corresponding to the PSSCH, indication information of the time domain resource for the SL-PRS, indication information of a frequency domain resource for the SL-PRS, a priority of the SL-PRS, reservation period indication information of the SL-PRS, source identifier indication information corresponding to the SL-PRS, and destination identifier indication information corresponding to the SL-PRS.

S520: The first terminal device sends the first message to the second terminal device by using the first transmit power, and sends the second message to the third terminal device by using the first transmit power. Correspondingly, the second terminal device receives the first message, and the third terminal device receives the second message.

In other words, the first terminal device sends the first message and the second message by using a same transmit power. To be specific, after determining the first transmit power, the first terminal device sends the first message and the second message by using the first transmit power.

According to the foregoing solution, the first terminal device may determine the same transmit power based on the first path loss and/or the second path loss, and send the first message and the second message on different links in a same time domain unit by using the same transmit power. This avoids a problem that during transmission of different messages in the same time domain unit, an additional AGC symbol and an additional TP symbol are needed because of using different transmit powers, and reduces a waste of resources in the time domain unit, thereby improving transmission efficiency and performance.

In addition, a proper transmit power is determined based on the first path loss and/or the second path loss, to ensure performance of receiving a to-be-sent message.

It should be understood that the first transmit power may be determined based on the first message, or may be determined based on the second message. For example, the first transmit power may be a transmit power for the first message. For another example, the first transmit power may be a transmit power for the second message.

In an implementation, the method 500 may further include: The first terminal device obtains fifth configuration information, where the fifth configuration information indicates the first terminal device to determine the first transmit power based on the first message, to determine the first transmit power based on a message with a higher priority in the first message and the second message, or to determine the first transmit power based on the second message.

Optionally, that a first terminal device determines a first transmit power in S510 includes: The first terminal device determines a second parameter $B$, where the second parameter $B$ is related to the first path loss and/or the second path loss; and the first terminal device determines the first transmit power based on the second parameter B.

In other words, the first terminal device may first determine the second parameter, and then determine the first transmit power.

For example, "the second parameter is related to the first path loss and/or the second path loss" can be understood as "the second parameter changes with the first path loss and the second path loss", "the second parameter is determined based on the first path loss and the second path loss", "the second parameter changes with the first path loss", "the second parameter is determined based on the first path loss", "the second parameter changes with the second path loss", or "the second parameter is determined based on the second path loss". "The first transmit power is related to the second parameter" can be understood as "the first transmit power changes with the second parameter", or "the first transmit power is determined based on the second parameter".

The second parameter B is determined based on any one of the following:

(1) a larger value of the first path loss and the second path loss;

(2) a smaller value of the first path loss and the second path loss;

(3) a path loss of a sidelink on which the message with the higher priority in the first message and the second message is located;

(4) a larger value of a second power parameter of the first message and a second power parameter of the second message;

(5) a smaller value of a second power parameter of the first message and a second power parameter of the second message;

(6) a second power parameter of the message with the higher priority in the first message and the second message; or

(7) at least three of a first power parameter of the first message, a second power parameter of the first message, a first power parameter of the second message, and a second power parameter of the second message, where

the second power parameter of the first message mentioned above is determined based on the first path loss, and the second power parameter of the second message mentioned above is determined based on the second path loss.

In an example, $PL_{SL,1}$ represents the first path loss, $PL_{SL,2}$ represents the second path loss, and $PL_{SL,x}$ represents the path loss of the sidelink on which the message with the higher priority in the first message and the second message is located, or $PL_{SL,x}$ represents a path loss, indicated by signaling, of a sidelink on which a message used to determine the second parameter in the first message and the second message is located; $P_{1,SL}(i)$ represents the second power parameter of the first message at a transmission moment $i$, $P_{2,SL}(i)$ represents the second power parameter of the second message at the transmission moment i, and $P_{x,SL}(i)$ represents the second power parameter of the message with the higher priority in the first message and the second message at the transmission moment i, or $P_{x,SL}(i)$ represents a second power parameter, indicated by signaling, of a message used to determine the second parameter at the transmission moment i in the first message and the second message; and $P_{1,D}(i)$ represents the first power parameter of the first message at the transmission moment $i$, and $P_{2,D}(i)$ represents the first power parameter of the second message at the transmission moment $i$. In this case, the second parameter B may be determined based on any one of the following:

$$min\left(PL_{SL,1}, PL_{SL,2}\right);$$

$$max\left(PL_{SL,1}, PL_{SL,2}\right);$$

$$PL_{SL,x};$$

$$min\left(P_{1,SL}(i), P_{2,SL}(i)\right);$$

$$max\left(P_{1,SL}(i), P_{2,SL}(i)\right);$$

$$P_{x,SL}(i);$$

$$min\left(P_{1,D}(i), P_{1,SL}(i), P_{2,D}(i), P_{2,SL}(i)\right);$$

$$max\left(min\left(P_{1,D}(i), P_{1,SL}(i)\right), min\left(P_{2,D}(i), P_{2,SL}(i)\right)\right);$$

$$max\left(min\left(P_{1,D}(i), P_{2,D}(i)\right), min\left(P_{1,SL}(i), P_{2,SL}(i)\right)\right);$$

$$min\left(P_{1,D}(i), min\left(P_{1,SL}(i), P_{2,SL}(i)\right)\right);$$

$$min\left(P_{1,D}(i),max\left(P_{1,SL}(i),P_{2,SL}(i)\right)\right);$$

and

$$max\left(min\left(P_{1,D}(i),P_{2,D}(i)\right),P_{1,SL}(i)\right),$$

where

$max()$ represents taking a maximum value from a plurality of numerals, and $min()$ represents taking a minimum value from a plurality of numerals.

Optionally, that a first terminal device determines a first transmit power in S510 includes: The first terminal device determines the transmit power for the first message, where the transmit power for the first message is related to the second parameter B, and the transmit power for the first message is the first transmit power.

In other words, the first terminal device uses the transmit power for the first message as the first transmit power.

That the transmit power for the first message is related to the second parameter B can be understood as follows: The transmit power for the first message is determined based on the second parameter $B$.

The following describes this embodiment of this application by using an example in which the first message is carried in the PSSCH and the second message is the SL-PRS.

In an implementation scenario, the second parameter B satisfies any one of the following conditions:

$$(1)\ B = min\left(PL_{SL,PSSCH},PL_{SL,SL-PRS}\right);$$

$$(2)\ B = max\left(PL_{SL,PSSCH},PL_{SL,SL-PRS}\right);$$

and

$$(3)\ B = PL_{SL,x},$$

where

$max()$ represents taking a maximum value from a plurality of numerals, $min()$ represents taking a minimum value from a plurality of numerals, $PL_{SL,PSSCH}$ represents the first path loss, $PL_{SL,SL-PRS}$ represents the second path loss, and $PL_{SL,x}$ represents the path loss of the sidelink on which the message with the higher priority in the first message and the second message is located, or $PL_{SL,x}$ represents the path loss, indicated by the signaling, of the sidelink on which the message used to determine the second parameter in the first message and the second message is located.

When $B = min(PL_{SL,PSSCH},PL_{SL,SL-PRS})$, that is, when the first transmit power may be determined based on the smaller value of the first path loss and the second path loss, a minimum path loss requirement of the first sidelink and the second sidelink can be met, and an unnecessary waste of power can be avoided.

When $B = max(PL_{SL,PSSCH},PL_{SL,SL-PRS})$, that is, when the first transmit power may be determined based on the larger value of the first path loss and the second path loss, transmit power requirements of the first sidelink and the second sidelink can be met, and better transmission performance is provided.

When $B=PL_{SL,x}$, that is, when the first transmit power may be based on the path loss of the sidelink on which the message with the higher priority in the first message and the second message is located, transmission of the message with the higher priority can be ensured, and higher flexibility is provided.

In this implementation scenario, the first terminal device may determine a transmit power for the PSSCH by using any one of the following formulas:

$$P_{PSSCH}(i) = min\begin{pmatrix} P_{CMAX}, \\ P_{MAX,CBR}, \\ min\left(P_{PSSCH,D}(i),P_{PSSCH,SL}(i)\right) \end{pmatrix} \qquad (31)$$

$$P_{PSSCH}(i) = min \begin{pmatrix} P_{CMAX}, \\ min\left(P_{PSSCH,D}(i), P_{PSSCH,SL}(i)\right) \end{pmatrix} \qquad (32)$$

$$P_{PSSCH}(i) = min \begin{pmatrix} P_{MAX,CBR}, \\ min\left(P_{PSSCH,D}(i), P_{PSSCH,SL}(i)\right) \end{pmatrix} \qquad (33)$$

$$P_{PSSCH}(i) = min\left(P_{PSSCH,D}(i), P_{PSSCH,SL}(i)\right) \qquad (34)$$

A parameter $P_{PSSCH,D}(i)$ in any one of formula (31) to formula (34) satisfies:

$$P_{PSSCH,D}(i) = P_{O,D} + 10log_{10}\left(2^{\mu} \cdot M_{RB}^{PSSCH}(i)\right) + \alpha_D \cdot PL_D.$$

A parameter $P_{PSCCH,SL}(i)$ in any one of formula (31) to formula (34) satisfies:

$$P_{PSSCH,SL}(i) = P_{O,SL} + 10log_{10}\left(2^{\mu} \cdot M_{RB}^{PSSCH}(i)\right) + \alpha_{SL} \cdot B.$$

$P_{PSSCH}(i)$ represents the transmit power for the PSSCH at the transmission moment $i$, $P_{CMAX}$ represents a maximum transmit power of the first terminal device, $P_{MAX,CBR}$ is a power value associated with a channel busy ratio CBR of a resource pool, $P_{PSSCH,D}(i)$ represents the first power parameter of the PSSCH at the transmission moment $i$, $P_{PSSCH,SL}(i)$ represents the second power parameter of the PSSCH at the transmission moment $i$, $P_{O,D}$ is a power parameter of the first terminal device and a serving cell, $\alpha_D$ is a power parameter of the first terminal device and the serving cell, $PL_D$ is a downlink path loss between the first terminal device and the serving cell, $P_{O,SL}$ is a power parameter of the first terminal device on a sidelink, $\alpha_{SL}$ is a power parameter of the first terminal device on the sidelink, $\mu$ is a subcarrier spacing for sending the PSCCH by the first terminal device, and $M_{RB}^{PSSCH}(i)$ represents a bandwidth for the PSSCH at the transmission moment i. The bandwidth may be an RB size occupied by the PSSCH, or may be a bandwidth occupied by the PSSCH. For a difference between the RB size and the bandwidth, refer to the method 200. Details are not described herein again.

It should be understood that in this implementation scenario, the bandwidth for the PSSCH and a bandwidth for the SL-PRS may be the same, that is, $M_{RB}^{PSSCH}(i)=M_{RB}^{SL-PRS}(i)$. In this case, the first transmit power can also be understood as a transmit power for the SL-PRS.

Specifically, the transmit power for the SL-PRS may be determined by using any one of the following formulas:

$$P_{SL-PRS}(i) = min \begin{pmatrix} P_{CMAX}, \\ P_{MAX,CBR}, \\ min\left(P_{SL-PRS,D}(i), P_{SL-PRS,SL}(i)\right) \end{pmatrix} \qquad (35)$$

$$P_{SL-PRS}(i) = min \begin{pmatrix} P_{CMAX}, \\ min\left(P_{SL-PRS,D}(i), P_{SL-PRS,SL}(i)\right) \end{pmatrix} \qquad (36)$$

$$P_{SL-PRS}(i) = min \begin{pmatrix} P_{MAX,CBR}, \\ min\left(P_{SL-PRS,D}(i), P_{SL-PRS,SL}(i)\right) \end{pmatrix} \qquad (37)$$

$$P_{SL-PRS}(i) = min\left(P_{SL-PRS,D}(i), P_{SL-PRS,SL}(i)\right) \qquad (38)$$

A parameter $P_{SL\text{-}PRS,D}(i)$ in any one of formula (35) to formula (38) satisfies:

$$P_{SL-PRS,D}(i) = P_{O,D} + 10log_{10}\left(2^{\mu} \cdot M_{RB}^{SL-PRS}(i)\right) + \alpha_D \cdot PL_D \,.$$

A parameter $P_{SCCH,SL}(i)$ in any one of formula (35) to formula (38) satisfies:

$$P_{SL-PRS,SL}(i) = P_{O,SL} + 10log_{10}\left(2^{\mu} \cdot M_{RB}^{SL-PRS}(i)\right) + \alpha_{SL} \cdot B \,.$$

$P_{SL\text{-}PRS}(i)$ represents the transmit power for the SL-PRS at the transmission moment $i$, $P_{SL\text{-}PRS,D}(i)$ represents the first power parameter of the SL-PRS at the transmission moment $i$, $P_{SL\text{-}PRS,SL}(i)$ represents the second power parameter of the SL-PRS at the transmission moment $i$, $\mu$ is a subcarrier spacing for sending the SL-PRS by the first terminal device, and $M_{RB}^{SL-PRS}(i)$ represents the bandwidth for the SL-PRS at the transmission moment i. The bandwidth may be an RB size occupied by the SL-PRS, or may be a bandwidth occupied by the SL-PRS. For a difference between the RB size and the bandwidth, refer to the method 200. Details are not described herein again. $P_{CMAX}$, $P_{MAX,CRB}$, $P_{O,D}$, $\alpha_D$, $PL_D$, $P_{O,SL}$, and $\alpha_{SL}$ are correspondingly the same as those of the parameters $P_{CMAX}$, $P_{MAX,CRB}$, $P_{O,D}$, $\alpha_D$, $PL_D$, $P_{O,SL}$, and $\alpha_{SL}$ in formula (31) to formula (34).

Because $M_{RB}^{PSSCH}(i) = M_{RB}^{SL-PRS}(i)$, a transmit power for the PSSCH determined by using formula (31) is the same as a transmit power for the SL-PRS determined by using formula (35), a transmit power for the PSSCH determined by using formula (32) is the same as a transmit power for the SL-PRS determined by using formula (36), a transmit power for the PSSCH determined by using formula (33) is the same as a transmit power for the SL-PRS determined by using formula (37), and a transmit power for the PSSCH determined by using formula (34) is the same as a transmit power for the SL-PRS determined by using formula (38). In other words, the first transmit power is the transmit power for the PSSCH, and is also the transmit power for the SL-PRS.

It should be understood that the bandwidth for the PSSCH may be indicated by a network device to the first terminal device, or may be preconfigured. Similarly, the bandwidth for the SL-PRS may be indicated by the network device to the first terminal device, or may be preconfigured.

In another implementation scenario, the second parameter B satisfies any one of the following conditions:

$$(1) \ B = min\left(P_{PSSCH,D}(i), min\left(P_{PSSCH,SL}(i), P_{SL-PRS,SL}(i)\right)\right);$$

$$(2) \ B = min\left(P_{PSSCH,D}(i), max\left(P_{PSSCH,SL}(i), P_{SL-PRS,SL}(i)\right)\right);$$

$$(3) \ B = min\left(P_{PSSCH,D}(i), P_{x,SL}(i)\right);$$

$$(4) \ B = min\left(P_{PSSCH,D}(i), P_{PSSCH,SL}(i), P_{SL-PRS,D}(i), P_{SL-PRS,SL}(i)\right);$$

$$(5) \ B = max\left(min\left(P_{PSSCH,D}(i), P_{PSSCH,SL}(i)\right), min\left(P_{SL-PRS,D}(i), P_{SL-PRS,SL}(i)\right)\right);$$

$$(6) \ B = max\left(min\left(P_{PSSCH,D}(i), P_{SL-PRS,D}(i)\right), min\left(P_{PSSCH,SL}(i), P_{SL-PRS,SL}(i)\right)\right);$$

and

$$(7) \ B = max\left(min\left(P_{PSSCH,D}(i), P_{SL-PRS,D}(i)\right), P_{PSSCH,SL}(i)\right),$$

, where
max() represents taking a maximum value from a plurality of numerals, $min()$ represents taking a minimum value from a plurality of numerals, $P_{PSSCH, D}(i)$ represents the first power parameter of the $_{PSSCH}$ at the transmission moment $i$, $P_{PSSCH,SL}(i)$ represents the second power parameter of the PSSCH at the transmission moment $i$, $P_{SL-PRS,D}(i)$ represents the first power parameter of the SL-PRS at the transmission moment $i$, $P_{SL-PRS,SL}(i)$ represents the second power parameter of the SL-PRS at the transmission moment i, and $P_{x,SL}(i)$ represents the second power parameter of the message with the higher priority in the first message and the second message at the transmission moment i, or $P_{x,SL}(i)$ represents the second power parameter, indicated by the signaling, of the message used to determine the second parameter at the transmission moment $i$ in the first message and the second message; and $P_{PSSCH,D}(i)$ is determined based on first downlink power parameters, $P_{PSSCH,SL}(i)$ is determined based on first sidelink power parameters,

$P_{SL-PRS,D}(i)$ is determined based on second downlink power parameters, $P_{SL-PRS,SL}(i)$ is determined based on second sidelink power parameters, the first sidelink power parameters include the first path loss, and the second sidelink power parameters include the second path loss.

In this implementation scenario, the first terminal device may determine a transmit power for the PSSCH by using any one of the following formulas:

$$P_{PSSCH}(i) = min \begin{pmatrix} P_{CMAX}, \\ P_{MAX,CBR}, \\ B \end{pmatrix} \qquad (39)$$

$$P_{PSSCH}(i) = min \begin{pmatrix} P_{CMAX}, \\ B \end{pmatrix} \qquad (40)$$

$$P_{PSSCH}(i) = min \begin{pmatrix} P_{MAX,CBR}, \\ B \end{pmatrix} \qquad (41),$$

where

$P_{PSSCH}(i)$ represents the transmit power for the PSSCH at the transmission moment $i$, $P_{CMAX}$ represents a maximum transmit power of the first terminal device, and $P_{MAX,CBR}$ is a power value associated with a channel busy ratio CBR of a resource pool.

For example, the first sidelink power parameters in this application include a first sidelink power parameter $P_{O,SL,PSSCH}$, a first sidelink power parameter $\alpha_{SL,PSSCH}$, and the first path loss $PL_{SL,PSSCH}$.

The second sidelink power parameters include a second sidelink power parameter $P_{O,SL,SL-PRS}$, a second sidelink power parameter $\alpha_{SL, SL-PRS}$, and the second path loss $PL_{SL,SL-PRS}$.

The first downlink power parameters include a power parameter $P_{O,D, PSSCH}$ of the first terminal device and a serving cell, a power parameter $\alpha_{D, PSSCH}$ of the first terminal device and the serving cell, and a downlink path loss $PL_D$ between the first terminal device and the serving cell.

The second downlink power parameters include a power parameter $P_{O,D,SL-PRS}$ of the first terminal device and the serving cell, a power parameter $\alpha_{D, SL-PRS}$ of the first terminal device and the serving cell, and a downlink path loss $PL_D$ between the first terminal device and the serving cell.

It should be understood that, although both $P_{O,D,PSSCH}$ and $P_{O,D,SL-PRS}$ are power parameters of the first terminal device and the serving cell, because signal characteristics of the PSSCH and the SLPRS are different, potential interference to cellular uplink transmission may also be different. In this case, the network device may configure the foregoing power parameters separately for the PSSCH and the SL-PRS, that is, a value of $P_{O,D,PSSCH}$ may be the same as or different from a value of $P_{O,D,SL-PRS}$.

Similarly, a value of $\alpha_{D, PSSCH}$ may be the same as or different from a value of $\alpha_{D,SL-PRS}$.

In addition, the serving cell in this application is a serving cell of the first terminal device, and the serving cell may be managed by the network device to which the terminal device establishes a connection.

In an implementation of this implementation scenario, values of $P_{O,SL,PSSCH}$ and $P_{O,SL,SL-PRS}$ are the same, values of $\alpha_{SL,PSSCH}$ and $\alpha_{SL,SL-PRS}$ are the same, values of $P_{O,D,PSSCH}$ and $P_{O,D,SL-PRS}$ are the same, and values of $\alpha_{D, PSSCH}$ and $\alpha_{D, SL-PRS}$ are the same.

For example, in this implementation, an expression of the second parameter B may be any one of the following:

$$(1) \quad B = min\left(P_{PSSCH, D}(i), min\left(P_{PSSCH, SL}(i), P_{SL-PRS, SL}(i)\right)\right);$$

$$(2) \quad B = min\left(P_{PSSCH,D}(i), max\left(P_{PSSCH,SL}(i), P_{SL-PRS,SL}(i)\right)\right);$$

and

$$(3) \quad B = min\left(P_{PSSCH,D}(i), P_{x,SL}(i)\right).$$

In another implementation of this implementation scenario, values of $P_{O,SL,PSSCH}$ and $P_{O,SL,SL-PRS}$ are different, values of $\alpha_{SL,PSSCH}$ and $\alpha_{SL,SL-PRS}$ are different, values of $P_{O,D,PSSCH}$ and $P_{O,D,SL-PRS}$ are different, and values of $\alpha_{D,PSSCH}$ and $\alpha_{D,SL-PRS}$ are different.

For example, in this implementation, an expression of the second parameter B may be any one of the following:

$$(1) \quad B = min\left(P_{PSSCH,D}(i), P_{PSSCH,SL}(i), P_{SL-PRS,D}(i), P_{SL-PRS,SL}(i)\right);$$

and

$$(2) \quad B = max\left(min\left(P_{PSSCH,D}(i), P_{PSSCH,SL}(i)\right), min\left(P_{SL-PRS,D}(i), P_{SL-PRS,SL}(i)\right)\right);$$

and

$$(3) \quad B = max\left(min\left(P_{PSSCH,D}(i), P_{SL-PRS,D}(i)\right), min\left(P_{PSSCH,SL}(i), P_{SL-PRS,SL}(i)\right)\right).$$

In another implementation of this implementation scenario, values of $P_{O,SL,PSSCH}$ and $P_{O,SL,SL-PRS}$ are different, values of $\alpha_{SL,PSSCH}$ and $\alpha_{SL,SL-PRS}$ are different, values of $P_{O,D,PSSCH}$ and $P_{O,D,SL-PRS}$ are the same, and values of $\alpha_{D,PSSCH}$ and $\alpha_{D,SL-PRS}$ are the same.

For example, in this implementation, an expression of the second parameter B may be any one of the following:

$$(1) \quad B = min\left(P_{PSSCH,D}(i), min\left(P_{PSSCH,SL}(i), P_{SL-PRS,SL}(i)\right)\right);$$

and

$$(2) \quad B = min\left(P_{PSSCH,D}(i), max\left(P_{PSSCH,SL}(i), P_{SL-PRS,SL}(i)\right)\right).$$

In another implementation of this implementation scenario, values of $P_{O,SL,PSSCH}$ and $P_{O,SL,SL-PRS}$ are the same, values of $\alpha_{SL,PSSCH}$ and $\alpha_{SL,SL-PRS}$ are the same, values of $P_{O,D,PSSCH}$ and $P_{O,D,SL-PRS}$ are different, and values of $\alpha_{D,PSSCH}$ and $\alpha_{D,SL-PRS}$ are different.

For example, in this implementation, an expression of the second parameter B may be:

$$B = max\left(min\left(P_{PSSCH,D}(i), P_{SL-PRS,D}(i)\right), P_{PSSCH,SL}(i)\right).$$

Optionally, in this implementation scenario, parameters $P_{PSSCH,D}(i)$, $P_{PSSCH,SL}(i)$, $P_{SL-PRS,D}(i)$, and $P_{SL-PRS,SL}(i)$ in any one of formula (39) to formula (41) respectively satisfy the following conditions:

$$P_{PSSCH,D}(i) = P_{O,D,PSSCH} + 10log_{10}\left(2^{\mu} \cdot M_{RB}^{PSSCH}(i)\right) + \alpha_{D,PSSCH} \cdot PL_{D};$$

$$P_{PSSCH,SL}(i) = P_{O,SL,PSSCH} + 10log_{10}\left(2^{\mu} \cdot M_{RB}^{PSSCH}(i)\right) + \alpha_{SL,PSSCH} \cdot PL_{SL,PSSCH};$$

$$P_{SL-PRS,D}(i) = P_{O,D,SL-PRS} + 10log_{10}\left(2^{\mu} \cdot M_{RB}^{SL-PRS}(i)\right) + \alpha_{D,SL-PRS} \cdot PL_{D};$$

and

$$P_{PSL-PRS,SL}(i) = P_{O,SL,SL-PRS} + 10log_{10}\left(2^{\mu} \cdot M_{RB}^{SL-PRS}(i)\right) + \alpha_{SL,SL-PRS} \cdot PL_{SL,SL-PRS},$$

where

$\mu$ is the subcarrier spacing for sending the PSSCH by the first terminal device, $M_{RB}^{PSSCH}(i)$ represents the bandwidth for the PSSCH at the transmission moment $i$, and $M_{RB}^{SL-PRS}(i)$ represents a bandwidth for the SL-PRS at the transmission moment $i$. $M_{RB}^{PSSCH}(i)$ may be the same as or different from $M_{RB}^{SL-PRS}(i)$. This is not limited in this application.

Optionally, in any one of the implementation scenarios in this embodiment of this application, values of $PL_{SL,PSSCH}$ and $PL_{SL,SL-PRS}$ are different.

In other words, the first sidelink and the second sidelink have different path losses.

Optionally, in any one of the implementation scenarios in this embodiment of this application,

$P_{MAX,CBR}$ is a smaller value of a first power value $P_{MAX,CBR,PSSCH}$ and a second power value $P_{MAX,CBR,SL-PRS}$; the first power value $P_{MAX,CBR,PSSCH}$ is a power value that is associated with the channel busy ratio CBR of the resource pool and that is obtained based on the PSSCH, or is referred to as a power value associated with a transmission priority of the PSCCH; and the second power value $P_{MAX,CBR,SL-PRS}$ is a power value that is associated with the channel busy ratio CBR of the resource pool and that is obtained based on the SL-PRS, or is referred to as a power value associated with a transmission priority of the SL-PRS. The smaller value is represented as follows:

$$P_{MAX,CBR} = min\left(P_{MAX,CBR,PSSCH}, P_{MAX,CBR,SL-PRS}\right).$$

For example, the parameter $P_{MAX,CBR}$ in any one of formula (39) to formula (41) may be replaced with $min$ $(P_{MAX,CBR,PSSCH}, P_{MAX,CBR,SL-PRS})$.

Optionally, in any one of the implementation scenarios in this embodiment of this application, a value of $P_{MAX,CBR}$ is configured by the network device for the first terminal device, and values of $P_{MAX,CBR}$ on the first sidelink and the second sidelink are the same. In this case, the value of $P_{MAX,CBR}$ may be the same as $P_{MAX,CBR,PSSCH}$ or $P_{MAX,CBR,SL-PRS}$, or may be another value. This is not limited in this application.

Optionally, in this application, the second terminal device and the third terminal device each may be a receiving device in unicast communication, or may be a plurality of receiving devices in multicast communication. This is not limited in embodiments of this application.

It can be understood that the examples in FIG. 5 to FIG. 10 in embodiments of this application are merely intended to help a person skilled in the art understand embodiments of this application, but are not intended to limit embodiments of this application to specific scenarios in the examples. It is clear that a person skilled in the art can make various equivalent modifications or variations based on the examples in FIG. 5 to FIG. 10, and such modifications or variations also fall within the scope of embodiments of this application.

In addition, unless otherwise specified or there is a logical conflict between embodiments of this application, different embodiments may be combined to form a new embodiment.

For example, the method 200 and the method 500 may be combined to form a new embodiment. In the new embodiment, the UE 1 (an example of the first terminal device) may send a PSCCH (an example of the first message in the method 200, and also an example of the fourth message in the method 500) and an SL-PRS (an example of the second message in the method 200, and also an example of the second message in the method 500) to the UE 2 (an example of the second terminal device) by using a power value #1, and sends a PSSCH (an example of the first message in the method 500) to a UE 3 by using the power value #1. Resources for the PSCCH and the SL-PRS are consecutive in time domain, and the SL-PRS and the PSSCH are located in a same slot. It should also be understood that, unless otherwise specified or there is a logical conflict between embodiments of this application, terms and/or descriptions in different embodiments are consistent and may be referenced by each other.

It can also be understood that "transmission" is mentioned in some of the foregoing embodiments, and unless otherwise specified, transmission includes receiving and/or sending. For example, transmitting a positioning reference signal may include receiving a positioning reference signal and/or sending a positioning reference signal.

It can also be understood that in some of the foregoing embodiments, a device in an existing network architecture is mainly used as an example for description. It should be understood that a specific form of the device is not limited in embodiments of this application. For example, devices that can implement a same function in the future are all applicable to embodiments of this application.

It can be understood that in the foregoing method embodiments, the methods and operations implemented by devices (for example, the first terminal device and the second terminal device) may be alternatively implemented by components (for example, a chip or a circuit) that can be used for the devices.

It can also be understood that in embodiments of this application, interaction between the first terminal device and the second terminal device is mainly used as an example for description. This application is not limited thereto. The first terminal device may be replaced with a receive end device, and the second terminal device may be replaced with a transmit end device.

It can also be understood that some optional features in embodiments of this application may be independent of other features in some scenarios, or may be combined with other features in some scenarios. This is not limited.

With reference to FIG. 1 to FIG. 7, the foregoing details communication methods provided in embodiments of this application. The foregoing communication methods are mainly described from a perspective of interaction between the first terminal device and the second terminal device. It can be understood that, to implement the foregoing functions, the first terminal device and the second terminal device include corresponding hardware structures and/or software modules for performing the functions.

A person skill in the art should be aware that, with reference to the examples described in embodiments disclosed in this specification, units and algorithm steps can be implemented by hardware or a combination of hardware and computer software in this application. Whether a function is performed by hardware or computer software driving hardware depends on particular applications and design constraints of the technical solutions. A person skilled in the art may use a different method to implement the described functions for each particular application, but it should not be considered that the implementation goes beyond the scope of this application.

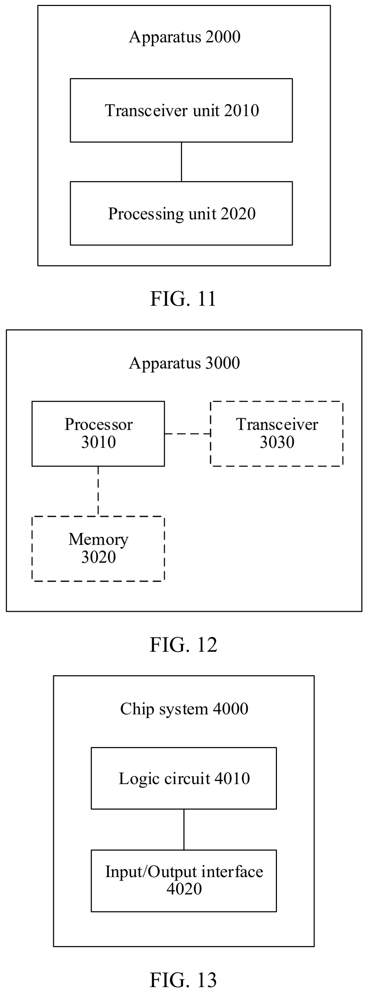

With reference to FIG. 11 to FIG. 13, the following details communication apparatuses provided in embodiments of this application. It should be understood that descriptions of the apparatus embodiments are corresponding to the descriptions of the method embodiments. Therefore, for content that is not detailed, refer to the foregoing method embodiments. For brevity, some content is not described again.

In embodiments of this application, functional modules of a transmit end device or a receive end device may be obtained through division based on the foregoing method examples. For example, functional modules may be obtained through division in correspondence to functions, or two or more functions may be integrated into one processing module. The integrated module may be implemented in a form of hardware, or may be implemented in a form of a software functional module. It should be noted that division into modules in embodiments of this application is an example, is merely logical function division, and may be other division during actual implementation. The following uses examples for description in which functional modules are obtained through division in correspondence to functions.

FIG. 11 is a block diagram of an apparatus 2000 according to an embodiment of this application. The apparatus 2000 includes a transceiver unit 2010 and a processing unit 2020. The transceiver unit 2010 may implement a corresponding communication function, and the processing unit 2020 is configured to process data. The transceiver unit 2010 may also be referred to as a communication interface or a communication unit.

Optionally, the apparatus 2000 may further include a storage unit. The storage unit may be configured to store instructions and/or data, and the processing unit 2020 may read the instructions and/or the data in the storage unit, so that the apparatus implements the foregoing method embodiments.

The apparatus 2000 may be configured to perform actions performed by devices (for example, the first terminal device, the second terminal device, the third terminal device, and the first device) in the foregoing method embodiments. In this case, the apparatus 2000 may be a device or a component that may be configured in the device. The transceiver unit 2010 is configured to perform receiving and sending related operations performed by the devices in the foregoing method embodiments. The processing unit 2020 is configured to perform processing related operations performed by the devices in the foregoing method embodiments.

In a possible design, the communication apparatus 2000 may be the first terminal device in the foregoing method embodiment (for example, the method 200, the method 300, the method 400, or the method 500), or may be a component configured to implement functions of the first terminal device in the foregoing method embodiment (for example, the method 200, the method 300, the method 400, or the method 500), for example, a chip, a circuit, or a module. The transceiver unit 2010 is configured to perform receiving and sending related operations performed by the first terminal device side or the UE 1 side in the foregoing method embodiment (for example, the method 200, the method 300, the method 400, or the method 500). The processing unit 2020 is configured to perform processing related operations performed by the first terminal device side or the UE 1 side in the foregoing method embodiment (for example, the method 200, the method 300, the method 400, or the method 500).

The apparatus 2000 may implement steps or procedures that are performed by the first terminal device or the UE 1 in the method embodiments according to embodiments of this application.

It should be understood that specific processes of performing the corresponding steps by the units are detailed in the foregoing method embodiments. For brevity, details are not described herein again.

In a possible design, the communication apparatus 2000 may be the second terminal device in the foregoing method embodiment (for example, the method 200, the method 300, the method 400, or the method 500), or may be a component configured to implement functions of the second terminal device in the foregoing method embodiment (for example, the method 200, the method 300, the method 400, or the method 500), for example, a chip, a circuit, or a module. The transceiver unit 2010 is configured to perform receiving and sending related operations performed by the second terminal device side or the UE 2 side in the foregoing method embodiment (for example, the method 200, the method 300, the method 400, or the method 500). The processing unit 2020 is configured to perform processing related operations performed by the second terminal device side or the UE 2 side in the foregoing method embodiment (for example, the method 200, the method 300, the method 400, or the method 500).

The apparatus 2000 may implement steps or procedures that are performed by the second terminal device or the UE 2 in the method embodiments according to embodiments of this application.

It should be understood that specific processes of performing the corresponding steps by the units are detailed in the foregoing method embodiments. For brevity, details are not described herein again.

In a possible design, the communication apparatus 2000 may be the first device in the foregoing method embodiment (for example, the method 200 or the method 300), or may be a component configured to implement functions of the first terminal device in the foregoing method embodiment (for example, the method 200 or the method 300), for example, a chip, a circuit, or a module. The transceiver unit 2010 is configured to perform receiving and sending related operations performed by the first device side in the foregoing method embodiment (for example, the method 200 or the method 300). The processing unit 2020 is configured to perform processing related operations performed by the first device side in the foregoing method embodiment (for example, the method 200 or the method 300).

The apparatus 2000 may implement steps or procedures that are performed by the first device in the method embodiments according to embodiments of this application.

It should be understood that specific processes of performing the corresponding steps by the units are detailed in the foregoing method embodiments. For brevity, details are not described herein again.

In a possible design, the communication apparatus 2000 may be the third terminal device in the foregoing method embodiment (for example, the method 500), or may be a component configured to implement functions of the first terminal device in the foregoing method embodiment (for example, the method 500), for example, a chip, a circuit, or a module. The transceiver unit 2010 is configured to perform receiving and sending related operations performed by the third terminal device side in the foregoing method embodiment (for example, the method 500). The processing unit 2020 is configured to perform processing related operations performed by the third terminal device side in the foregoing method embodiment (for example, the method 500).

The apparatus 2000 may implement steps or procedures that are performed by the third terminal device in the method embodiments according to embodiments of this application.

It should be understood that specific processes of performing the corresponding steps by the units are detailed in the foregoing method embodiments. For brevity, details are not described herein again.

It should also be understood that the apparatus 2000 herein is embodied in a form of a functional unit. The term "unit" herein may be an application-specific integrated circuit (application-specific integrated circuit, ASIC), an electronic circuit, a processor configured to execute at least one software or firmware program (for example, a shared processor, a dedicated processor, or a packet processor), a memory, a combinational logic circuit, and/or another appropriate component supporting the described functions. In an optional example, a person skilled in the art can understand that the apparatus 2000 may be specifically the device in the foregoing embodiments, and may be configured to perform procedures and/or steps corresponding to the device in the foregoing method embodiments. To avoid repetition, details are not described herein again.

The apparatus 2000 in each of the foregoing solutions has a function of implementing corresponding steps performed by the terminal device in the foregoing methods. The function may be implemented by using hardware, or may be implemented by hardware executing corresponding software. The hardware or the software includes at least one module corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to respectively perform receiving and sending operations and processing related operations in the method embodiments.

In addition, the transceiver unit 2010 may be alternatively a transceiver circuit (which may include, for example, a receiving circuit and a sending circuit), and the processing unit 2020 may be a processing circuit.

It should be noted that the apparatus in FIG. 11 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

As shown in FIG. 12, an embodiment of this application further provides an apparatus 3000. The apparatus 3000 includes a processor 3010, and may further include one or more memories 3020. The processor 3010 is coupled to the memory 3020. The memory 3020 is configured to store a computer program or instructions and/or data. The processor 3010 is configured to execute the computer program or instructions and/or the data stored in the memory 3020, so that the methods in the foregoing method embodiments are performed.

Optionally, the apparatus 3000 includes one or more processors 3010.

Optionally, the memory 3020 and the processor 3010 may be integrated, or may be disposed separately.

Optionally, as shown in FIG. 12, the apparatus 3000 may further include a transceiver 3030, where the transceiver 3030 is configured to receive a signal and/or send a signal. For example, the processor 3010 is configured to control the transceiver 3030 to receive the signal and/or send the signal.

For example, the processor 3010 is configured to execute the computer program or instructions stored in the memory 3020, to implement related operations performed by the first terminal device or the UE 1 in the foregoing method embodiments, for example, the method performed by the first terminal device or the UE 1 in any one of the embodiments shown in FIG. 3, FIG. 6, FIG. 8, or FIG. 9.

For another example, the processor 3010 is configured to execute the computer program or instructions stored in the memory 3020, to implement related operations performed by the second terminal device or the UE 2 in the foregoing method embodiments, for example, the method performed by the second terminal device or the UE 2 in any one of the embodiments shown in FIG. 3, FIG. 6, FIG. 8, or FIG. 9.

For another example, the processor 3010 is configured to execute the computer program or instructions stored in the memory 3020, to implement related operations performed by the first device in the foregoing method embodiments, for example, the method performed by the first device in the embodiment shown in FIG. 6.

For another example, the processor 3010 is configured to execute the computer program or instructions stored in the memory 3020, to implement related operations performed by the third terminal device in the foregoing method embodiments, for example, the method performed by the third terminal device in the embodiment shown in FIG. 9.

It should be understood that the processor mentioned in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate, a transistor logic device, a discrete hardware component, or the like. The general-purpose processor may be a microprocessor, or the processor may be any conventional processor or the like.

It should also be understood that the memory mentioned in this embodiment of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM includes a plurality of forms as follows: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate, a transistor logic device, or a discrete hardware component, the memory (a storage module) may be integrated into the processor.

It should also be noted that the memories described in this specification are intended to include but are not limited to these memories and any other appropriate types of memories.

As shown in FIG. 13, an embodiment of this application provides a chip system 4000. The chip system 4000 (or may be referred to as a processing system) includes a logic circuit 4010 and an input/output interface (input/output interface) 4020.

The logic circuit 4010 may be a processing circuit in the chip system 4000. The logic circuit 4010 may be coupled and connected to a storage unit, and invoke instructions in the storage unit, so that the chip system 4000 can implement the methods and functions in embodiments of this application. The input/output interface 4020 may be an input/output circuit in the chip system 4000, and outputs information that is obtained through processing by the chip system 4000, or inputs to-be-processed data or signaling information to the chip system 1600 for processing.

Specifically, for example, if the chip system 4000 is installed in a terminal device, the logic circuit 4010 is coupled to the input/output interface 4020, and the input/output interface 4020 may input a wake-up signal to the logic circuit 4010 for processing.

In a solution, the chip system 4000 is configured to implement operations performed by the first terminal device, the second terminal device, the third terminal device, or the first device in the foregoing method embodiments.

For example, the logic circuit 4010 is configured to implement processing related operations performed by the first terminal device, the second terminal device, the third terminal device, or the first device in the foregoing method embodiments, for example, processing related operations performed by the first terminal device or the second terminal device in the embodiment 200 shown in FIG. 3, processing related operations performed by the first terminal device, the second terminal device, or the first device in the embodiment 300 shown in FIG. 6, or processing related operations performed by the first terminal device, the second terminal device, or the third terminal device in the embodiment 500 shown in FIG. 9. The input/output interface 4020 is configured to implement sending and/or receiving related operations performed by the first terminal device, the second terminal device, the third terminal device, or the first device in the foregoing method embodiments, for example, sending and/or receiving related operations performed by the first terminal device or the second terminal device in the embodiment 200 shown in FIG. 3, sending and/or receiving related operations performed by the first terminal device, the second terminal device, or the first device in the embodiment 300 shown in FIG. 6, or sending and/or receiving related operations performed by the first terminal device, the second terminal device, or the third terminal device in the embodiment 500 shown in FIG. 9.

An embodiment of this application further provides a computer-readable storage medium. The computer-readable storage medium stores computer instructions used to implement the method performed by the device (for example, the first terminal device, the second terminal device, the third terminal device, or the first device) in the foregoing method embodiments.

For example, when the computer program is executed by a computer, the computer is enabled to implement the method performed by the device (for example, the first terminal device, the second terminal device, the third terminal device, or the first device) in the foregoing method embodiments.

An embodiment of this application further provides a computer program product including instructions. When the instructions are executed by a computer, the computer is enabled to implement the method performed by the device (for example, the first terminal device, the second terminal device, the third terminal device, or the first device) in the foregoing method embodiments.

An embodiment of this application further provides a communication system. The communication system includes the first terminal device and the second terminal device in the foregoing embodiments.

Optionally, in the method 500, the communication system may further include the third terminal device.

For descriptions of related content and beneficial effects of any apparatus provided above, refer to the corresponding method embodiments provided above. Details are not described herein again.

A person of ordinary skill in the art can be aware that, in combination with the examples described in embodiments disclosed in this specification, units and steps can be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the protection scope of this application.

In the several embodiments provided in this application, it should be understood that the disclosed apparatuses and methods may be implemented in other manners. For example, the described apparatus embodiments are merely examples. For example, division into units is merely logical function division and may be other division during actual implementation. For example, a plurality of units or components may be combined or may be integrated into another system, or some features may be ignored or not be performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units. To be specific, the parts may be located in one position or may be distributed on a plurality of network units. Some or all of the units may be selected depending on an actual requirement to implement the solutions provided in this application.

In addition, functional units in embodiments of this application may be integrated into one unit, each of the units may exist alone physically, or two or more units may be integrated into one unit. All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   determining, by a first terminal device, a first transmit power, wherein the first transmit power is related to a first bandwidth and/or a second bandwidth, the first bandwidth is a bandwidth for sending a first message, the second bandwidth is a bandwidth for sending a second message, and a time domain resource for the first message and a time domain resource for the second message are consecutive; and
   sending, by the first terminal device, the first message and the second message to a second terminal device by using the first transmit power.

2. The method according to claim 1, wherein determining, by the first terminal device, the first transmit power comprises:

   determining, by the first terminal device, a first parameter, wherein the first parameter is related to the first bandwidth and/or the second bandwidth; and
   determining, by the first terminal device, the first transmit power based on the first parameter, wherein the first parameter is determined based on any one of the following:

   a larger value of the first bandwidth and the second bandwidth;
   a smaller value of the first bandwidth and the second bandwidth;
   the first bandwidth, the second bandwidth, and a frequency domain interval for sending the first message and/or a frequency domain interval for sending the second message;
   the first bandwidth, the second bandwidth, and a subcarrier spacing for sending the first message and/or a subcarrier spacing for sending the second message;
   the first bandwidth, the second bandwidth, a subcarrier spacing for sending the first message and/or a subcarrier spacing for sending the second message, and a frequency domain interval for sending the first message and/or a frequency domain interval for sending the second message;
   the first bandwidth;
   the second bandwidth; or
   a bandwidth for a message with a higher priority in the first message and the second message.

3. The method according to claim 2, wherein the first parameter is determined based on any one of the following:

$$max\left(M^{msg1}(i), M^{msg2}(i)\right);$$

$$max\left(M^{msg1}(i), M^{msg2}(i)/N\right);$$

$$min\left(M^{msg1}(i), M^{msg2}(i)\right);$$

$$min\left(M^{msg1}(i), M^{msg2}(i)/N\right);$$

$$max\left(2^{\mu}\cdot M^{msg1}(i), 2^{\mu}\cdot M^{msg2}(i)\right);$$

$$max\left(2^{\mu}\cdot M^{msg1}(i), 2^{\mu}\cdot M^{msg2}(i)/N\right);$$

$$min\left(2^{\mu}\cdot M^{msg1}(i), 2^{\mu}\cdot M^{msg2}(i)\right);$$

$$min\left(2^{\mu}\cdot M^{msg1}(i), 2^{\mu}\cdot M^{msg2}(i)/N\right);$$

$$M^{msg1}(i);$$

$$M^{msg2}(i);$$

$$M^{msgx}(i);$$

$$2^{\mu}\cdot M^{msg1}(i);$$

$$2^{\mu}\cdot M^{msg2}(i);$$

and

$$2^{\mu}\cdot M^{msgx}(i),$$

wherein
*max*() represents taking a maximum value from a plurality of numerals, *min*() represents taking a minimum value from a plurality of numerals, $M^{msg1}(i)$ represents the first bandwidth at a transmission moment *i*, $M^{msg2}(i)$ represents the second bandwidth at the transmission moment *i*, $M^{msgx}(i)$ represents the bandwidth for the message with the higher priority in the first message and the second message at the transmission moment *i*, $\mu$ is the subcarrier spacing for sending the first message and/or the subcarrier spacing for sending the second message by the first terminal device, and N is the frequency domain interval for sending the second message.

4. The method according to any one of claims 1 to 3, wherein the first message is carried on a physical sidelink control channel PSCCH, the second message is a sidelink positioning reference signal SL-PRS, and determining, by the first terminal device, the first transmit power comprises:
determining, by the first terminal device, the first parameter, wherein the first transmit power is related to the first parameter, and the first parameter A satisfies any one of the following conditions:

$$A = max\left(M_{RB}^{PSCCH}(i), M_{RB}^{SL-PRS}(i)\right);$$

$$A = max\left(M_{RB}^{PSCCH}(i), M_{RB}^{SL-PRS}(i)/N_{comb}\right);$$

$$A = min\left(M_{RB}^{PSCCH}(i), M_{RB}^{SL-PRS}(i)\right);$$

$$A = min\left(M_{RB}^{PSCCH}(i), M_{RB}^{SL-PRS}(i)/N_{comb}\right);$$

$$A = max\left(2^{\mu} \cdot M_{RB}^{PSCCH}(i), 2^{\mu} \cdot M_{RB}^{SL-PRS}(i)\right);$$

$$A = max\left(2^{\mu} \cdot M_{RB}^{PSCCH}(i), 2^{\mu} \cdot M_{RB}^{SL-PRS}(i) / N_{comb}\right);$$

$$A = min\left(2^{\mu} \cdot M_{RB}^{PSCCH}(i), 2^{\mu} \cdot M_{RB}^{SL-PRS}(i)\right);$$

$$A = min\left(2^{\mu} \cdot M_{RB}^{PSCCH}(i), 2^{\mu} \cdot M_{RB}^{SL-PRS}(i) / N_{comb}\right);$$

$$A = M_{RB}^{PSCCH}(i);$$

$$A = 2^{\mu} \cdot M_{RB}^{PSCCH}(i);$$

$$A = M_{RB}^{SL-PRS}(i);$$

$$A = 2^{\mu} \cdot M_{RB}^{SL-PRS}(i);$$

$$A = M_{RB}^{x}(i);$$

and

$$A = 2^{\mu} \cdot M_{RB}^{x}(i),$$

wherein

max() represents taking a maximum value from a plurality of numerals, min() represents taking a minimum value from a plurality of numerals, $M_{RB}^{PSCCH}(i)$ represents the first bandwidth at the transmission moment $i$, $M_{RB}^{SL-PRS}(i)$ represents the second bandwidth at the transmission moment $i$, $M_{RB}^{x}(i)$ represents the bandwidth for the message with the higher priority in the PSCCH and the SL-PRS at the transmission moment $i$, $\mu$ is the subcarrier spacing for sending the PSCCH and/or the subcarrier spacing for sending the SL-PRS by the first terminal device, and $N_{comb}$ is the frequency domain interval for sending the SL-PRS.

5. The method according to claim 4, wherein determining, by the first terminal device, the first transmit power comprises: determining, by the first terminal device, a transmit power for the PSCCH, wherein the transmit power for the PSCCH is related to the first parameter, and the transmit power for the PSCCH is the first transmit power.

6. The method according to claim 4 or 5, wherein the transmit power for the PSCCH satisfies any one of the following conditions:

$$P_{PSCCH}(i) = min\left(\begin{array}{l} P_{CMAX}, \\ min\left(P_{PSCCH,D}(i), P_{PSCCH,SL}(i)\right) + 10log_{10}(A) - 10log_{10}\left(M_{RB}^{PSCCH}(i)\right) \end{array}\right);$$

or

$$P_{PSCCH}(i) = min \begin{pmatrix} P_{CMAX}, \\ min\left(P_{PSCCH,D}(i), P_{PSCCH,SL}(i)\right) + 10log_{10}(A) - 10log_{10}\left(2^{\mu} \cdot M_{RB}^{PSCCH}(i)\right) \end{pmatrix};$$

or

$$P_{PSCCH}(i) = min \begin{pmatrix} P_{CMAX}, \\ min\left(P_{PSCCH,D}(i), P_{PSCCH,SL}(i) + 10log_{10}(A) - 10log_{10}\left(M_{RB}^{PSCCH}(i)\right)\right) \end{pmatrix};$$

or

$$P_{PSCCH}(i) = min \begin{pmatrix} P_{CMAX}, \\ min\left(P_{PSCCH,D}(i), P_{PSCCH,SL}(i) + 10log_{10}(A) - 10log_{10}\left(2^{\mu} \cdot M_{RB}^{PSCCH}(i)\right)\right) \end{pmatrix};$$

or

$$P_{PSCCH}(i) = min \begin{pmatrix} P_{CMAX}, \\ P_{MAX,CBR}, \\ min\left(P_{PSCCH,D}(i), P_{PSCCH,SL}(i)\right) + 10log_{10}(A) - 10log_{10}\left(M_{RB}^{PSCCH}(i)\right) \end{pmatrix};$$

or

$$P_{PSCCH}(i) = min \begin{pmatrix} P_{CMAX}, \\ P_{MAX,CBR}, \\ min\left(P_{PSCCH,D}(i), P_{PSCCH,SL}(i)\right) + 10log_{10}(A) - 10log_{10}\left(2^{\mu} \cdot M_{RB}^{PSCCH}(i)\right) \end{pmatrix};$$

or

$$P_{PSCCH}(i) = min \begin{pmatrix} P_{CMAX}, \\ P_{MAX,CBR}, \\ min\left(P_{PSCCH,D}(i), P_{PSCCH,SL}(i) + 10log_{10}(A) - 10log_{10}\left(M_{RB}^{PSCCH}(i)\right)\right) \end{pmatrix};$$

or

$$P_{PSCCH}(i) = min \begin{pmatrix} P_{CMAX}, \\ P_{MAX,CBR}, \\ min\left(P_{PSCCH,D}(i), P_{PSCCH,SL}(i) + 10log_{10}(A) - 10log_{10}\left(2^{\mu} \cdot M_{RB}^{PSCCH}(i)\right)\right) \end{pmatrix},$$

wherein

$P_{PSCCH,D}(i)$ satisfies:

$$P_{PSCCH,D}(i) = P_{O,D} + 10log_{10}\left(2^{\mu} \cdot M_{RB}^{PSCCH}(i)\right) + \alpha_D \cdot PL_D;$$

or

$$P_{PSCCH,D}(i) = \min\left(P_{CMAX}, P_{MAX,CBR}\right);$$

and
$P_{PSCCH,SL}(i)$ satisfies:

$$P_{PSCCH,SL}(i) = P_{O,SL} + 10log_{10}\left(2^{\mu} \cdot M_{RB}^{PSCCH}(i)\right) + \alpha_{SL} \cdot PL_{SL};$$

or

$$P_{PSCCH,SL}(i) = \min\left(P_{CMAX}, P_{PSSCH,D}(i)\right);$$

or

$$P_{PSCCH,SL}(i) = \min\left(P_{MAX,CBR}, P_{PSSCH,D}(i)\right),$$

wherein
$P_{PSCCH}(i)$ represents the transmit power for the PSCCH at the transmission moment $i$, $P_{CMAX}$ represents a maximum transmit power of the first terminal device, $P_{MAX,CBR}$ is a power value associated with a channel busy ratio CBR of a resource pool, $P_{PSCCH,D}(i)$ represents a first power parameter of the PSCCH at the transmission moment $i$, $P_{PSCCH,SL}(i)$ represents a second power parameter of the PSCCH at the transmission moment $i$, $P_{O,D}$ and $\alpha_D$ are power parameters of the PSCCH, $PL_D$ is a path loss between the first terminal device and a serving cell, $P_{O,SL}$ and $\alpha_{SL}$ are power parameters of the PSCCH, $PL_{SL}$ is a sidelink path loss between the first terminal device and the second terminal device, and $\mu$ is the subcarrier spacing for sending the PSCCH by the first terminal device.

7. The method according to claim 4 or 5, wherein the transmit power for the PSCCH satisfies any one of the following conditions:

$$P_{PSCCH}(i) = min\left(P_{CMAX}, P_{MAX,CBR}, min\left(P_{PSCCH,D}(i), P_{PSCCH,SL}(i)\right)\right);$$

or

$$P_{PSCCH}(i) = min\left(P_{CMAX}, min\left(P_{PSCCH,D}(i), P_{PSCCH,SL}(i)\right)\right);$$

or

$$P_{PSCCH}(i) = min\left(P_{MAX,CBR}, min\left(P_{PSCCH,D}(i), P_{PSCCH,SL}(i)\right)\right),$$

wherein

$P_{PSCCH,D}(i)$ satisfies:

$$P_{PSCCH,D}(i) = P_{O,D} + 10log_{10}\left(A\right) + \alpha_D \cdot PL_D;$$

or

$$P_{PSCCH,D}(i) = P_{O,D} + 10log_{10}\left(2^{\mu} \cdot M_{RB}^{PSCCH}(i)\right) + \alpha_D \cdot PL_D;$$

or

$$P_{PSCCH,D}(i) = P_{O,D} + 10log_{10}\left(M_{RB}^{PSCCH}(i)\right) + \alpha_D \cdot PL_D;$$

or

$$P_{PSCCH,D}(i) = \min\left(P_{CMAX}, P_{MAX,CBR}\right);$$

and
$P_{PSCCH,SL}(i)$ satisfies:

$$P_{PSCCH,SL}(i) = P_{O,SL} + 10log_{10}\left(A\right) + \alpha_{SL} \cdot PL_{SL};$$

or

$$P_{PSCCH,SL}(i) = P_{O,SL} + 10log_{10}\left(2^{\mu} \cdot M_{RB}^{PSCCH}(i)\right) + \alpha_{SL} \cdot PL_{SL};$$

or

$$P_{PSCCH,SL}(i) = P_{O,SL} + 10log_{10}\left(M_{RB}^{PSCCH}(i)\right) + \alpha_{SL} \cdot PL_{SL};$$

or

$$P_{PSCCH,SL}(i) = \min\left(P_{CMAX}, P_{PSSCH,D}\right),$$

wherein
$P_{PSCCH}(i)$ represents the transmit power for the PSCCH at the transmission moment $i$, $P_{CMAX}$ represents a maximum transmit power of the first terminal device, $P_{MAX,CBR}$ is a power value associated with a CBR of a resource pool, $P_{PSCCH,D}(i)$ represents a first power parameter of the PSCCH at the transmission moment $i$, $P_{PSCCH,SL}(i)$ represents a second power parameter of the PSCCH at the transmission moment $i$, $P_{O,D}$ and $\alpha_D$ are power parameters of the PSCCH, $PL_D$ is a path loss between the first terminal device and a serving cell, $P_{O,SL}$ and $\alpha_{SL}$ are power parameters of the PSCCH, $PL_{SL}$ is a sidelink path loss between the first terminal device and the second terminal device, and $\mu$ is the subcarrier spacing for sending the PSCCH by the first terminal device.

8. The method according to any one of claims 1 to 7, wherein the method further comprises:
obtaining, by the first terminal device, first configuration information, wherein the first configuration information indicates the first terminal device to determine the first transmit power based on the first message or to determine the first transmit power based on the message with the higher priority in the first message and the second message.

9. The method according to claim 4, wherein determining, by the first terminal device, the first transmit power comprises:
determining, by the first terminal device, a transmit power for the SL-PRS, wherein the transmit power for the SL-PRS is related to the first parameter, and the transmit power for the SL-PRS is the first transmit power.

10. The method according to claim 9, wherein the transmit power for the SL-PRS satisfies any one of the following conditions:

$$P_{SL-PRS}(i) = min \begin{pmatrix} P_{CMAX}, \\ P_{MAX,CBR}, \\ min\left(P_{SL-PRS,D}(i), P_{SL-PRS,SL}(i)\right) + 10log_{10}(A) - 10log_{10}\left(M_{RB}^{SL-PRS}(i)\right) \end{pmatrix};$$

or

$$P_{SL-PRS}(i) = min \begin{pmatrix} P_{CMAX}, \\ P_{MAX,CBR}, \\ min\left(P_{SL-PRS,D}(i), P_{SL-PRS,SL}(i)\right) + 10log_{10}(A) - 10log_{10}\left(2^{\mu} \cdot M_{RB}^{SL-PRS}(i)\right) \end{pmatrix};$$

or

$$P_{SL-PRS}(i) = min \begin{pmatrix} P_{CMAX}, \\ P_{MAX,CBR}, \\ min\left(P_{SL-PRS,D}(i), P_{SL-PRS,SL}(i) + 10log_{10}(A) - 10log_{10}\left(M_{RB}^{SL-PRS}(i)\right)\right) \end{pmatrix};$$

or

$$P_{SL-PRS}(i) = min \begin{pmatrix} P_{CMAX}, \\ P_{MAX,CBR}, \\ min\left(P_{SL-PRS,D}(i), P_{SL-PRS,SL}(i) + 10log_{10}(A) - 10log_{10}\left(2^{\mu} \cdot M_{RB}^{SL-PRS}(i)\right)\right) \end{pmatrix};$$

or

$$P_{SL-PRS}(i) = min \begin{pmatrix} P_{CMAX}, \\ min\left(P_{SL-PRS,D}(i), P_{SL-PRS,SL}(i)\right) + 10log_{10}(A) - 10log_{10}\left(M_{RB}^{SL-PRS}(i)\right) \end{pmatrix};$$

or

$$P_{SL-PRS}(i) = min \begin{pmatrix} P_{CMAX}, \\ min\left(P_{SL-PRS,D}(i), P_{SL-PRS,SL}(i)\right) + 10log_{10}(A) - 10log_{10}\left(2^{\mu} \cdot M_{RB}^{SL-PRS}(i)\right) \end{pmatrix};$$

or

$$P_{SL-PRS}(i) = min \begin{pmatrix} P_{CMAX}, \\ min\left(P_{SL-PRS,D}(i), P_{SL-PRS,SL}(i) + 10log_{10}(A) - 10log_{10}\left(M_{RB}^{SL-PRS}(i)\right)\right) \end{pmatrix};$$

or

$$P_{SL-PRS}(i) = min \begin{pmatrix} P_{CMAX}, \\ min\left(P_{SL-PRS,D}(i), P_{SL-PRS,SL}(i) + 10log_{10}(A) - 10log_{10}\left(2^{\mu} \cdot M_{RB}^{SL-PRS}(i)\right)\right) \end{pmatrix},$$

wherein

$P_{SL\text{-}PRS,D}(i)$ satisfies:

$$P_{SL-PRS,D}(i) = P_{O,D} + 10log_{10}\left(2^{\mu} \cdot M_{RB}^{SL-PRS}(i)\right) + \alpha_D \cdot PL_D \quad \text{or} \quad P_{SL-PRS,D}(i) = \min\left(P_{CMAX}, P_{MAX,CBR}\right) ;$$

**and**

$P_{SL\text{-}PRS,SL}(i)$ satisfies:

$$P_{SL-PRS,SL}(i) = P_{O,SL} + 10log_{10}\left(2^{\mu} \cdot M_{RB}^{SL-PRS}(i)\right) + \alpha_{SL} \cdot PL_{SL} ;$$

or

$$P_{SL-PRS,SL}(i) = \min\left(P_{CMAX}, P_{SL-PRS,D}(i)\right);$$

or

$$P_{SL-PRS,SL}(i) = \min\left(P_{MAX,CBR}, P_{SL-PRS,D}(i)\right),$$

wherein

$P_{SL\text{-}PRS}(i)$ represents the transmit power for the SL-PRS at the transmission moment $i$, $P_{CMAX}$ represents a maximum transmit power of the first terminal device, $P_{MAX,CBR}$ is a power value associated with a channel busy ratio CBR of a resource pool, $P_{SL\text{-}PRS,D}(i)$ represents a first power parameter of the SL-PRS at the transmission moment $i$, $P_{SL\text{-}PRS,SL}(i)$ represents a second power parameter of the SL-PRS at the transmission moment $i$, $P_{O,D}$ and $\alpha_D$ are power parameters of the SL-PRS, $PL_D$ is a path loss between the first terminal device and a serving cell, $P_{O,SL}$ and $\alpha_{SL}$ are power parameters of the SL-PRS, $PL_{SL}$ is a sidelink path loss between the first terminal device and the second terminal device, and $\mu$ is the subcarrier spacing for sending the SL-PRS by the first terminal device.

11. The method according to claim 9, wherein the transmit power for the SL-PRS satisfies any one of the following conditions:

$$P_{SL-PRS}(i) = min\left(P_{CMAX}, P_{MAX,CBR}, min\left(P_{SL-PRS,D}(i), P_{SL-PRS,SL}(i)\right)\right);$$

or

$$P_{SL-PRS}(i) = min\left(P_{CMAX}, min\left(P_{SL-PRS,D}(i), P_{SL-PRS,SL}(i)\right)\right);$$

or

$$P_{SL-PRS}(i) = min\left(P_{MAX,CBR}, min\left(P_{SL-PRS,D}(i), P_{SL-PRS,SL}(i)\right)\right),$$

wherein

$P_{SL\text{-}PRS,D}(i)$ satisfies:

$$P_{SL-PRS,D}(i) = P_{O,D} + 10log_{10}\left(A\right) + \alpha_D \cdot PL_D;$$

or

$$P_{SL-PRS,D}(i) = P_{O,D} + 10log_{10}\left(2^{\mu} \cdot M_{RB}^{SL-PRS}(i)\right) + \alpha_D \cdot PL_D ;$$

or

$$P_{SL-PRS,D}(i) = P_{O,D} + 10log_{10}\left(M_{RB}^{SL-PRS}(i)\right) + \alpha_D \cdot PL_D ;$$

or

$$P_{SL-PRS,D}(i) = min\left(P_{CMAX}, P_{MAX,CBR}\right);$$

and
$P_{SL-PRS,SL}(i)$ satisfies:

$$P_{SL-PRS,SL}(i) = P_{O,SL} + 10log_{10}\left(A\right) + \alpha_{SL} \cdot PL_{SL} ;$$

or

$$P_{SL-PRS,SL}(i) = P_{O,SL} + 10log_{10}\left(2^{\mu} \cdot M_{RB}^{SL-PRS}(i)\right) + \alpha_{SL} \cdot PL_{SL} ;$$

or

$$P_{SL-PRS,SL}(i) = P_{O,SL} + 10log_{10}\left(M_{RB}^{SL-PRS}(i)\right) + \alpha_{SL} \cdot PL_{SL} ;$$

or

$$P_{SL-PRS,SL}(i) = min\left(P_{CMAX}, P_{SL-PRS,D}\right),$$

wherein
$P_{SL-PRS}(i)$ represents the transmit power for the SL-PRS at the transmission moment $i$, $P_{CMAX}$ represents a maximum transmit power of the first terminal device, $P_{MAX,CBR}$ is a power value associated with a CBR of a resource pool, $P_{SL-PRS,D}(i)$ represents a first power parameter of the SL-PRS at the transmission moment $i$, $P_{SL-PRS,SL}(i)$ represents a second power parameter of the SL-PRS at the transmission moment $i$, $P_{O,D}$ and $\alpha_D$ are power parameters of the SL-PRS, $PL_D$ is a path loss between the first terminal device and a serving cell, $P_{O,SL}$ and $\alpha_{SL}$ are power parameters of the SL-PRS, $PL_{SL}$ is a sidelink path loss between the first terminal device and the second terminal device, and $\mu$ is the subcarrier spacing for sending the SL-PRS by the first terminal device.

12. The method according to any one of claims 1 to 4 and 9 to 11, wherein the method further comprises:
obtaining, by the first terminal device, second configuration information, wherein the second configuration information indicates the first terminal device to determine the first transmit power based on the second message or to determine the first transmit power based on the message with the higher priority in the first message and the second message.

13. The method according to any one of claims 1 to 12, wherein the maximum transmit power $P_{CMAX}$ of the first terminal device is a smaller value of a first maximum transmit power and a second maximum transmit power, the first maximum transmit power is a maximum transmit power determined based on the first message, and the second maximum transmit power is a maximum transmit power determined based on the second message.

14. A communication method, comprising:

determining, by a first terminal device, a first transmit power and a second transmit power, wherein the first transmit power is a power for sending a first message by the first terminal device, and the second transmit power is a power for sending a second message by the first terminal device; and

sending, by the first terminal device, first information when the first transmit power is different from the second transmit power, wherein the first information indicates a transient period, the transient period is a time interval between a time domain resource for sending the first message and a time domain resource for sending the second message, and the time domain resource for sending the first message is located before the time domain resource for sending the second message.

15. The method according to claim 14, wherein the first information indicates at least one of the following:

   duration of the transient period; or
   whether duration of the transient period occupies one symbol.

16. The method according to claim 14 or 15, wherein the method further comprises:
   sending, by the first terminal device, second information, wherein the second information indicates a power difference between the first transmit power and the second transmit power.

17. The method according to claim 16, wherein the second information is carried in sidelink control information SCI or uplink control information UCI.

18. The method according to any one of claims 14 to 17, wherein the first information is carried in sidelink control information SCI or uplink control information UCI.

19. A communication method, comprising:

   receiving, by a second terminal device, first information from a first terminal device, wherein the first information indicates a transient period, the transient period is a time interval between a time domain resource for sending a first message by the first terminal device and a time domain resource for sending a second message by the first terminal device, the time domain resource for the first message is located before the time domain resource for the second message, the first terminal device sends the first message to the second terminal device by using a first transmit power, the first terminal device sends the second message to the second terminal device by using a second transmit power, and the first transmit power is different from the second transmit power; and
   determining, by the second terminal device based on the transient period, a time domain start location for receiving the second message.

20. The method according to claim 19, wherein determining, by the second terminal device based on the transient period, the time domain start location for receiving the second message comprises:
   determining, by the second device, the time domain start location based on the transient period and duration for performing AGC processing by the second device.

21. A communication method, comprising:

   determining, by a second terminal device, third information, wherein the third information indicates duration for performing automatic gain control AGC processing by the second terminal device; and
   sending, by the second terminal device, the third information.

22. The method according to claim 21, wherein the third information is carried in sidelink control information SCI or uplink control information UCI.

23. A communication method, comprising:

   obtaining, by a first device, first information, wherein the first information indicates a transient period of a first terminal device, the transient period is a time interval between a time domain resource for sending a first message by the first terminal device and a time domain resource for sending a second message by the first terminal device, the time domain resource for the first message is located before the time domain resource for the second message, the first terminal device sends the first message to a second terminal device by using a first transmit power, the first terminal device sends the second message to the second terminal device by using a second transmit power, and the first transmit power is different from the second transmit power; and
   determining, by the first device based on the first information, a transmission resource used by the first terminal device to send the second message to the second terminal device.

24. The method according to claim 23, wherein determining, by the first device based on the first information, the transmission resource used by the first terminal device to send the second message to the second terminal device comprises:

determining, by the first device based on the transient period, whether the transmission resource comprises one adjacent symbol after the time domain resource for the first message.

25. The method according to claim 24, wherein

the transient period is less than or equal to a first threshold, and the transmission resource comprises one adjacent symbol after the time domain resource for the first message; or

the transient period is greater than a first threshold, and the transmission resource does not comprise one adjacent symbol after the time domain resource for the first message.

26. The method according to any one of claims 23 to 25, wherein the method further comprises:

receiving, by the first device, third information from the second device, wherein the third information indicates duration for performing automatic gain control AGC processing by the second device; and

determining, by the first device based on the first information, the transmission resource used by the first terminal device to send the second message to the second terminal device comprises:

determining, by the first device, the transmission resource based on the first information and/or the third information.

27. The method according to claim 26, wherein determining, by the first device, the transmission resource based on the first information and/or the third information comprises:

determining, by the first device based on the transient period and/or the duration for performing the AGC processing, a quantity of symbols occupied by the transmission resource; and/or

determining, by the first device, a frequency domain interval of the transmission resource based on the transient period and/or the duration for performing the AGC processing.

28. A communication method, comprising:

determining, by a first terminal device, second information, wherein the second information indicates a power difference between a first transmit power and a second transmit power, the first transmit power is a power for sending a first message by the first terminal device, and the second transmit power is a power for sending a second message by the first terminal device; and

sending, by the first terminal device, the second information.

29. A communication method, comprising:

receiving, by a second terminal device, second information from a first terminal device, wherein the second information indicates a power difference between a first transmit power and a second transmit power, the first transmit power is a power for sending a first message by the first terminal device, and the second transmit power is a power for sending a second message by the first terminal device;

determining, by the second terminal device, a receive power for the second message based on the second information; and

determining, by the second terminal device, a candidate resource for a third message based on the receive power for the second message, wherein the third message is a message to be sent by the second terminal device.

30. The method according to claim 28 or 29, wherein the power difference between the first transmit power and the second transmit power is any one of the following:

a difference between a transmit power for a symbol occupied by the first message and a transmit power for a symbol occupied by the second message; or

a difference between a reference signal received power for the first message on each subcarrier and a reference signal received power for the second message on each subcarrier.

31. A communication method, comprising:

determining, by a first terminal device, a first transmit power, wherein the first transmit power is related to a first path loss and/or a second path loss, the first path loss is a path loss of a first sidelink between the first terminal device and a second terminal device, and the second path loss is a path loss of a second sidelink between the first terminal device and a third terminal device; and

sending, by the first terminal device, a first message to the second terminal device by using the first transmit power, and sending a second message to the third terminal device by using the first transmit power.

32. The method according to claim 31, wherein determining, by the first terminal device, the first transmit power comprises:

determining, by the first terminal device, a second parameter, wherein the second parameter is related to the first path loss and/or the second path loss; and

determining, by the first terminal device, the first transmit power based on the second parameter, wherein the second parameter is determined based on any one of the following:

a larger value of the first path loss and the second path loss;

a smaller value of the first path loss and the second path loss;

a path loss of a sidelink on which a message with a higher priority in the first message and the second message is located;

a larger value of a second power parameter of the first message and a second power parameter of the second message;

a smaller value of a second power parameter of the first message and a second power parameter of the second message;

a second power parameter of a message with a higher priority in the first message and the second message; or

at least three of a first power parameter of the first message, a second power parameter of the first message, a first power parameter of the second message, and a second power parameter of the second message, wherein

the second power parameter of the first message is determined based on the first path loss, and the second power parameter of the second message is determined based on the second path loss.

33. The method according to claim 32, wherein the second parameter B is determined based on any one of the following:

$$min\left(PL_{SL,\,1}, PL_{SL,\,2}\right);$$

$$max\left(PL_{SL,\,1}, PL_{SL,\,2}\right);$$

$$PL_{SL,\,x};$$

$$min\left(P_{1,\,SL}(i), P_{2,\,SL}(i)\right);$$

$$max\left(P_{1,\,SL}(i), P_{2,\,SL}(i)\right);$$

$$P_{x,\,SL}(i);$$

$$min\left(P_{1,\,D}(i), P_{1,\,SL}(i), P_{2,\,D}(i), P_{2,\,SL}(i)\right);$$

$$max\left(min\left(P_{1,\,D}(i), P_{1,\,SL}(i)\right), min\left(P_{2,\,D}(i), P_{2,\,SL}(i)\right)\right);$$

$$max\left(min\left(P_{1,D}(i),P_{2,D}(i)\right),min\left(P_{1,SL}(i),P_{2,SL}(i)\right)\right);$$

$$min\left(P_{1,D}(i),min\left(P_{1,SL}(i),P_{2,SL}(i)\right)\right);$$

$$min\left(P_{1,D}(i),max\left(P_{1,SL}(i),P_{2,SL}(i)\right)\right);$$

and

$$max\left(min\left(P_{1,D}(i),P_{2,D}(i)\right),P_{1,SL}(i)\right),$$

wherein

$max()$ represents taking a maximum value from a plurality of numerals, $min()$ represents taking a minimum value from a plurality of numerals, $PL_{SL,1}$ represents the first path loss, $PL_{SL,2}$ represents the second path loss, and $PL_{SL,x}$ represents the path loss of the sidelink on which the message with the higher priority in the first message and the second message is located, or $PL_{SL,x}$ represents a path loss, indicated by signaling, of a sidelink on which a message used to determine the second parameter in the first message and the second message is located; $P_{1,SL}(i)$ represents the second power parameter of the first message at a transmission moment $i$, $P_{2,SL}(i)$ represents the second power parameter of the second message at the transmission moment i, and $P_{x,SL}(i)$ represents the second power parameter of the message with the higher priority in the first message and the second message at the transmission moment $i$, or $P_{x,SL}(i)$ represents a second power parameter, indicated by signaling, of a message used to determine the second parameter at the transmission moment i in the first message and the second message; and $P_{1,D}(i)$ represents the first power parameter of the first message at the transmission moment $i$, and $P_{2,D}(i)$ represents the first power parameter of the second message at the transmission moment i.

34. The method according to any one of claims 31 to 33, wherein determining, by the first terminal device, the first transmit power comprises:
determining, by the first terminal device, a transmit power for the first message, wherein the transmit power for the first message is related to the second parameter B, and the transmit power for the first message is the first transmit power.

35. The method according to claim 34, wherein the first message is carried on a physical sidelink shared channel PSSCH, the second message is a sidelink positioning reference signal SL-PRS, and determining, by the first terminal device, the transmit power for the first message comprises:

determining, by the first terminal device, the second parameter B; and
determining, by the first terminal device, the transmit power for the first message based on the second parameter, wherein the second parameter B satisfies any one of the following conditions:

$$B = min\left(PL_{SL,PSSCH},PL_{SL,SL-PRS}\right);$$

$$B = max\left(PL_{SL,PSSCH},PL_{SL,SL-PRS}\right);$$

and

$$B = PL_{SL,x},$$

wherein
$max()$ represents taking a maximum value from a plurality of numerals, $min()$ represents taking a minimum value from a plurality of numerals, $PL_{SL,PSSCH}$ represents the first path loss, $PL_{SL,SL-PRS}$ represents the second path loss, and $PL_{SL,x}$ represents the path loss of the sidelink on which the message with the higher priority in the first message and the second message is located, or $PL_{SL,x}$ represents the path loss, indicated by the signaling, of the sidelink on which the message used to determine the second parameter in the first message and the second message is located.

36. The method according to claim 35, wherein a transmit power for the PSSCH satisfies:

$$P_{PSSCH}(i) = min \begin{pmatrix} P_{CMAX}, \\ P_{MAX,CBR}, \\ min \left( P_{PSSCH,D}(i), P_{PSSCH,SL}(i) \right) \end{pmatrix};$$

or

$$P_{PSSCH}(i) = min \begin{pmatrix} P_{CMAX}, \\ min \left( P_{PSSCH,D}(i), P_{PSSCH,SL}(i) \right) \end{pmatrix};$$

or

$$P_{PSSCH}(i) = min \begin{pmatrix} P_{MAX,CBR}, \\ min \left( P_{PSSCH,D}(i), P_{PSSCH,SL}(i) \right) \end{pmatrix};$$

or

$$P_{PSSCH}(i) = min \left( P_{PSSCH,D}(i), P_{PSSCH,SL}(i) \right),$$

wherein

$P_{PSSCH,D}(i)$ satisfies: $P_{PSSCH,D}(i) = P_{O,D} + 10log_{10}\left(2^{\mu} \cdot M_{RB}^{PSSCH}(i)\right) + \alpha_D \cdot PL_D$;

and

$P_{PSCCH,SL}(i)$ satisfies: $P_{PSSCH,SL}(i) = P_{O,SL} + 10log_{10}\left(2^{\mu} \cdot M_{RB}^{PSSCH}(i)\right) + \alpha_{SL} \cdot B$,

wherein
$P_{PSSCH}(i)$ represents the transmit power for the PSSCH at the transmission moment $i$, $P_{CMAX}$ represents a maximum transmit power of the first terminal device, $P_{MAX,CBR}$ is a power value associated with a channel busy ratio CBR of a resource pool, $P_{PSSCH,D}(i)$ represents the first power parameter of the PSSCH at the transmission moment $i$, $P_{PSSCH,SL}(i)$ represents the second power parameter of the PSSCH at the transmission moment $i$, $P_{O,D}$ is a power parameter of the first terminal device and a serving cell, $\alpha_D$ is a power parameter of the first terminal device and the serving cell, $PL_D$ is a downlink path loss between the first terminal device and the serving cell, $P_{O,SL}$ is a power parameter of the first terminal device on a sidelink, $\alpha_{SL}$ is a power parameter of the first terminal device on the sidelink, $\mu$ is a subcarrier spacing for sending the PSCCH by the first terminal device, and $M_{RB}^{PSSCH}(i)$ represents a bandwidth for the PSSCH at the transmission moment i.

37. The method according to claim 34, wherein the first message is carried on a physical sidelink shared channel PSSCH, the second message is a sidelink positioning reference signal SL-PRS, and determining, by the first terminal device, the transmit power for the first message comprises:

   determining, by the first terminal device, the second parameter; and

determining, by the first terminal device, the transmit power for the first message based on the second parameter, wherein the second parameter B satisfies any one of the following conditions:

$$B = min\left(P_{PSSCH,D}(i), min\left(P_{PSSCH,SL}(i), P_{SL-PRS,SL}(i)\right)\right);$$

$$B = min\left(P_{PSSCH,D}(i), max\left(P_{PSSCH,SL}(i), P_{SL-PRS,SL}(i)\right)\right);$$

$$B = min\left(P_{PSSCH,D}(i), P_{x,SL}(i)\right);$$

$$B = min\left(P_{PSSCH,D}(i), P_{PSSCH,SL}(i), P_{SL-PRS,D}(i), P_{SL-PRS,SL}(i)\right);$$

$$B = max\left(min\left(P_{PSSCH,D}(i), P_{PSSCH,SL}(i)\right), min\left(P_{SL-PRS,D}(i), P_{SL-PRS,SL}(i)\right)\right);$$

$$B = max\left(min\left(P_{PSSCH,D}(i), P_{SL-PRS,D}(i)\right), min\left(P_{PSSCH,SL}(i), P_{SL-PRS,SL}(i)\right)\right);$$

and

$$B = max\left(min\left(P_{PSSCH,D}(i), P_{SL-PRS,D}(i)\right), P_{PSSCH,SL}(i)\right),$$

wherein

$max()$ represents taking a maximum value from a plurality of numerals, $min()$ represents taking a minimum value from a plurality of numerals, $P_{PSSCH,D}(i)$ represents the first power parameter of the PSSCH at the transmission moment $i$, $P_{PSSCH,SL}(i)$ represents the second power parameter of the PSSCH at the transmission moment $i$, $P_{SL-PRS,D}(i)$ represents the first power parameter of the SL-PRS at the transmission moment $i$, $P_{SL-PRS,SL}(i)$ represents the second power parameter of the SL-PRS at the transmission moment i, and $P_{x,SL}(i)$ represents the second power parameter of the message with the higher priority in the first message and the second message at the transmission moment i, or $P_{x,SL}(i)$ represents the second power parameter, indicated by the signaling, of the message used to determine the second parameter at the transmission moment i in the first message and the second message; and
$P_{PSSCH,D}(i)$ is determined based on first downlink power parameters, $P_{PSSCH,SL}(i)$ is determined based on first sidelink power parameters, $P_{SL-PRS,D}(i)$ is determined based on second downlink power parameters, $P_{SL-PRS,SL}(i)$ is determined based on second sidelink power parameters, the first sidelink power parameters comprise the first path loss, and the second sidelink power parameters comprise the second path loss.

38. The method according to claim 37, wherein
the first sidelink power parameters comprise:

a first sidelink power parameter $P_{O,SL,PSSCH}$;
a first sidelink power parameter $\alpha_{SL,PSSCH}$; and
the first path loss $PL_{SL,PSSCH}$;
the second sidelink power parameters comprise:

a second sidelink power parameter $P_{O,SL,SL-PRS}$;
a second sidelink power parameter $\alpha_{SL,SL-PRS}$; and
the second path loss $PL_{SL,SL-PRS}$;
the first downlink power parameters comprise:

a power parameter $P_{O,D,PSSCH}$ of the first terminal device and a serving cell;
a power parameter $\alpha_{D,PSSCH}$ of the first terminal device and the serving cell; and

a downlink path loss $PL_D$ between the first terminal device and the serving cell; and
the second downlink power parameters comprise:

a power parameter $P_{O,D,SL\text{-}PRS}$ of the first terminal device and the serving cell;
a power parameter $\alpha_{D,\ SL\text{-}PRS}$ of the first terminal device and the serving cell; and
a downlink path loss $PL_D$ between the first terminal device and the serving cell.

**39.** The method according to claim 37 or 38, wherein a transmit power for the PSSCH satisfies:

$$P_{PSSCH}(i) = min\begin{pmatrix} P_{CMAX}, \\ P_{MAX,CBR}, \\ B \end{pmatrix};$$

or

$$P_{PSSCH}(i) = min\begin{pmatrix} P_{CMAX}, \\ B \end{pmatrix};$$

or

$$P_{PSSCH}(i) = min\begin{pmatrix} P_{MAX,CBR}, \\ B \end{pmatrix};$$

or

$$P_{PSSCH}(i) = min\begin{pmatrix} P_{CMAX}, \\ min\left(P_{MAX,CBR,PSSCH},\ P_{MAX,CBR,SL-PRS}\right), \\ B \end{pmatrix};$$

or

$$P_{PSSCH}(i) = min\begin{pmatrix} min\left(P_{MAX,CBR,PSSCH},\ P_{MAX,CBR,SL-PRS}\right), \\ B \end{pmatrix},$$

wherein
$P_{PSSCH}(i)$ represents the transmit power for the PSSCH at the transmission moment $i$, $P_{CMAX}$ represents a maximum transmit power of the first terminal device, $P_{MAX,CBR}$ is a power value associated with a channel busy ratio CBR of a resource pool, $P_{MAX,CBR,PSSCH}$ represents a power value that is associated with the channel busy ratio CBR of the resource pool and that is obtained based on the PSSCH, and $P_{MAX,CBR,SL\text{-}PRS}$ represents a power value that is associated with the channel busy ratio CBR of the resource pool and that is obtained based on the SL-PRS.

**40.** A communication apparatus, comprising a module or unit configured to perform the method according to any one of claims 1 to 13, comprising a module or unit configured to perform the method according to any one of claims 14 to 18, comprising a module or unit configured to perform the method according to any one of claims 19 to 22, comprising a module or unit configured to perform the method according to any one of claims 23 to 27, comprising a module or unit configured to perform the method according to any one of claims 28 to 30, or comprising a module or unit configured to perform the method according to any one of claims 31 to 39.

**41.** A communication apparatus, comprising:
a processor, configured to execute a computer program stored in a memory, so that the communication apparatus performs the method according to any one of claims 1 to 13, performs the method according to any one of claims 14 to 18, performs the method according to any one of claims 19 to 22, performs the method according to any one of claims 23 to 27, performs the method according to any one of claims 28 to 30, or performs the method according to any one of claims 31 to 39.

42. A chip, comprising a processing circuit, wherein the processing circuit is configured to invoke a program from a memory and run the program, so that a communication device in which the chip is installed performs the method according to any one of claims 1 to 13, performs the method according to any one of claims 14 to 18, performs the method according to any one of claims 19 to 22, performs the method according to any one of claims 23 to 27, performs the method according to any one of claims 28 to 30, or performs the method according to any one of claims 31 to 39.

43. A computer-readable storage medium, wherein the computer-readable storage medium stores a computer program, and when the computer program is run on a computer, the computer is enabled to perform the method according to any one of claims 1 to 13, perform the method according to any one of claims 14 to 18, perform the method according to any one of claims 19 to 22, perform the method according to any one of claims 23 to 27, perform the method according to any one of claims 28 to 30, or perform the method according to any one of claims 31 to 39.

FIG. 1

FIG. 2

200

First terminal device

Second terminal device

S210: Determine a first transmit power, where the first transmit power is related to a first bandwidth and/or a second bandwidth, the first bandwidth is a bandwidth for sending a first message, and the second bandwidth is a bandwidth for sending a second message

S220: Send the first message and the second message by using the first transmit power

FIG. 3

Frequency domain

Bandwidth for the SL-PRS

Bandwidth for the PSCCH

Time domain

Time domain resource for the PSCCH

Time domain resource for the SL-PRS

PSCCH

SL-PRS

FIG. 4

(a)　　　　　(b)　　　　　(c)　　　　　(d)

(e)　　　　　(f)　　　　　(g)

(h)　　　　　(i)　　　　　(j)

FIG. 5

300

| First terminal device | | Second terminal device |

S310: Determine a first transmit power for sending a first message and a second transmit power for sending a second message

S320: Send first information when the first transmit power is different from the second transmit power, where the first information indicates a transient period

S330: Determine a time domain start location for the second message based on the transient period

FIG. 6

Frequency domain

Bandwidth for the SL-PRS

Bandwidth for the PSCCH

Time domain

Time domain resource for the PSCCH

TP

Time domain resource for the SL-PRS

PSCCH

SL-PRS

FIG. 7

400

| First terminal device | | Second terminal device |
|---|---|---|

S410: Determine second information, where the second information indicates a power difference between a first transmit power and a second transmit power

S420: Second information →

S430: Determine a receive power for a second message based on the second information, and determine a candidate resource for a third message based on the receive power for the second message

FIG. 8

500

| First terminal device | | Second terminal device | | Third terminal device |
|---|---|---|---|---|

S510: Determine a first transmit power, where the first transmit power is related to a first path loss and/or a second path loss, the first path loss is a path loss of a first sidelink between the first terminal device and the second terminal device, and the second path loss is a path loss of a second sidelink between the first terminal device and the third terminal device

S520: Send a first message to the second terminal device by using the first transmit power, and send a second message to the third terminal device by using the first transmit power

FIG. 9

FIG. 10

Case 1

AGC | PSCCH | DMRS | | | | | | | | | DMRS | | | GAP

One slot

(a)

Case 2

AGC | PSCCH | DMRS | | | | | | | | | DMRS | | | GAP

One slot

(b)

Frequency domain

Time domain

SL-PRS

PSSCH

100

EP 4 648 331 A1

Apparatus 2000

Transceiver unit 2010

Processing unit 2020

FIG. 11

Apparatus 3000

Processor 3010

Transceiver 3030

Memory 3020

FIG. 12

Chip system 4000

Logic circuit 4010

Input/Output interface 4020

FIG. 13

## INTERNATIONAL SEARCH REPORT

| International application No. |
|---|
| **PCT/CN2023/137446** |

**A.    CLASSIFICATION OF SUBJECT MATTER**

H04L5/00(2006.01)i;  H04W72/40(2023.01)i;  H04W52/00(2009.01)i

According to International Patent Classification (IPC) or to both national classification and IPC

**B.    FIELDS SEARCHED**

Minimum documentation searched (classification system followed by classification symbols)

IPC:  H04L H04W

Documentation searched other than minimum documentation to the extent that such documents are included in the fields searched

Electronic data base consulted during the international search (name of data base and, where practicable, search terms used)

CNTXT, ENTXT, WPABS, DWPI, CNKI, 3GPP: pscch, sl-prs, slprs, sprs, s-prs, 功率, power, 相同, 同样, 相等, 不同, 不等, 不相等, 不一样, same, equal, different, unequal, 差, difference, 转换时间, 转换时长, 转换时段, 过渡时间, 过渡时长, 过渡时段, transient period, 指示, indicate, agc, 自动增益控制, 时长, 符号, period, symbol, sidelink, sl, pc5, 侧链, 旁链, 边链, 侧行链路, 路损, path loss

**C.    DOCUMENTS CONSIDERED TO BE RELEVANT**

| Category* | Citation of document, with indication, where appropriate, of the relevant passages | Relevant to claim No. |
|---|---|---|
| X | US 2022201630 A1 (LG ELECTRONICS INC.) 23 June 2022 (2022-06-23) description, paragraphs 177-199 | 14-15, 18-19, 23-25, 40-43 |
| Y | US 2022201630 A1 (LG ELECTRONICS INC.) 23 June 2022 (2022-06-23) description, paragraphs 177-199 | 16-17, 20, 26-27, 40-43 |
| X | CN 112399544 A (BEIJING SAMSUNG TELECOM R&D CENTER et al.) 23 February 2021 (2021-02-23) description, paragraphs 56-67 and 145 | 28, 40-43 |
| Y | CN 112399544 A (BEIJING SAMSUNG TELECOM R&D CENTER et al.) 23 February 2021 (2021-02-23) description, paragraphs 56-67 and 145 | 16-17, 40-43 |
| A | CN 112399544 A (BEIJING SAMSUNG TELECOM R&D CENTER et al.) 23 February 2021 (2021-02-23) description, paragraphs 56-67 and 145 | 29-39, 40-43 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **18 February 2024** | **23 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/137446** |

**C.    DOCUMENTS CONSIDERED TO BE RELEVANT**

| Category* | Citation of document, with indication, where appropriate, of the relevant passages | Relevant to claim No. |
|---|---|---|
| X | WO 2021017933 A1 (VIVO MOBILE COMMUNICATION CO., LTD.) 04 February 2021 (2021-02-04) <br> description, page 4, lines 6-25 | 21-22, 40-43 |
| Y | WO 2021017933 A1 (VIVO MOBILE COMMUNICATION CO., LTD.) 04 February 2021 (2021-02-04) <br> description, page 4, lines 6-25 | 20, 26-27, 40-43 |
| A | CN 111770470 A (TELECOMMUNICATIONS TECHNOLOGY RESEARCH INSTITUTE CO., LTD.) 13 October 2020 (2020-10-13) <br> description, paragraphs 4-5 | 1-13, 40-43 |
| PA | HUAWEI et al. "R1-2300079, Considerations on SL-PRS design" <br> *3GPP TSG-RAN WG1 Meeting #112*, 03 March 2023 (2023-03-03), <br> section 6 | 1-13 |
| A | 3RD GENERATION PARTNERSHIP PROJECT. "Technical Specification Group Radio Access Network; NR; User Equipment (UE) radio transmission and reception; Part 1: Range 1 Standalone (Release 15)" <br> *3GPP TS 38.101-1 V15.19.0*, 30 September 2022 (2022-09-30), <br> section 6.3 | 1-43 |

Form PCT/ISA/210 (second sheet) (July 2022)

## INTERNATIONAL SEARCH REPORT
### Information on patent family members

International application No.

**PCT/CN2023/137446**

| Patent document cited in search report | | | Publication date (day/month/year) | Patent family member(s) | | | Publication date (day/month/year) |
|---|---|---|---|---|---|---|---|
| US | 2022201630 | A1 | 23 June 2022 | WO | 2020204504 | A1 | 08 October 2020 |
| CN | 112399544 | A | 23 February 2021 | WO | 2021029728 | A1 | 18 February 2021 |
| | | | | KR | 20210020832 | A | 24 February 2021 |
| | | | | EP | 3931984 | A1 | 05 January 2022 |
| | | | | US | 2022183017 | A1 | 09 June 2022 |
| WO | 2021017933 | A1 | 04 February 2021 | CA | 3147853 | A1 | 04 February 2021 |
| | | | | US | 2022149987 | A1 | 12 May 2022 |
| | | | | AU | 2020322869 | A1 | 24 February 2022 |
| | | | | AU | 2020322869 | B2 | 27 April 2023 |
| | | | | JP | 2022542425 | A | 03 October 2022 |
| | | | | MX | 2022001269 | A | 22 February 2022 |
| | | | | KR | 20220028123 | A | 08 March 2022 |
| | | | | BR | 112022001350 | A2 | 22 March 2022 |
| | | | | EP | 3989507 | A1 | 27 April 2022 |
| | | | | EP | 3989507 | A4 | 17 August 2022 |
| | | | | CN | 111800221 | A | 20 October 2020 |
| CN | 111770470 | A | 13 October 2020 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310202894
- CN 202310172248

- CN 202310405637